# EUROPEAN PATENT APPLICATION

(11) **EP 4 729 999 A1**
(43) Date of publication of application: **22.04.2026**
(21) Application number: 24206626.4
(22) Date of filing: 15.10.2024
(51) Int. Cl.: G02B 6/12

(54) **WAVEGUIDE WITH RECESS FOR OPTO-ELECTRONIC DEVICES AND COUPLED WAVEGUIDES AND METHOD FOR PRODUCING THE SAME**

(71) Applicant: Black Semiconductor GmbH, 52068 Aachen (DE)
(72) Inventor: Huyghebaert, Cedric, 52068 Aachen (DE); Arboleda Bolanos, Santiago, 52068 Aachen (DE)
(74) Representative: Herzog IP Patentanwalts GmbH

(57) **Abstract**

An arrangement comprising
a. a first waveguide adapted and arranged for the propagation of electromagnetic waves;
b. at least one element, wherein, in a cross-sectional cut of the arrangement, the first waveguide and the at least one element are arranged to overlap;
wherein
the first waveguide comprises a recess that at least partially faces the at least one element, a depth of the recess is less than a height of the first waveguide,
the depth of the recess and the height of the first waveguide are measured parallel to a further direction, and
the further direction is perpendicular to a first direction.

## Description

### FIELD OF THE INVENTION

The invention relates in general to the field of semiconductor devices and assemblies. A particular aspect of the invention is an arrangement comprising a first waveguide and at least one element, wherein, in a cross-sectional cut of the arrangement, the first waveguide and the at least one element are arranged to overlap, and wherein the first waveguide comprises a recess that faces the element. The invention also pertains to a method for producing an arrangement comprising a first waveguide with a recess and the use of an arrangement comprising a first waveguide with a recess.

### BACKGROUND

In opto-electronic devices, such as photodetectors and modulators, there is typically a coupling between an element (such as a graphene layer) of the opto-electronic device and an electromagnetic wave propagating in a waveguide. This coupling allows said opto-electronic devices to send and/or receive data. The rate at which data can be sent and received is limited by the strength of this coupling. It is often also required to couple electromagnetic waves, propagating in a first waveguide, to a further waveguide. Increasing the strength of this coupling generally requires more energy and/or more complex production methods for the obtaining the opto-electronic devices and the arrangement of the first and further waveguides.

### OBJECTS

An object of the present invention is to at least partially overcome at least one of the disadvantages encountered in the state of the art.

It is a further object of the invention to provide an arrangement that is adapted and arranged for the communication of data using optical signals. Examples of said arrangement include an opto-electronic device (e.g., a photodetector, a modulator) and an arrangement adapted and arranged to couple electromagnetic waves from a first waveguide to a further waveguide. Examples of the communication of data include, sending, receiving, and transmitting data.

It is a further object of the invention to provide an arrangement that allows for a higher bitrate.

It is a further object of the invention to provide an arrangement that allows for an improved responsivity.

It is a further object of the invention to provide an arrangement that has a reduced energy consumption.

It is a further object of the invention to provide an arrangement that has a reduced footprint.

It is a further object of the invention to provide an arrangement that has an increased extinction ratio.

It is a further object of the invention to provide an arrangement that has a reduced insertion loss.

It is a further object of the invention to provide an arrangement that allows for an increased maximum intensity (e.g., increased coupling) in a further waveguide of said arrangement.

It is a further object of the invention to provide an arrangement that reduces cross-talk between a first waveguide and a further waveguide of said arrangement.

It is a further object of the invention to provide an arrangement that allows for an increase in misalignment tolerance between a first waveguide and a further waveguide of said arrangement.

### PREFERRED EMBODIMENTS OF THE INVENTION

A contribution to at least partially fulfilling at least one of the above-mentioned objects is made by any of the embodiments of the invention.

A 1^{st} embodiment of the invention is an arrangement comprising
a. a first waveguide adapted and arranged for the propagation of electromagnetic waves;
b. at least one element, wherein, in a cross-sectional cut of the arrangement, the first waveguide and the at least one element are arranged to overlap.

In a preferred embodiment of the arrangement, the arrangement is adapted and arranged for a coupling between an electromagnetic wave propagating in the first waveguide and the at least one element. This preferred embodiment of the arrangement is a 2^{nd} embodiment of the invention, that preferably depends on the 1^{st} embodiment of the invention.

In a preferred embodiment of the arrangement, at least one or all of the following applies:
a. the first waveguide has a width that is in the range from 0.1 to 2 µm, preferably from 0.45 to 1.6 µm, and further preferably from 0.75 to 1.1 µm;
b. the first waveguide has a height that is in the range from 100 to 800 nm, preferably from 150 to 600 nm, and further preferably from 200 to 400 nm.

This preferred embodiment of the arrangement is a 3^{rd} embodiment of the invention, that preferably depends on any of the 1^{st} to 2^{nd} embodiments of the invention.

In an aspect of the 3^{rd} embodiment, all possible combinations of the features a. and b. are preferred aspects of the embodiment. These combinations are *e.g.,* a; b; a+b.

In a preferred embodiment of the arrangement, at least one or all of the following applies to the first waveguide:
a. comprises less than 10 wt-%, preferably less than 5 wt- %, more preferably less than 3 wt-%, and further preferably less than 3 wt-% of a metal in elemental form, with the wt-% based on a total weight of the first waveguide;
b. comprises less than 10 wt-%, preferably less than 5 wt- %, more preferably less than 3 wt-%, and further preferably less than 3 wt-% of an alloy, with the wt-% based on the total weight of the first waveguide;
c. comprises at least one non-metal element, preferably at least one non-metal element selected from the group consisting of oxygen, nitrogen, arsenic, a combination of at least two thereof;
d. comprises at least one or all of the following: an oxide, a nitride, a niobate, a phosphide, an arsenide, a titanate, a combination of at least two thereof.

This preferred embodiment of the arrangement is a 4^{th} embodiment of the invention, that preferably depends on any of the 1^{st} to 3^{rd} embodiments of the invention.

In an aspect of the 4^{th} embodiment, all possible combinations of the features a. to d. are preferred aspects of the embodiment. These combinations are *e.g.,* a; b; c; d; a+b; a+c; a+d; b+c; b+d; c+d; a+b+c; a+b+d; a+c+d; b+c+d; a+b+c+d. In a preferred aspect of the 4^{th} embodiment, feature c., the first waveguide comprises at least one or all of the following in an amount of at least 50 wt-% (based on a total weight of the first waveguide): an oxide, a nitride, a niobate, a phosphide, an arsenide, a titanate, a combination of at least two thereof. In a preferred aspect of the 4^{th} embodiment, feature c., the first waveguide comprises at least one or all of the following in an amount of at least 75 wt-% (based on a total weight of the first waveguide): an oxide, a nitride, a niobate, a phosphide, an arsenide, a titanate, a combination of at least two thereof. In a preferred aspect of the 4^{th} embodiment, feature c., the first waveguide comprises at least one or all of the following in an amount of at least 90 wt-% (based on a total weight of the first waveguide): an oxide, a nitride, a niobate, a phosphide, an arsenide, a titanate, a combination of at least two thereof.

In a preferred embodiment of the arrangement, the first waveguide is adapted and arranged for the propagation of electromagnetic waves that have wavelengths in the range from 300 nm to 3000 nm, preferably from 800 nm to 2100 nm, and more preferably from 1250 nm to 1650 nm. This preferred embodiment of the arrangement is a 5^{th} embodiment of the invention, that preferably depends on any of the 1^{st} to 4^{th} embodiments of the invention.

In a preferred embodiment of the arrangement, the first waveguide comprises a recess that at least partially faces, preferably faces, the at least one element, wherein
a depth of the recess is less than a height of the first waveguide,
the depth of the recess and the height of the first waveguide are measured parallel to a further direction, and
the further direction is perpendicular to a first direction.

This preferred embodiment of the arrangement is a 6^{th} embodiment of the invention, that preferably depends on any of the 1^{st} to 5^{th} embodiments of the invention.

In the 6^{th} embodiment, the feature "a depth of the recess is less than a height of the first waveguide" should preferably be understood to mean that the recess does not extend through the first waveguide. In a preferred aspect of the 6^{th} embodiment, an interface between the first waveguide and the recess is a non-plasmonic interface.

In a preferred embodiment of the arrangement, a ratio of a width of the recess to a width of the first waveguide is in the range from 0.020 to 0.700, preferably from 0.045 to 0.500, more preferably from 0.070 to 0.350, and further preferably from 0.085 to 0.240, wherein said widths are measured parallel to the first direction. This preferred embodiment of the arrangement is a 7^{th} embodiment of the invention, that preferably depends on the 6^{th} embodiment of the invention.
The ratios in the 7^{th} embodiment are obtained by dividing the width of the recess by the width of the first waveguide.

In a preferred embodiment of the arrangement, a ratio of the depth of the recess to the height of the first waveguide is in the range from 0.05 to 0.58, preferably from 0.13 to 0.46, more preferably from 0.15 to 0.40, and further preferably from 0.20 to 0.35. This preferred embodiment of the arrangement is an 8^{th} embodiment of the invention, that preferably depends on any of the 6^{th} to 7^{th} embodiments of the invention.

In a preferred embodiment of the arrangement, at least one or all of the following applies:
a. a width of the recess is in the range from 20 to 700 nm, preferably from 45 to 500 nm, more preferably from 70 to 350 nm, and further preferably from 85 to 240 nm, with the width measured parallel to the first direction;
b. a depth of the recess is in the range from 20 to 200 nm, preferably from 45 to 160 nm, more preferably from 55 to 140 nm, and further preferably from 70 to 120 nm.

This preferred embodiment of the arrangement is a 9^{th} embodiment of the invention, that preferably depends on any of the 6^{th} to 8^{th} embodiments of the invention.

In an aspect of the 9^{th} embodiment, all possible combinations of the features a. and b. are preferred aspects of the embodiment. These combinations are *e.g.,* a; b; a+b.

In a preferred embodiment of the arrangement, the recess is adapted and arranged (e.g., dimensioned) such that at least one or all of the following applies when an electromagnetic wave propagates in the first waveguide:
a. a first distance is less than a second distance, wherein
   the first distance is measured between a maximum intensity of a transverse electric (TE) mode of the electromagnetic wave propagating in the first waveguide and an interface between the recess and the first waveguide,
   the second distance is measured between the maximum intensity of the TE mode and a centre of the first waveguide;
b. the first distance is less than a third distance, wherein
   the first distance is measured between a maximum intensity of the TE mode of the electromagnetic wave propagating in the first waveguide and the interface between the recess and the first waveguide,
   the third distance is measured between the maximum intensity of the TE mode and a centre of the recess.

This preferred embodiment of the arrangement is a 10^{th} embodiment of the invention, that preferably depends on any of the 6^{th} to 9^{th} embodiments of the invention.

In an aspect of the 10^{th} embodiment, all possible combinations of the features a. and b. are preferred aspects of the embodiment. These combinations are *e.g.,* a; b; a+b. The 10^{th} embodiment should preferably be understood to mean that the recess is adapted and arranged such that there is at least one TE mode that has at least one maximum intensity for which feature a. and/or feature b. applies. In a preferred aspect of the 10^{th} embodiment, the TE mode is at least one or all of the following: a TEO mode, a TE1 mode. In a preferred aspect of the 10^{th} embodiment, the TE mode is selected from the group consisting of a TEO mode, a TE1 mode, or both (i.e., the 10^{th} embodiment applies to both the TEO and the TE1 mode). In the 10^{th} embodiment, the first distance is defined as the shortest distance between the maximum intensity of the TE mode and the interface between the recess and the first waveguide. In the 10^{th} embodiment, the second distance is defined as the shortest distance between the maximum intensity of the TE mode and the centre of the first waveguide. In the 10^{th} embodiment, the third distance is defined as the shortest distance between the maximum intensity of the TE mode and the centre of the recess. Here "shortest distance" should not necessarily be understood to mean a distance that is only measured either parallel to the first direction, the second direction, or the further direction. Rather, the "shortest distance" may have vector components along one or more of the first direction, the second direction, and the further direction.

In a preferred embodiment of the arrangement,
A. the recess extends from X_{R1} to X_{R2}, where X_{R1} and X_{R2} are coordinates measured on the first direction, and
B. the recess is adapted and arranged (e.g., dimensioned) such that when an electromagnetic wave propagates in the first waveguide, the maximum intensity of at least one TE mode of the electromagnetic wave propagating in the first waveguide has an X-coordinate, X_{I-TE}, measured on the first direction, such that X_{I-TE} ≤ X_{R1} and/or X_{R2} ≤ X_{I-TE}.

This preferred embodiment of the arrangement is an 11^{th} embodiment of the invention, that preferably depends on any of the 6^{th} to 10^{th} embodiments of the invention.

In the 11^{th} embodiment, X_{R1} < X_{R2}. In a preferred aspect of the 11^{th} embodiment, the at least one TE mode includes at least one or all of the following: a TEO mode, a TE1 mode. In a preferred aspect of the 11^{th} embodiment, the at least one TE mode is selected from the group consisting of a TEO mode, a TE1 mode. In the 11^{th} embodiment, the optional feature X_{I-TE} ≤ X_{R1} and X_{R2} ≤ X_{I-TE} should be understood to mean that the at least one TE mode has at least two maximum intensities, wherein X_{I-TE} ≤ X_{R1} holds for at least one of these maximum intensities and X_{R2} ≤ X_{I-TE} also holds for at least one of these maximum intensities (however, it should be noted that X_{I-TE} ≤ X_{R1} and X_{R2} ≤ X_{I-TE} do not simultaneously hold for the same maximum intensity). For example, a TE mode has a first maximum intensity and a further maximum intensity, wherein X_{I-TE} ≤ X_{R1} holds for the first maximum intensity and X_{R2} ≤ X_{I-TE} holds for the second maximum intensity.

In a preferred embodiment of the arrangement,
A. the recess extends from Z_{R1} to Z_{R2}, where Z_{R1} and Z_{R2} are coordinates measured on the further direction, and
B. the recess is adapted and arranged (e.g., dimensioned) such that when an electromagnetic wave propagates in the first waveguide, the maximum intensity of at least one TE mode of the electromagnetic wave propagating in the first waveguide has a Z-coordinate, Z_{I-TE}, measured on the further direction, such that Z_{R1} ≤ Z_{I-TE}.

This preferred embodiment of the arrangement is a 12^{th} embodiment of the invention, that preferably depends on any of the 6^{th} to 11^{th} embodiments of the invention.

In the 12^{th} embodiment, Z_{R1} < Z_{R2}. In an optional aspect of the 12^{th} embodiment, Z_{I-TE} is in the range from Z_{R1} to Z_{R2} (e.g., Z_{R1} < Z_{I-TE} ≤ Z_{R2}, Z_{R1} ≤ Z_{I-TE} < Z_{R2}, or Z_{R1} < Z_{I-TE} < Z_{R2}). In a preferred aspect of the 12^{th} embodiment, the at least one TE mode includes at least one or all of the following: a TEO mode, a TE1 mode. In a preferred aspect of the 12^{th} embodiment, the at least one TE mode is selected from the group consisting of a TEO mode, a TE1 mode.

In a preferred embodiment of the arrangement, the recess is adapted and arranged (e.g., dimensioned) such that at least one or all of the following applies when an electromagnetic wave propagates in the first waveguide:
a. a fourth distance is less than a fifth distance, wherein
   the fourth distance is measured between a maximum intensity of a transverse magnetic (TM) mode of the electromagnetic wave propagating in the first waveguide and the interface between the recess and the first waveguide,
   the fifth distance is measured between the maximum intensity of the TM mode and the centre of the first waveguide;
b. the fourth distance is less than a sixth distance, wherein
   the fourth distance is measured between the maximum intensity of the TM mode of the electromagnetic wave propagating in the first waveguide and the interface between the recess and the first waveguide,
   the sixth distance is measured between the maximum intensity of the TM mode and the centre of the recess.

This preferred embodiment of the arrangement is a 13^{th} embodiment of the invention, that preferably depends on any of the 6^{th} to 12^{th} embodiments of the invention.

In an aspect of the 13^{th} embodiment, all possible combinations of the features a. and b. are preferred aspects of the embodiment. These combinations are e.g., a; b; a+b. The 13^{th} embodiment should preferably be understood to mean that the recess is adapted and arranged such that there is at least one TM mode that has at least one maximum intensity for which feature a. and/or feature b. applies. In a preferred aspect of the 13^{th} embodiment, the TM mode is at least one or all of the following: a TMO mode, a TM1 mode. In a preferred aspect of the 13^{th} embodiment, the TM mode is selected from the group consisting of a TMO mode, a TM1 mode, or both (i.e., the 13^{th} embodiment applies to both the TMO and the TM1 mode). In the 13^{th} embodiment, the fourth distance is defined as the shortest distance between the maximum intensity of the TM mode and the interface between the recess and the first waveguide. In the 13^{th} embodiment, the fifth distance is defined as the shortest distance between the maximum intensity of the TM mode and the centre of the first waveguide. In the 13^{th} embodiment, the sixth distance is defined as the shortest distance between the maximum intensity of the TM mode and the centre of the recess. Here "shortest distance" should not necessarily be understood to mean a distance that is only measured either parallel to the first direction, the second direction, or the further direction. Rather, the "shortest distance" may have vector components along one or more of the first direction, the second direction, and the further direction.

In a preferred embodiment of the arrangement,
A. the recess extends from X_{R1} to X_{R2}, where X_{R1} and X_{R2} are coordinates measured on the first direction, and
B. the recess is adapted and arranged (e.g., dimensioned) such that when an electromagnetic wave propagates in the first waveguide, the maximum intensity of at least one TM mode of the electromagnetic wave propagating in the first waveguide has an X-coordinate, X_{I-TM}, measured on the first direction, such that X_{I-TM} ≤ X_{R1} and/or X_{R2} ≤ X_{I-TM}.

This preferred embodiment of the arrangement is a 14^{th} embodiment of the invention, that preferably depends on any of the 6^{th} to 13^{th} embodiments of the invention.

In the 14^{th} embodiment, X_{R1} < X_{R2}. In a preferred aspect of the 14^{th} embodiment, the at least one TM mode includes at least one or all of the following: a TMO mode, a TM1 mode. In a preferred aspect of the 14^{th} embodiment, the at least one TM mode is selected from the group consisting of a TMO mode, a TM1 mode. In the 14^{th} embodiment, the optional feature X_{I-TM} ≤ X_{R1} and X_{R2} ≤ X_{I-TM} should be understood to mean that the at least one TM mode has at least two maximum intensities, wherein X_{I-TM} ≤ X_{R1} holds for at least one of these maximum intensities and X_{R2} ≤ X_{I-TM} also holds for at least one of these maximum intensities (however, it should be noted that X_{I-TM} ≤ X_{R1} and X_{R2} ≤ X_{I-TM} do not simultaneously hold for the same maximum intensity). For example, a TM mode has a first maximum intensity and a further maximum intensity, wherein X_{I-TM} ≤ X_{R1} holds for the first maximum intensity and X_{R2} ≤ X_{I-TM} holds for the second maximum intensity.

In a preferred embodiment of the arrangement,
A. the recess extends from Z_{R1} to Z_{R2}, where Z_{R1} and Z_{R2} are coordinates measured on the further direction, and
B. the recess is adapted and arranged (e.g., dimensioned) such that when an electromagnetic wave propagates in the first waveguide, the maximum intensity of at least one TM mode of the electromagnetic wave propagating in the first waveguide has a Z-coordinate, Z_{I-TM}, measured on the further direction, such that Z_{R1} ≤ Z_{I-TM}.

This preferred embodiment of the arrangement is a 15^{th} embodiment of the invention, that preferably depends on any of the 6^{th} to 14^{th} embodiments of the invention.

In the 15^{th} embodiment, Z_{R1} < Z_{R2}. In an optional aspect of the 15^{th} embodiment, Z_{I-TM} is in the range from Z_{R1} to Z_{R2} (e.g., Z_{R1} < Z_{I-TM} ≤ Z_{R2}, Z_{R1} ≤ Z_{I-TM} < Z_{R2}, or Z_{R1} < Z_{I-TM} < Z_{R2}). In a preferred aspect of the 15^{th} embodiment, the at least one TM mode includes at least one or all of the following: a TMO mode, a TM1 mode. In a preferred aspect of the 15^{th} embodiment, the at least one TM mode is selected from the group consisting of a TMO mode, a TM1 mode.

In a preferred embodiment of the arrangement, the first waveguide has a first refractive index n₁, the recess has a further refractive index n_{f}, and wherein the recess is adapted and arranged (e.g., dimensioned) such that one of the following applies when an electromagnetic wave propagates in the first waveguide:
a. n₁ < n_{f} and G₁ ≤ n₁, where G₁ is a group index of a mode propagating in the first waveguide;
b. n₁ > n_{f} and n_{f} ≤ G₁ ≤ n₁, where G₁ is the group index of the mode propagating in the first waveguide.

This preferred embodiment of the arrangement is a 16^{th} embodiment of the invention, that preferably depends on any of the 6^{th} to 15^{th} embodiments of the invention.

In a preferred aspect of the 16^{th} embodiment, feature b., either of the following applies: n_{f} ≤ G₁ < n₁ or n_{f} < G₁ ≤ n₁. The 16^{th} embodiment should preferably be understood to mean that the recess is adapted and arranged such that there is at least one mode for which feature a. or feature b. applies. In a preferred aspect of the 16^{th} embodiment, the mode is at least one or all of the following: a TE mode, a TM mode, with a TE mode more preferred than a TM mode. In this aspect, it is preferred that the mode is at least one or all of the following: a TEO mode, a TE1 mode, a TMO mode, and a TM1 mode. In this aspect, it is preferred that the mode is at least one or all of the following: a TEO mode, a TE1 mode. In this aspect, it is preferred that the mode is selected from the group consisting of the following: a TEO mode, a TE1 mode, a TMO mode, and a TM1 mode, at least two thereof. In this aspect, it is preferred that the mode is selected from the group consisting of the following: a TEO mode, a TE1 mode, or both (i.e., the 16^{th} embodiment applies to both the TEO and the TE1 mode).

In a preferred embodiment of the arrangement, the first waveguide has a first refractive index n₁, the recess has a further refractive index n_{f}, and at least one or all of the following applies:
a. n₁ and n_{f} vary by 12 % or less, preferably by 10 % or less, more preferably by 7 % or less, and further preferably by 5 % or less;
b. a difference between n₁ and n_{f} is 0.5 or less, preferably 0.3 or less, more preferably 0.2 or less, and further preferably 0.1 or less.

This preferred embodiment of the arrangement is a 17^{th} embodiment of the invention, that preferably depends on any of the 6^{th} to 16^{th} embodiments of the invention.

In an aspect of the 17^{th} embodiment, all possible combinations of the features a. and b. are preferred aspects of the embodiment. These combinations are e.g., a; b; a+b. In the 17^{th} embodiment, feature a., the variation between n₁ and n_{f} is determined as follows: |n₁ - n_{f}| / n₁ × 100 %. In a preferred aspect of the 17^{th} embodiment, feature a., n₁ and n_{f} vary by a value that is in the range from 1 to 12 %, more preferably from 2 to 10 %, and further preferably from 3 to 7 %. In the 17^{th} embodiment, feature b., the difference between n₁ and n_{f} is determined as follows: |n₁ - n_{f}|. In a preferred aspect of the 17^{th} embodiment, feature b., the difference between n₁ and n_{f} is at least 0.01, more preferably at least 0.02, and further preferably at least 0.05. In a preferred aspect of the 17^{th} embodiment, feature b., the difference between n₁ and n_{f} is in the range from 0.01 to 0.5, more preferably from 0.02 to 0.3 and further preferably from 0.05 to 0.2.

In a preferred embodiment of the arrangement, at least one or all of the following applies:
a. the recess extends along at least 50 %, preferably at least 75 %, more preferably at least 85 %, and further preferably at least 95 % of a length of the first waveguide;
b. a length of the recess varies by less than 20 %, preferably by less than 15 %, more preferably by less than 10 %, and further preferably by less than 5 % from the length of the at least one element.

This preferred embodiment of the arrangement is an 18^{th} embodiment of the invention, that preferably depends on any of the 6^{th} to 17^{th} embodiments of the invention.

In an aspect of the 18^{th} embodiment, all possible combinations of the features a. and b. are preferred aspects of the embodiment. These combinations are e.g., a; b; a+b.

In a preferred embodiment of the arrangement, the centre of the recess has coordinates (X_{C1}, Z_{C1}) and the centre of the first waveguide has coordinates (X_{C2}, Z_{C2}), with X being a coordinate along the first direction and Z being a coordinate along the further direction, and wherein the distance |X_{C1} - X_{C2}| is 300 nm or less, preferably 250 nm or less, and further preferably 200 nm or less. This preferred embodiment of the arrangement is a 19^{th} embodiment of the invention, that preferably depends on any of the 6^{th} to 18^{th} embodiments of the invention.

In a preferred embodiment of the arrangement, in a cross-sectional cut of the first waveguide made perpendicular to a length of the first waveguide, a shape of the recess is selected from the group consisting of a square, a rectangle, a triangle, a half-ellipse, a half-circle, a polygon, a trapezoid, a combination of at least two thereof. This preferred embodiment of the arrangement is a 20^{th} embodiment of the invention, that preferably depends on any of the 6^{th} to 19^{th} embodiments of the invention.

In a preferred embodiment of the arrangement, the at least one element is at least one electrically conductive element, wherein the at least one electrically conductive element is preferably adapted and arranged to be electrically charged and/or discharged. This preferred embodiment of the arrangement is a 21 ^{st} embodiment of the invention, that preferably depends on any of the 1 ^{st} to 20^{th} embodiments of the invention.

In a preferred embodiment of the arrangement, an average distance between the first waveguide and the at least one electrically conductive element is 1 µm or less, preferably 500 nm or less, more preferably 100 nm or less, even more preferably 50 nm or less, further preferably 30 nm or less, and even further preferably 15 nm or less. This preferred embodiment of the arrangement is a 22^{nd} embodiment of the invention, that preferably depends on the 21^{st} embodiment of the invention.

In a preferred aspect of the 22^{nd} embodiment, the average distance between the first waveguide and the at least one electrically conductive element is in the range from 0 to 15 nm, more preferably from 5 to 10 nm. In a preferred aspect of the 22^{nd} embodiment, the average distance between the first waveguide and the at least one electrically conductive element is measured parallel to the further direction. In the 22^{nd} embodiment of the invention, if the arrangement comprises multiple electrically conductive elements, the average distance is determined by measuring the distance between each of the electrically conductive elements and the first waveguide and calculating the average from these measurements.

In a preferred embodiment of the arrangement, the arrangement is adapted and arranged for modifying at least one property of electromagnetic waves propagating in the first waveguide, more preferably the at least one element is adapted and arranged for at least partially absorbing electromagnetic waves propagating in the first waveguide. This preferred embodiment of the arrangement is a 23^{rd} embodiment of the invention, that preferably depends on any of the 21^{st} to 22^{nd} embodiments of the invention.

In a preferred embodiment of the arrangement, the at least one electrically conductive element has at least one or all of the following properties:
a. comprises at least one or all of the following: carbon, preferably graphene, a nitride, at least one metal, at least one metal alloy, at least one conductive oxide, at least one conductive polymer, at least one chalcogen, a combination of at least two or more thereof;
b. has in the range from 1 to 100, preferably from 1 to 50, and more preferably from 1 to 20 atomic layers.

This preferred embodiment of the arrangement is a 24^{th} embodiment of the invention, that preferably depends on any of the 21^{st} to 23^{rd} embodiments of the invention.

In an aspect of the 24^{th} embodiment, all possible combinations of the features a. and b. are preferred aspects of the embodiment. These combinations are *e.g.,* a; b; a+b. In a preferred aspect of the 24^{th} embodiment, feature b., the at least one electrically conductive element has in the range from 1 to 10, preferably from 1 to 6, and more preferably from 1 to 3 atomic layers.

In a preferred embodiment of the arrangement, the at least one electrically conductive element has at least one or all of the following properties:
a. a width in the range from 10 nm to 40 mm, preferably from 100 nm to 20 mm, and further preferably from 500 nm to 1 mm;
b. a length in the range from 100 nm to 400 mm, preferably from 500 nm to 250 mm, and more preferably from 10 mm to 100 mm;
c. a thickness in the range from 0.1 to 100 nm, preferably from 0.2 to 50 nm, and more preferably from 0.3 to 10 nm.

This preferred embodiment of the arrangement is a 25^{th} embodiment of the invention, that preferably depends on any of the 21^{st} to 24^{th} embodiments of the invention.

In an aspect of the 25^{th} embodiment, all possible combinations of the features a. to c. are preferred aspects of the embodiment. These combinations are *e.g.,* a; b; c; a+b; a+c; b+c; a+b+c. In a preferred aspect of the 25^{th} embodiment, feature c., the at least one electrically conductive element has a thickness in the range from 0.1 to 1 nm, preferably from 0.2 to 0.7 nm, and further preferably from 0.3 to 0.45 nm.

In a preferred embodiment of the arrangement, the at least one electrically conductive element has at least one or all of the following properties:
a. an electrical conductivity of at least 10⁴ S/m, preferably at least 10⁵ S/m, and further preferably at least 10⁶ S/m,
b. comprise graphene;
c. is adapted and arranged to have an optical attenuation coefficient in the range from 2 × 10⁻⁴ to 0.6 dB/µm, preferably from 2 × 10⁻² to 0.40 dB/µm, and more preferably from 0.15 to 0.25 dB/µm;
d. is adapted and arranged to have a variable optical attenuation coefficient.

This preferred embodiment of the arrangement is a 26^{th} embodiment of the invention, that preferably depends on any of the 21^{st} to 25^{th} embodiments of the invention.

In an aspect of the 26^{th} embodiment, all possible combinations of the features a. to d. are preferred aspects of the embodiment. These combinations are *e.g.,* a; b; c; d; a+b; a+c; a+d; b+c; b+d; c+d; a+b+c; a+b+d; a+c+d; b+c+d; a+b+c+d.

In a preferred embodiment of the arrangement, the at least one electrically conductive element is arranged as a layer. This preferred embodiment of the arrangement is a 27^{th} embodiment of the invention, that preferably depends on any of the 21^{st} to 26^{th} embodiments of the invention.

In a preferred embodiment of the arrangement, the first waveguide is adapted and arranged to be in opto-electronic interaction with the at least one electrically conductive element. This preferred embodiment of the arrangement is a 28^{th} embodiment of the invention, that preferably depends on any of the 21 ^{st} to 27^{th} embodiments of the invention.

In a preferred embodiment of the arrangement, the arrangement is an opto-electronic device, preferably an opto-electronic device selected from the group consisting of a photodetector; a modulator; a detector adapted and arranged for the detection of viruses, antibodies, biomarkers, biomolecules, or a combination of at least two thereof. This preferred embodiment of the arrangement is a 29^{th} embodiment of the invention, that preferably depends on any of the 1^{st} to 28^{th} embodiments of the invention.

In the 29^{th} embodiment a modulator and a photodetector are particularly preferred, with a photodetector more preferred than a modulator.

In a preferred embodiment of the arrangement, the at least one element is at least one further waveguide. This preferred embodiment of the arrangement is a 30^{th} embodiment of the invention, that preferably depends on any of the 1^{st} to 20^{th} embodiments of the invention.

In a preferred embodiment of the arrangement, a distance between the first waveguide and the at least one further waveguide is 2 µm or less, preferably 1.5 µm or less, more preferably 1.0 µm or less, and further preferably 0.5 µm or less. This preferred embodiment of the arrangement is a 31^{st} embodiment of the invention, that preferably depends on the 30^{th} embodiment of the invention.

In a preferred aspect of the 31^{st} embodiment, the distance between the first waveguide and the at least one further waveguide is in the range from 0 to 2 µm, more preferably from 0 to 1.5 µm, even more preferably from 0 to 1.0 µm, and further preferably from 0 to 0.5 µm. In a preferred aspect of the 31^{st} embodiment, the distance between the first waveguide and the at least one further waveguide is measured parallel to the further direction. In the 31^{st} embodiment, if the arrangement has more than one further waveguide, the distance is measured between the first waveguide and the further waveguide closest to the first waveguide.

In a preferred embodiment of the arrangement, the at least one further waveguide comprises a further recess that faces the first waveguide. This preferred embodiment of the arrangement is a 32^{nd} embodiment of the invention, that preferably depends on any of the 30^{th} to 31^{st} embodiments of the invention.

In a preferred aspect of the 32^{nd} embodiment, the 6^{th} to 20^{th} preferred embodiments (and their preferred aspects) are, mutatis mutandis, also preferred embodiments (and preferred aspects) of the at least one further waveguide and/or the further recess. For example, a ratio of the depth of the further recess to the height of the further waveguide is preferably in the range from 0.05 to 0.58, more preferably from 0.13 to 0.46, even more preferably from 0.15 to 0.40, and further preferably from 0.20 to 0.35.

In a preferred embodiment of the arrangement, the first waveguide has a first refractive index n₁, the at least one further waveguide has a third refractive index n₃, and wherein n₁ and n₃ vary by 10 % or less, preferably by 7 % or less, more preferably by 5 % or less, and further preferably by 3 % or less. This preferred embodiment of the arrangement is a 33^{rd} embodiment of the invention, that preferably depends on any of the 30^{th} to 32^{nd} embodiments of the invention.

In the 33^{rd} embodiment, the variation between n₁ and n₃ is determined as follows: |n₁ - n₃| / n₁ × 100 %.

In a preferred embodiment of the arrangement, the arrangement further comprises a layer of a first kind, wherein, in a cross-sectional cut of the arrangement, the at least one element is arranged between the first waveguide and the layer of the first kind, wherein
i. the first waveguide has a first refractive index n₁,
ii. the layer of the first kind has a second refractive index n₂, and
wherein n₁ and n₂ vary by 30 % or less, preferably by 27 % or less, more preferably by 25 % or less, and further preferably by 23 % or less.

This preferred embodiment of the arrangement is a 34^{th} embodiment of the invention, that preferably depends on any of the 1^{st} to 33^{rd} embodiments of the invention.

In the 34^{th} embodiment, if the arrangement comprises multiple elements, it is preferred that, in a cross-sectional cut of the arrangement, the multiple elements are arranged between the first waveguide and the layer of the first kind. In a preferred aspect of the 34^{th} embodiment, a distance between the at least one element and the layer of the first kind is 30 nm or less, more preferably 20 nm or less, and further preferably 10 nm or less, where said distance is measured parallel to the further direction. In this aspect, if the arrangement comprises multiple elements, the aforementioned distance is measured between the layer of the first kind and the element closest to the layer of the first kind. In a preferred aspect of the 34^{th} embodiment, the at least one element and the layer of the first kind touch. In this aspect, if the arrangement comprises multiple elements, it is preferred that at least one element, of said multiple elements, and the layer of the first kind touch. In the 34^{th} embodiment, the variation between n₁ and n₂ is determined as follows: |n₁ - n₂| / n₁ × 100 %. In a preferred aspect of the 34^{th} embodiment, n₁ and n₂ vary by 15 % or less, more preferably by 10 % or less, even more preferably by 7 % or less, further preferably by 5 % or less, and even further preferably by 3 % or less. In a preferred aspect of the 34^{th} embodiment, n₁ and n₂ vary by a value that is in the range from 0 to 2 %. In a preferred aspect of the 34^{th} embodiment, the at least one element is an electrically conductive element, wherein the at least one electrically conductive element preferably has one of more properties as given in any of the 21^{st} to 29^{th} embodiments of the invention. In a preferred aspect of the 34^{th} embodiment, a thickness of the layer of the first kind is equal to or less than a height of the first waveguide.

In a preferred embodiment of the arrangement,
i. the first waveguide comprises a recess that faces the at least one element,
ii. a depth of the recess is less than a height of the first waveguide,
iii. the depth of the recess and the height of the first waveguide are measured parallel to a further direction,
iv. the further direction is perpendicular to a first direction, and
v. the recess has a further refractive index n_{f},
wherein
I. n₂ < n₁ and preferably n₂ < n_{f}, and
II. wherein the recess is adapted and arranged (e.g., dimensioned) such that one of the following applies when an electromagnetic wave propagates in the first waveguide:
   a. n₁ < n_{f}, and a group index G₁ of a mode is such that n₂ < G₁ < n₁; or
   b. n₁ > n_{f}, and the group index G₁ of the mode is such that n₂ = *x*G₁, where *x* is in the range from 1 to 2, preferably from 1.1 to 1.8, and further preferably from 1.2 and 1.6.

This preferred embodiment of the arrangement is a 35^{th} embodiment of the invention, that preferably depends on the 34^{th} embodiment of the invention.

The 35^{th} embodiment should preferably be understood to mean that the recess is adapted and arranged such that there is at least one mode for which feature II.a. or feature II.b. applies. In a preferred aspect of the 35^{th} embodiment, the mode is at least one or all of the following: a TE mode, a TM mode, with a TE mode more preferred than a TM mode. In this aspect, it is preferred that the mode is at least one or all of the following: a TEO mode, a TE1 mode, a TMO mode, and a TM1 mode. In this aspect, it is preferred that the mode is at least one or all of the following: a TEO mode, a TE1 mode. In this aspect, it is preferred that the mode is selected from the group consisting of the following: a TEO mode, a TE1 mode, a TMO mode, and a TM1 mode, at least two thereof. In this aspect, it is preferred that the mode is selected from the group consisting of the following: a TEO mode, a TE1 mode, or both (i.e., the 35^{th} embodiment applies to both the TEO and the TE1 mode). In a preferred aspect of the 35^{th} embodiment, feature II.b., either of the following applies: n_{f} ≤ G₁ < n₁ or n_{f} < G₁ ≤ n₁.

In a preferred embodiment of the arrangement, the layer of the first kind has a thickness that is in the range from 1 to 60 nm, preferably from 5 to 55 nm, more preferably from 10 to 45 nm, and further preferably from 15 to 40 nm. This preferred embodiment of the arrangement is a 36^{th} embodiment of the invention, that preferably depends on any of the 34^{th} to 35^{th} embodiments of the invention.

In an alternatively preferred embodiment to the 36^{th} embodiment, the thickness of the layer of the first kind is in the range from 1 to 300 nm, preferably from 2 to 250 nm, more preferably from 5 to 200 nm, and further preferably from 8 to 150 nm.

In a preferred embodiment of the arrangement, the layer of the first kind comprises at least one oxide, at least one nitride, or both. This preferred embodiment of the arrangement is a 37^{th} embodiment of the invention, that preferably depends on any of the 34^{th} to 36^{th} embodiments of the invention.

In a preferred aspect of the 37^{th} embodiment, the layer of the first kind comprises at least one or all of the following: aluminium oxide, aluminium nitride, silicon nitride, boron nitride (preferably hexagonal boron nitride), a combination of at least two thereof.

In a preferred embodiment of the arrangement, the arrangement further comprises a layer of a second kind superimposed on the layer of the first kind, wherein, in a cross-sectional cut of the arrangement, the layer of the first kind is arranged between the at least one element and the layer of the second kind, and wherein the layer of the first kind and the layer of the second kind preferably touch. This preferred embodiment of the arrangement is a 38^{th} embodiment of the invention, that preferably depends on any of the 34^{th} to 37^{th} embodiments of the invention.

In a preferred aspect of the 38^{th} embodiment, a total thickness of the layer of the first kind and the layer of the second kind is in the range from 30 to 300 nm, more preferably from 40 to 250 nm, even more preferably from 50 to 200 nm, and further preferably from 60 to 150 nm.

In a preferred embodiment of the arrangement, at least one or all of the following applies:
a. a thickness of the layer of the first kind is less than a thickness of the layer of the second kind;
b. a total thickness of the layer of the first kind and the layer of the second kind is less than a height of the first waveguide;
c. a refractive index of the layer of the first kind is less than a refractive index of the layer of the second kind.

This preferred embodiment of the arrangement is a 39^{th} embodiment of the invention, that preferably depends on the 38^{th} embodiments of the invention.

In an aspect of the 39^{th} embodiment, all possible combinations of the features a. to c. are preferred aspects of the embodiment. These combinations are *e.g.,* a; b; c; a+b; a+c; b+c; a+b+c.

In a preferred embodiment of the arrangement, at least one or all of the following applies:
a. the layer of the first kind comprises at least one oxide, e.g., aluminium oxide;
b. the layer of the second kind comprises at least one nitride, e.g., silicon nitride, aluminium nitride. This preferred embodiment of the arrangement is a 40^{th} embodiment of the invention, that preferably depends on any of the 38^{th} to 39^{th} embodiments of the invention.

In an aspect of the 40^{th} embodiment, all possible combinations of the features a. and b. are preferred aspects of the embodiment. These combinations are *e.g.,* a; b; a+b. In a preferred aspect of the invention, the layer of the first kind comprises, more preferably consists of, at least one or all of the following: aluminium oxide, silicon nitride.

In a preferred embodiment of the arrangement, at least one or all of the following applies:
a. the layer of the first kind has a thickness in the range from 1 to 60 nm, preferably from 5 to 55 nm, more preferably from 10 to 45 nm, and further preferably from 15 to 40 nm;
b. the layer of the second kind has a thickness in the range from 50 to 250 nm, preferably from 60 to 200 nm, more preferably from 70 to 150 nm, and further preferably from 80 to 100 nm.

This preferred embodiment of the arrangement is a 41^{st} embodiment of the invention, that preferably depends on any of the 38^{th} to 40^{th} embodiments of the invention.

In an aspect of the 41^{st} embodiment, all possible combinations of the features a. and b. are preferred aspects of the embodiment. These combinations are *e.g.,* a; b; a+b.

In a preferred embodiment of the arrangement, the first waveguide has a width that is in the range from 500 to 1000 nm, preferably from 600 to 900 nm, and further preferably from 700 to 800 nm. This preferred embodiment of the arrangement is a 42^{nd} embodiment of the invention, that preferably depends on any of the 34^{th} to 41^{st} embodiments of the invention.

In a particularly preferred aspect of the 42^{nd} embodiment, the at least one element is an electrically conductive element.

A 43^{rd} embodiment of the invention is an electronic device comprising an arrangement according to the invention, preferably an arrangement according to any of the 1^{st} to 42^{nd} embodiments of the invention.

In a preferred embodiment of the electronic device, the arrangement is adapted and arranged for at least one or all of the following:
a. transferring data between a first part of an integrated circuit of the electronic device and a further part of said integrated circuit;
b. transferring data between a first integrated circuit of the electronic device and a further integrated circuit, wherein the further integrated circuit can be in the same electronic device as the first integrated circuit, or in a different electronic device, preferably the same electronic device;
c. to inject an optical vector in an optical network and/or to read out an optical vector from an optical network.

This preferred embodiment of the electronic device is a 44^{th} embodiment of the invention, that preferably depends on the 43^{rd} embodiment of the invention.

In a preferred embodiment of the electronic device, the electronic device is selected from the group consisting of a sensor, a chip, a computer, a combination of at least two thereof. This preferred embodiment of the electronic device is a 45^{th} embodiment of the invention, that preferably depends on any of the 43^{rd} to 44^{th} embodiments of the invention.

A 46^{th} embodiment of the invention is a method for producing an arrangement, preferably an arrangement according to any of the 1^{st} to 42^{nd} embodiments of the invention, wherein the method comprises the step of superimposing at least one element and a first waveguide onto each other.

In a preferred embodiment of the method for producing an arrangement, the at least one element is superimposed on the first waveguide using at least one or all of the following:
a. chemical vapour deposition;
b. physical vapour deposition;
c. exfoliation;
d. transferring the at least one element (e.g., an electrically conductive element) from a further substrate;
e. spin coating.

This preferred embodiment of the method is a 47^{th} embodiment of the invention, that preferably depends on the 46^{th} embodiment of the invention.

In a preferred embodiment of the method for producing an arrangement, prior to superimposing the at least one element and the first waveguide onto each other, the method further comprises the following steps:
a. superimposing a first waveguide layer, preferably on a substrate;
b. removing at least one section of the first waveguide layer to obtain the first waveguide.

This preferred embodiment of the method is a 48^{th} embodiment of the invention, that preferably depends on any of the 46^{th} to 47^{th} embodiments of the invention.

In a preferred embodiment of the method for producing an arrangement, the first waveguide comprises a recess, and wherein the at least one element and the first waveguide are superimposed onto each other such that the recess faces the at least one element. This preferred embodiment of the method is a 49^{th} embodiment of the invention, that preferably depends on any of the 46^{th} to 48^{th} embodiments of the invention.

In a preferred embodiment of the method for producing an arrangement, the method further comprises a step of providing the first waveguide, wherein said step comprises the following sub-steps:
a. superimposing a first waveguide layer, preferably on a substrate;
b. either
   i. removing at least one section of the first waveguide layer to obtain the first waveguide;
   ii. removing a section of the first waveguide to form a recess in the first waveguide;
   or
   i. removing a section of the first waveguide layer to form a recess in the first waveguide layer;
   ii. removing at least one section of the first waveguide layer to obtain the first waveguide.

This preferred embodiment of the method is a 50^{th} embodiment of the invention, that preferably depends on the 49^{th} embodiment of the invention.

In a preferred embodiment of the method for producing an arrangement, the method further comprises a step of providing the first waveguide, wherein said step comprises the following sub-steps:
a. superimposing a layer of a further kind;
b. reducing a thickness of at least one section of the layer of the further kind such that a projection is formed from the layer of the further kind;
c. superimposing a first waveguide layer on the projection, thereby forming said first waveguide layer with the recess;
d. removing at least one section of the first waveguide layer to obtain the first waveguide.

This preferred embodiment of the method is a 51^{st} embodiment of the invention, that preferably depends on the 49^{th} embodiment of the invention.

In a preferred embodiment of the method for producing an arrangement, the method further comprises one of the following steps:
a. superimposing a layer of the first kind and the at least one element onto each other, after the first waveguide and the at least one element have been superimposed onto each other;
b. superimposing the layer of the first kind and the at least one element onto each other, prior to superimposing the first waveguide and the at least one element onto each other.

This preferred embodiment of the method is a 52^{nd} embodiment of the invention, that preferably depends on any of the 46^{th} to 51^{st} embodiments of the invention.

A 53^{rd} embodiment of the invention is an arrangement obtainable by a method, according to the invention, for producing an arrangement, preferably the method according to any of the 46^{th} to 52^{nd} embodiments of the invention.

A 54^{th} embodiment of the invention is a use of a recess in a first waveguide to increase a coupling between an electromagnetic wave propagating in the first waveguide and an element arranged at a distance of 1 µm or less, preferably 500 nm or less, more preferably 100 nm or less, even more preferably 50 nm or less, further preferably 30 nm or less, and even further preferably 15 nm or less, from the first waveguide.

In one preferred aspect of the 54^{th} embodiment, the element is an electrically conductive element. In another preferred aspect of the 54^{th} embodiment, the element is a further waveguide. In the 54^{th} embodiment, the coupling can be, e.g., between the first waveguide and an electrically conductive element (such as a graphene layer), between the first waveguide arranged in a first chip and a further waveguide arranged in a further chip.

A 55^{th} embodiment of the invention is a use of an arrangement according to the invention, preferably an arrangement according to any of the 1^{st} to 42^{nd}, and 53^{rd} embodiments of the invention, for at least one or all of the following:
a. receiving of an optical signal, preferably an optical signal carrying data;
b. sending of an optical signal, preferably an optical signal carrying data;
c. transporting of an optical signal, preferably an optical signal carrying data;
d. coupling an electromagnetic wave propagating in the first waveguide to an element such that an electromagnetic wave propagates in the element.

In an aspect of the 55^{th} embodiment, all possible combinations of the features a. to d. are preferred aspects of the embodiment. These combinations are e.g., a; b; c; d; a+b; a+c; a+d; b+c; b+d; c+d; a+b+c; a+b+d; a+c+d; b+c+d; a+b+c+d.

A 56^{th} embodiment of the invention is a use of an arrangement according to the invention, preferably an arrangement according to any of the 1^{st} to 42^{nd}, and 53^{rd} embodiments of the invention, for at least one or all of the following:
a. transferring data between a first part of an integrated circuit of an electronic device and a further part of said integrated circuit;
b. transferring data between a first integrated circuit of an electronic device and a further integrated circuit, wherein the further integrated circuit can be in the same electronic device as the first integrated circuit, or in a different electronic device, preferably the same electronic device;
c. to inject an optical vector in an optical network and/or to read out an optical vector from an optical network.

In an aspect of the 56^{th} embodiment, all possible combinations of the features a. to c. are preferred aspects of the embodiment. These combinations are *e.g.,* a; b; c; a+b; a+c; b+c; a+b+c.

A 57^{th} embodiment of the invention is a first assembly **1000** comprising
a. a first sub-assembly **1001,** wherein the first sub-assembly **1001** comprises
   i. a first arrangement **1002** according to the invention, wherein the first arrangement **1002** is preferably a modulator;
   ii. preferably a second arrangement **1003** according to the invention, wherein the second arrangement **1003** is more preferably a photodetector;
   iii. a first integrated circuit **1004** in electrical connection with the first arrangement **1002,** and preferably the second arrangement **1003,** if present;
   iv. preferably a first data storage means **1005** adapted and arranged to be in electrical connection with the first integrated circuit **1004;**
b. a further sub-assembly **1007,** wherein the further sub-assembly **1007** comprises
   i. a further arrangement **1009** according to the invention, wherein the further arrangement **1009**
      A. is adapted and arranged to be in optical connection with the first arrangement **1002,**
      B. is preferably a photodetector;
   ii. preferably an even-further arrangement **1008** according to the invention, wherein the even-further arrangement **1008** is
      A. adapted and arranged to be in optical connection with the second arrangement **1003,** if present,
      B. is preferably a modulator;
   iii. a further integrated circuit **1010** in electrical connection with the further arrangement **1009,** and preferably the even-further arrangement **1008,** if present;
   iv. preferably a further data storage means **1011** adapted and arranged to be in electrical connection with the further integrated circuit **1010;**
c. a first light emitting means **1006,** wherein
   i. the first arrangement **1002** and the first light emitting means **1006** are adapted and arranged to be in optical connection with each other,
   ii. preferably, the first light emitting means **1006** is arranged in the first sub-assembly **1001;**
d. preferably a further light emitting means **1012,** wherein
   i. the even-further arrangement **1008,** if present, and the further light emitting means **1012** are adapted and arranged to be in optical connection with each other,
   ii. preferably, the further light emitting means **1012** is arranged in the further sub-assembly **1007;**
wherein
the first sub-assembly **1001** and the further sub-assembly **1007** are adapted and arranged to communicate data between said sub-assemblies via an optical signal, and preferably, wherein at least one or all of the following is an arrangement according to any of the 1^{st} to 29^{th}, 34^{th} to 42^{nd}, and 53^{rd} embodiments of the invention: the first arrangement, the second arrangement, the further arrangement, the even-further arrangement.

In a preferred aspect of the 57^{th} embodiment of the invention, the first sub-assembly and the further sub-assembly are adapted and arranged to communicate data between said sub-assemblies via an optical signal, over a distance of at least 1 mm, more preferably at least 2 mm, even more preferably at least 5 mm, and further preferably at least 10 mm. In a preferred aspect of the 57^{th} embodiment of the invention, the first sub-assembly and the further sub-assembly are adapted and arranged to communicate data between said sub-assemblies via an optical signal, over a distance of at least 10 cm, more preferably at least 30 cm, and further preferably at least 50 cm.

In a preferred embodiment of the first assembly, the first assembly is selected from the group consisting of an assembly adapted and arranged for communication, an assembly adapted and arranged for telecommunication, an assembly adapted and arranged for high-performance computing, an assembly adapted and arranged for artificial intelligence (e.g., machine learning), an assembly adapted and arranged for a data centre, a switch (e.g., a network switch), an optical interconnect, a chip. This preferred embodiment is a 58^{th} embodiment of the invention, that preferably depends on the 57^{th} embodiment of the invention.

A 59^{th} embodiment of the invention is a fifth assembly **2200** comprising
a. a first sub-assembly **2201,** wherein the first sub-assembly **2201** comprises
   i. preferably a first arrangement **2202** according to the invention, wherein the first arrangement **2202** is more preferably a modulator;
   ii. preferably a second arrangement **2203** according to the invention, wherein the second arrangement **2203** is more preferably a photodetector;
   iii. a first integrated circuit **2204** preferably in electrical connection with the first arrangement **2202,** and preferably the second arrangement **2203,** if present;
   iv. preferably a first data storage means **2205** adapted and arranged to be in electrical connection with the first integrated circuit **2204;**
b. a further sub-assembly **2207,** wherein the further sub-assembly **2207** comprises
   i. preferably a further arrangement **2209** according to the invention, wherein the further arrangement **2209**
      A. is adapted and arranged to be in optical connection with the first arrangement **2202,**
      B. is preferably a photodetector;
   ii. preferably an even-further arrangement **2208** according to the invention, wherein the even-further arrangement **2208** is
      A. adapted and arranged to be in optical connection with the second arrangement **2203,** if present,
      B. is preferably a modulator;
   iii. a further integrated circuit **2210** that is preferably in electrical connection with the further arrangement **2209,** and preferably the even-further arrangement **2208,** if present;
   iv. preferably a further data storage means **2211** adapted and arranged to be in electrical connection with the further integrated circuit **2210;**
c. a third arrangement **2213** according to the invention, preferably an arrangement according to any of the 1^{st} to 5^{th}, 30^{th} to 42^{nd}, and 53^{rd} embodiments of the invention, wherein
   i. the third arrangement **2213** comprises a first waveguide and a further waveguide,
   ii. preferably the third arrangement **2213** is in optical connection with at least one or all of the following: the first arrangement, the second arrangement, the further arrangement, the even-further arrangement;
d. a first light emitting means **2206,** wherein
   i. preferably the third arrangement **2213** and the first light emitting means **2206** are adapted and arranged to be in optical connection with each other,
   ii. preferably the first arrangement **2202** and the first light emitting means **2206** are adapted and arranged to be in optical connection with each other,
   iii. preferably, the first light emitting means **2206** is arranged in the first sub-assembly **2201;**
e. preferably a further light emitting means **2212,** wherein
   i. preferably the third arrangement **2213** and the further light emitting means **2212** are adapted and arranged to be in optical connection with each other
   ii. preferably the even-further arrangement **2208,** if present, and the further light emitting means **2212** are adapted and arranged to be in optical connection with each other,
   iii. preferably, the further light emitting means **2212** is arranged in the further sub-assembly **2207;**
   wherein
   the first sub-assembly **2201** and the further sub-assembly **2207** are adapted and arranged to communicate data between said sub-assemblies via an optical signal, and
   preferably wherein one of the following applies:
      I. the third arrangement **2223** is arranged in the first sub-assembly **2201,**
      II. the third arrangement **2223** is arranged in the further sub-assembly **2207,**
      III. the first waveguide is arranged in the first sub-assembly **2201** and the further waveguide is arranged in the further sub-assembly **2207,** or
      IV. the further waveguide is arranged in the first sub-assembly **2201** and the first waveguide is arranged in the further sub-assembly **2207;** and
   preferably at least one or all of the following, if present, is an arrangement according to any of the 1^{st} to 29^{th}, 34^{th} to 42^{nd}, and 53^{rd} embodiments of the invention: the first arrangement, the second arrangement, the further arrangement, the even-further arrangement

In a preferred aspect of the 59^{th} embodiment of the invention, the first sub-assembly and the further sub-assembly are adapted and arranged to communicate data between said sub-assemblies via an optical signal, over a distance of at least 1 mm, more preferably at least 2 mm, even more preferably at least 5 mm, and further preferably at least 10 mm. In a preferred aspect of the 59^{th} embodiment of the invention, the first sub-assembly and the further sub-assembly are adapted and arranged to communicate data between said sub-assemblies via an optical signal, over a distance of at least 10 cm, more preferably at least 30 cm, and further preferably at least 50 cm.

In a preferred embodiment of the fifth assembly, the fifth assembly is selected from the group consisting of an assembly adapted and arranged for communication, an assembly adapted and arranged for telecommunication, an assembly adapted and arranged for high-performance computing, an assembly adapted and arranged for artificial intelligence (e.g., machine learning), an assembly adapted and arranged for a data centre, a switch (e.g., a network switch), an optical interconnect, a chip. This preferred embodiment is a 60^{th} embodiment of the invention, that preferably depends on the 59^{th} embodiment of the invention.

A 61^{st} embodiment of the invention is an optical data communication module **2100** comprising
a. a first arrangement **2101** according to the invention, wherein the first arrangement **2101** is preferably a modulator;
b. preferably, a light emitting means **2102** adapted and arranged to be in optical connection with the first arrangement **2101;**
c. preferably a further arrangement **2103** according to the invention, wherein
   i. the further arrangement **2103** is more preferably a photodetector,
   ii. preferably is in optical connection with the first arrangement **2101;**
d. an integrated circuit **2104** in electrical connection with the first arrangement **2101,** and preferably in electrical connection with the further arrangement **2103,** if present;
wherein
preferably at least one or all of the following is an arrangement according to any of the 1^{st} to 29^{th}, 34^{th} to 42^{nd}, and 53^{rd} embodiments of the invention: the first arrangement, the further arrangement.

A 62^{nd} embodiment of the invention is an optical data communication module **2300** comprising
a. a first arrangement **2301** according to the invention, preferably an arrangement according to any of the 1^{st} to 5^{th}, 30^{th} to 42^{nd}, and 53^{rd} embodiments of the invention, wherein the first arrangement **2301** preferably comprises a first waveguide and a further waveguide;
b. preferably a second arrangement according to the invention, wherein the second arrangement is more preferably a modulator, and is further preferably in optical connection with the first arrangement **2301;**
c. preferably a further arrangement according to the invention, wherein the further arrangement is more preferably a photodetector, and is further preferably in optical connection with the first arrangement **2301;**
d. preferably a light emitting means **2302** adapted and arranged to be in optical connection with the first arrangement **2301,**
e. preferably an integrated circuit **2304** in data communication with the first arrangement **2301;**
wherein
preferably at least one or all of the following, if present, is an arrangement according to any of the 1^{st} to 29^{th}, 34^{th} to 42^{nd}, and 53^{rd} embodiments of the invention: the second arrangement, the further arrangement.

A 63^{rd} embodiment of the invention is an optical sensing module **1100** comprising:
a. a first arrangement **1101** according to the invention, wherein
   i. the first arrangement **1101** is adapted an arranged to modulate first electromagnetic waves directed towards a target area **1102,** and
   ii. preferably, the first arrangement **1101** is a modulator;
b. a sensing means **1103** adapted and arranged to detect further electromagnetic waves from the target area **1102,** thereby generating an electrical signal, wherein
   i. the sensing means preferably comprises a further arrangement, and
   ii. the further arrangement is preferably a photodetector;
c. preferably, optics **1104** adapted and arranged to focus the further electromagnetic waves onto the sensing means **1103,** and
d. preferably, an integrated circuit **1105,** wherein the integrated circuit is
   i. in electrical connection with the first arrangement **1101,**
   ii. preferably in electrical connection with the sensing means **1103,**
   iii. preferably adapted and arranged to process the electrical signal generated by the sensing means **1103;**
e. preferably, a light emitting means **1106,** in optical connection with the first arrangement **1101;**
wherein
preferably at least one or all of the following is an arrangement according to any of the 1^{st} to 29^{th}, 34^{th} to 42^{nd}, and 53^{rd} embodiments of the invention: the first arrangement, the further arrangement.

A 64^{th} embodiment of the invention is an optical sensing module **2400** comprising:
a. a first arrangement **2401** according to the invention, preferably an arrangement according to any of the 1^{st} to 5^{th}, 30^{th} to 42^{nd}, and 53^{rd} embodiments of the invention, wherein the first arrangement **2401** preferably comprises a first waveguide and a further waveguide;
b. preferably a second arrangement according to the invention, wherein the second arrangement is more preferably a modulator, and is further preferably in optical connection with the first arrangement **2401;**
c. preferably a further arrangement according to the invention, wherein the further arrangement is more preferably a photodetector, and is further preferably in optical connection with the first arrangement **2401;**
d. a sensing means **2403** that is adapted and arranged
   i. to detect further electromagnetic waves from a target area **2402,** thereby generating an electrical signal, and
   ii. preferably to be in data communication with the first arrangement **2401;**
e. preferably optics **2404** adapted and arranged to focus the further electromagnetic waves onto the sensing means **2403,** and
f. preferably, an integrated circuit **2405,** wherein the integrated circuit is
   i. preferably in electrical connection with the sensing means **2403,**
   ii. preferably adapted and arranged to process the electrical signal generated by the sensing means **2403;**
   iii. preferably adapted and arranged to be in data communication with the first arrangement **2401**
g. preferably a light emitting means **2406** in optical connection with the first arrangement **2401;**
wherein
preferably at least one or all of the following, if present, is an arrangement according to any of the 1^{st} to 29^{th}, 34^{th} to 42^{nd}, and 53^{rd} embodiments of the invention: the second arrangement, the further arrangement.

A 65^{th} embodiment of the invention is an apparatus **1200** adapted and arranged for a medical application, comprising
a. a first arrangement **1201,** wherein the first arrangement **1201** is preferably a modulator;
b. preferably a further arrangement **1202,** wherein the further arrangement **1202** is more preferably a photodetector;
c. preferably a first light emitting means **1203** in optical connection with the first arrangement **1201;**
d. a first integrated circuit **1204** in electrical connection with the first arrangement **1201,** and preferably in electrical connection with the further arrangement **1202,** if present,
e. preferably a sensing unit **1205,** wherein the sensing unit **1205** is adapted and arranged to measure at least one physical property of a body, preferably a mammalian body, wherein the sensing unit **1205**
   i. preferably comprises an optical data communication module according to any of the 61^{st} and 62^{nd} embodiments of the invention,
   ii. preferably comprises an optical sensing module according to any of the 63^{rd} and 64^{th} embodiments of the invention,
   iii. is preferably in data communication, and more preferably in optical connection, with at least one or all of the following:
      A. the first arrangement **1201,** and
      B. the further arrangement **1202,** if present;
wherein
preferably at least one or all of the following is an arrangement according to any of the 1^{st} to 29^{th}, 34^{th} to 42^{nd}, and 53^{rd} embodiments of the invention: the first arrangement, the further arrangement.

A 66^{th} embodiment of the invention is an apparatus **2500** adapted and arranged for a medical application, comprising
a. a first arrangement **2501** according to the invention, preferably an arrangement according to any of the 1^{st} to 5^{th}, 30^{th} to 42^{nd}, and 53^{rd} embodiments of the invention, wherein the first arrangement **2501** preferably comprises a first waveguide and a further waveguide;
b. preferably a second arrangement, wherein the second arrangement is more preferably a modulator, and is further preferably in optical connection with the first arrangement **2501;**
c. preferably a further arrangement, wherein the further arrangement is more preferably a photodetector, and is further preferably in optical connection with the first arrangement **2501;**
d. preferably a first light emitting means **2503,** more preferably in optical connection with the first arrangement **2501,** and further preferably in optical connection with at least one or all of the following: the second arrangement, the further arrangement;
e. a first integrated circuit **2504,** more preferably in data communication with the first arrangement **2501;**
f. preferably a sensing unit **2505,** wherein the sensing unit **2505** is adapted and arranged to measure at least one physical property of a body, preferably a mammalian body, wherein the sensing unit **2505**
   i. preferably comprises an optical data communication module according to any of the 61^{st} and 62^{nd} embodiments of the invention,
   ii. preferably comprises an optical sensing module according to any of the 63^{rd} and 64^{th} embodiments of the invention,
   iii. is preferably in data communication, and more preferably in optical connection, with the first arrangement **2501;**
wherein
preferably at least one or all of the following, if present, is an arrangement according to any of the 1^{st} to 29^{th}, 34^{th} to 42^{nd}, and 53^{rd} embodiments of the invention: the second arrangement, the further arrangement.

A 67^{th} embodiment of the invention is a vehicle **1300** adapted and arranged for flight, wherein the vehicle **1300** comprises
a. a first arrangement **1301** according to the invention, wherein the first arrangement **1301** is preferably a modulator;
b. preferably a first light emitting means **1302** adapted and arranged to be in optical connection with the first arrangement **1301;**
c. preferably a further arrangement **1303,** wherein the further arrangement **1303** is preferably a photodetector;
d. preferably a first integrated circuit **1304** in electrical connection with the first arrangement **1301,** and preferably in electrical connection with the further arrangement **1303,** if present;
e. preferably a propulsion means **1305;**
f. preferably a means to generate lift **1306;**
g. preferably a control system **1307** adapted and arranged to control a movement of the vehicle,
h. preferably a sensing unit **1308,** wherein the sensing unit **1308**
   i. is preferably adapted and arranged to provide information about surroundings (e.g., a target area) of the vehicle **1300,** more preferably spatial information about surroundings of the vehicle **1300,**
   ii. preferably comprises an optical data communication module according to any of the 61^{st} and 62^{nd} embodiments of the invention,
   iii. preferably comprises an optical sensing module according to any of the 63^{rd} and 64^{th} embodiments of the invention,
   iv. is preferably in data communication, and more preferably in optical connection, with at least one or all of the following:
      A. the first arrangement **1301,** and
      B. the further arrangement **1303,** if present;
wherein
preferably at least one or all of the following is an arrangement according to any of the 1^{st} to 29^{th}, 34^{th} to 42^{nd}, and 53^{rd} embodiments of the invention: the first arrangement, the further arrangement.

In a preferred embodiment of the vehicle adapted and arranged for flight, said vehicle is selected from the group consisting of an airplane, a helicopter, a drone, a rocket, a satellite, a balloon (e.g., a weather balloon, a hot-air balloon) and a missile. This preferred embodiment is a 68^{th} embodiment of the invention, that preferably depends on the 67^{th} embodiment of the invention.

A 69^{th} embodiment of the invention is a vehicle **2600** adapted and arranged for flight, wherein the vehicle **2600** comprises
a. a first arrangement **2601** according to the invention, preferably an arrangement according to any of the 1^{st} to 5^{th}, 30^{th} to 42^{nd}, and 53^{rd} embodiments of the invention, wherein the first arrangement **2601** preferably comprises a first waveguide and a further waveguide;
b. preferably a first light emitting means **2602** that is more preferably adapted and arranged to be in optical connection with the first arrangement **2601;**
c. preferably a second arrangement, wherein the second arrangement is more preferably a modulator, and is further preferably in optical connection with the first arrangement **2601;**
d. preferably a further arrangement, wherein the further arrangement is more preferably a photodetector, and is further preferably in optical connection with the first arrangement **2601;**
e. preferably a first integrated circuit **2604** that is more preferably in data communication with the first arrangement **2601;**
f. preferably a propulsion means **2605;**
g. preferably a means to generate lift **2606;**
h. preferably a control system **2607** adapted and arranged to control a movement of the vehicle,
i. preferably a sensing unit **2608,** wherein the sensing unit **2608**
   i. is preferably adapted and arranged to provide information about surroundings (e.g., a target area) of the vehicle **2600,** more preferably spatial information about surroundings of the vehicle **2600,**
   ii. preferably comprises an optical data communication module according to any of the 61 ^{st} and 62^{nd} embodiments of the invention,
   iii. preferably comprises an optical sensing module according to any of the 63^{rd} and 64^{th} embodiments of the invention,
   iv. is preferably in data communication, and more preferably in optical connection, the first arrangement **2601;**
wherein
preferably at least one or all of the following, if present, is an arrangement according to any of the 1^{st} to 29^{th}, 34^{th} to 42^{nd}, and 53^{rd} embodiments of the invention: the second arrangement, the further arrangement.

In a preferred embodiment of the vehicle adapted and arranged for flight, said vehicle is selected from the group consisting of an airplane, a helicopter, a drone, a rocket, a satellite, a balloon (e.g., a weather balloon, a hot-air balloon) and a missile. This preferred embodiment is a 70^{th} embodiment of the invention, that preferably depends on the 69^{th} embodiment of the invention.

A 71^{st} embodiment of the invention is a robotic system **1400,** comprising:
a. a first arrangement **1401** according to the invention, wherein the first arrangement **1401** is preferably a modulator;
b. preferably a first light emitting means **1402** in optical connection with the first arrangement **1401;**
c. preferably a further arrangement **1403,** wherein more preferably the further arrangement **1403** is a photodetector;
d. preferably a first integrated circuit **1404** in electrical connection with the first arrangement **1401,** and preferably the further arrangement **1403,** if present.
e. a robotic body **1405** adapted and arranged for movement, wherein the robotic body **1405** preferably comprises the first arrangement **1401** and/or the further arrangement **1403,** if present;
f. a sensing unit **1406,** wherein the sensing unit **1406**
   i. is preferably adapted and arranged to provide spatial information about surroundings (e.g., the target area) of the robotic body **1405,**
   ii. preferably comprises an optical data communication module according to any of the 61^{st} and 62^{nd} embodiments of the invention,
   iii. preferably comprises an optical sensing module according to any of the 63^{rd} and 64^{th} embodiments of the invention,
   iv. is preferably in data communication with at least one or all of the following: the first arrangement **1401,** the further arrangement **1403,** if present;
g. a control module **1407** adapted and arranged to control a movement of the robotic body **1405,** preferably based on the spatial information provided by the sensing unit **1406,** wherein the control module **1407** is preferably in data communication, and more preferably optical connection, with at least one or all of the following:
   i. the first arrangement **1401,**
   ii. the further arrangement **1403,**
   iii. the first integrated circuit **1404;**
h. preferably, an external entity **1408** in data communication with the robotic body **1405;**
wherein
preferably at least one or all of the following is an arrangement according to any of the 1^{st} to 29^{th}, 34^{th} to 42^{nd}, and 53^{rd} embodiments of the invention: the first arrangement, the further arrangement.

A 72^{nd} embodiment of the invention is a robotic system **2700,** comprising:
a. a first arrangement **2701** according to the invention, preferably an arrangement according to any of the 1^{st} to 5^{th}, 30^{th} to 42^{nd}, and 53^{rd} embodiments of the invention, wherein the first arrangement **2701** preferably comprises a first waveguide and a further waveguide;
b. preferably a first light emitting means **2702** in optical connection with the first arrangement **2701;**
c. preferably a second arrangement, wherein the second arrangement is more preferably a modulator, and is further preferably in optical connection with the first arrangement **2701;**
d. preferably a further arrangement, wherein the further arrangement is more preferably a photodetector, and is further preferably in optical connection with the first arrangement **2701;**
e. preferably a first integrated circuit **2704,** more preferably in data communication with the first arrangement **2701;**
f. a robotic body **2705** adapted and arranged for movement, wherein the robotic body **2705** preferably comprises the first arrangement **2701,** and more preferably at least one or all of the following: the second arrangement, the further arrangement;
g. a sensing unit **2706,** wherein the sensing unit **2706**
   i. is preferably adapted and arranged to provide spatial information about surroundings (e.g., the target area) of the robotic body **2705,**
   ii. preferably comprises an optical data communication module according to any of the 61^{st} and 62^{nd} embodiments of the invention,
   iii. preferably comprises an optical sensing module according to any of the 63^{rd} and 64^{th} embodiments of the invention,
   iv. is preferably in data communication with the first arrangement **2701;**
h. a control module **2707** adapted and arranged to control a movement of the robotic body **2705,** preferably based on the spatial information provided by the sensing unit **2706,** wherein the control module **2707** is preferably in data communication, and more preferably optical connection, with at least one or all of the following:
   i. the first arrangement **2701,**
   ii. the first integrated circuit **2704;**
i. preferably, an external entity **2708** in data communication with the robotic body **2705;**
wherein
preferably at least one or all of the following, if present, is an arrangement according to any of the 1^{st} to 29^{th}, 34^{th} to 42^{nd}, and 53^{rd} embodiments of the invention: the second arrangement, the further arrangement.

A 73^{rd} embodiment of the invention is a second assembly **1500,** comprising:
a. one or more memory units **1501,** preferably one or more optical memory units, adapted and arranged to store instructions and/or data;
b. one or more processors **1502,** preferably one or more optical processors, that are adapted and arranged
   i. to be in data communication, and preferably in optical connection, with the one or more memory units **1501,**
   ii. to execute the instructions stored in the one or more memory units **1501** and/or to perform operations using optical signals,
c. preferably, a data communication module **1503,** more preferably an optical data communication module according to any of the 61^{st} and 62^{nd} embodiments of the invention, wherein the data communication module **1503** is adapted and arranged for the communication of data, more preferably optical data, between at least one or all of the following:
   i. at least one of the one or more memory units **1501** and at least one of the one or more processors **1502,**
   ii. between at least two of the memory units **1501,**
   iii. between at least two of the processors **1502;**
d. at least one arrangement **1504** according to the invention, preferably according to any of the 1^{st} to 42^{nd}, and 53^{rd} embodiments of the invention, wherein the at least one arrangement **1504** is preferably arranged in at least one or all of the following: the at least one memory unit **1501,** the at least one processer **1502,** the data communication module **1503.**

In a preferred aspect of the 73^{rd} embodiment, the "at least one arrangement" includes at least one arrangement according to any of the 1^{st} to 29^{th}, 34^{th} to 42^{nd}, and 53^{rd} embodiments of the invention. In another preferred aspect of the 73^{rd} embodiment, the "at least one arrangement" includes at least one arrangement according to any of the 1^{st} to 5^{th}, 30^{th} to 42^{nd}, and 53^{rd} embodiments of the invention. For example, in the 73^{rd} embodiment, the at least one arrangement may include at least one or all of the following: a modulator according to the invention, a photodetector according to the invention, an arrangement according to the invention that comprises a first waveguide and a further waveguide.

A 74^{th} embodiment of the invention is a third assembly **1600** comprising:
a. a homomorphic operation module **1601** that is adapted and arranged for performing homomorphic operations on encrypted optical data to obtain modified encrypted optical data,
b. preferably, a photonic encryption module **1602,** wherein the photonic encryption module **1602**
   i. is in optical connection with the homomorphic operation module **1601,**
   ii. is adapted and arranged for encrypting optical data, preferably using an optical encoding scheme, to obtain the encrypted optical data;
c. preferably, a photonic decryption module **1603,** wherein the photonic decryption module
   i. is in optical connection with the homomorphic operation module **1601,** the photonic encryption module **1602,** or both,
   ii. is adapted and arranged for decrypting the modified encrypted optical data, preferably using an optical decoding scheme;
d. at least one arrangement **1604** according to the invention, preferably according to any of the 1^{st} to 42^{nd}, and 53^{rd} embodiments of the invention, wherein the at least one arrangement **1604** is preferably arranged in at least one or all of the following: the homomorphic operation module **1601,** the photonic encryption module **1602,** the photonic decryption module **1603;**
e. preferably, at least one light emitting means **1606** that is in optical connection with at least one or all of the following;
   i. the homomorphic operation module **1601,**
   ii. the photonic encryption module **1602,**
   iii. the photonic decryption module **1603.**

In a preferred aspect of the 74^{th} embodiment, the "at least one arrangement" includes at least one arrangement according to any of the 1^{st} to 29^{th}, 34^{th} to 42^{nd}, and 53^{rd} embodiments of the invention. In another preferred aspect of the 74^{th} embodiment, the "at least one arrangement" includes at least one arrangement according to any of the 1^{st} to 5^{th}, 30^{th} to 42^{nd}, and 53^{rd} embodiments of the invention. For example, in the 74^{th} embodiment, the at least one arrangement may include at least one or all of the following: a modulator according to the invention, a photodetector according to the invention, an arrangement according to the invention that comprises a first waveguide and a further waveguide.

A 75^{th} embodiment of the invention is an optical connection module **1700,** comprising:
a. a first arrangement **1701** according to the invention, wherein the first arrangement **1701** is preferably a modulator;
b. preferably a further arrangement **1702** in optical connection with the first arrangement **1701,** wherein the further arrangement **1702** is preferably a photodetector;
c. preferably at least one waveguide **1703** in optical connection with the first arrangement **1701,** the further arrangement **1702,** if present, or both;
d. preferably a light emitting means **1704** in optical connection with the first arrangement **1701;**
e. preferably at least one integrated circuit **1705** in electrical connection with the first arrangement **1701,** the further arrangement **1702,** if present, or both;
wherein
preferably at least one or all of the following is an arrangement according to any of the 1^{st} to 29^{th}, 34^{th} to 42^{nd}, and 53^{rd} embodiments of the invention: the first arrangement, the further arrangement.

In a preferred embodiment of the optical connection module, the optical connection module is selected from the group consisting of an optical interconnect, an optical transmitter, an optical receiver, an optical transceiver, and an optical switch. This preferred embodiment is a 76^{th} embodiment of the invention, that preferably depends on the 75^{th} embodiment of the invention.

A 77^{th} embodiment of the invention is an optical connection module **2800,** comprising:
a. a first arrangement **2801** according to the invention, preferably an arrangement according to any of the 1^{st} to 5^{th}, 30^{th} to 42^{nd}, and 53^{rd} embodiments of the invention, wherein the first arrangement **2801** preferably comprises a first waveguide and a further waveguide;
b. preferably a light emitting means **2804** in optical connection with the first arrangement **2801;**
c. preferably at least one integrated circuit **2805** in data communication with the first arrangement **2801;**
d. preferably a second arrangement, wherein the second arrangement is more preferably a modulator, and is further preferably in optical connection with the first arrangement **2801;**
e. preferably a further arrangement, wherein the further arrangement is more preferably a photodetector, and is further preferably in optical connection with the first arrangement **2801;**
wherein
preferably at least one or all of the following, if present, is an arrangement according to any of the 1^{st} to 29^{th}, 34^{th} to 42^{nd}, and 53^{rd} embodiments of the invention: the second arrangement, the further arrangement.

In a preferred embodiment of the optical connection module, the optical connection module is selected from the group consisting of an optical interconnect, an optical transmitter, an optical receiver, an optical transceiver, and an optical switch. This preferred embodiment is a 78^{th} embodiment of the invention, that preferably depends on the 77^{th} embodiment of the invention.

A 79^{th} embodiment of the invention is a first transportation means **1800,** preferably adapted and arranged for autonomous travel, comprising:
a. a first arrangement **1801** according to the invention, wherein the first arrangement **1801** is preferably a modulator;
b. preferably a first light emitting **1812** means adapted and arranged to be in optical connection with the first arrangement **1801;**
c. preferably a further arrangement **1802,** wherein the further arrangement **1802** is preferably a photodetector;
d. preferably a first integrated circuit **1811** in electrical connection with the first arrangement **1801,** the further arrangement **1802,** if present, or both;
e. a sensing unit **1803,** wherein the sensing unit **1803**
   i. is preferably adapted and arranged to provide spatial information about surroundings (e.g., a target area) of the first transportation means **1800,**
   ii. preferably comprises a data communication module, more preferably an optical data communication module according to any of the 61^{st} and 62^{nd} embodiments of the invention,
   iii. preferably comprises an optical sensing module according to any of the 63^{rd} and 64^{th} embodiments of the invention,
   iv. is preferably in data communication, and more preferably in optical connection, with at least one or all of the following:
      A. the first arrangement **1801,** and
      B. the further arrangement **1802,** if present;
f. a processing module **1804** that
   i. comprises a perception sub-module **1805** adapted and arranged to analyse and/or process the spatial information from the sensing unit **1803** to provide perception data on a presence and/or a classification of patterns and/or items in the target area,
   ii. comprises a generation sub-module **1806** adapted and arranged to process the perception data, and to preferably generate a recommendation, a control instruction, or both;
   i. is preferably in data communication, and more preferably in optical connection, with at least one or all of the following:
      A. the first arrangement **1801,** and
      B. the further arrangement **1802,** if present;
g. preferably a human-machine interface **1807** adapted and arranged to provide feedback to a user based on the recommendation, the control instruction, or both;
h. preferably a control unit **1808** adapted and arranged to execute the recommendation, the control instruction, or both;
i. a steering means **1809** adapted and arranged to steer the first transportation means **1800,** wherein the control unit **1808** is preferably adapted and arranged to control the steering means;
j. a propulsion means **1810** adapted and arranged to provide propulsion to the first transportation means **1800,** wherein the control unit **1808** is preferably adapted and arranged to control the propulsion means **1810;**
wherein
preferably at least one or all of the following is an arrangement according to any of the 1^{st} to 29^{th}, 34^{th} to 42^{nd}, and 53^{rd} embodiments of the invention: the first arrangement, the further arrangement.

An 80^{th} embodiment of the invention is a first transportation means **2900,** preferably adapted and arranged for autonomous travel, comprising:
a. a first arrangement **2901** according to the invention, preferably an arrangement according to any of the 1^{st} to 5^{th}, 30^{th} to 42^{nd}, and 53^{rd} embodiments of the invention, wherein the first arrangement **2901** preferably comprises a first waveguide and a further waveguide;
b. preferably a second arrangement, wherein the second arrangement is more preferably a modulator, and is further preferably in optical connection with the first arrangement **2901;**
c. preferably a further arrangement, wherein the further arrangement is more preferably a photodetector, and is further preferably in optical connection with the first arrangement **2901;**
d. preferably a first light emitting **2912** means adapted and arranged to be in optical connection with the first arrangement **2901;**
e. preferably a first integrated circuit **2911** in data communication with the first arrangement **2901;**
f. a sensing unit **2903,** wherein the sensing unit **2903**
   i. is preferably adapted and arranged to provide spatial information about surroundings (e.g., a target area) of the first transportation means **2900,**
   ii. preferably comprises a data communication module, more preferably an optical data communication module according to any of the 61^{st} and 62^{nd} embodiments of the invention,
   iii. preferably comprises an optical sensing module according to any of the 63^{rd} and 64^{th} embodiments of the invention,
   iv. is preferably in data communication with the first arrangement **2901;**
g. a processing module **2904** that
   i. comprises a perception sub-module **2905** adapted and arranged to analyse and/or process the spatial information from the sensing unit **2903** to provide perception data on a presence and/or a classification of patterns and/or items in the target area,
   ii. comprises a generation sub-module **2906** adapted and arranged to process the perception data, and to preferably generate a recommendation, a control instruction, or both;
   iii. is preferably in data communication, and more preferably in optical connection, the first arrangement **2901;**
h. preferably a human-machine interface **2907** adapted and arranged to provide feedback to a user based on the recommendation, the control instruction, or both;
i. preferably a control unit **2908** adapted and arranged to execute the recommendation, the control instruction, or both;
j. a steering means **2909** adapted and arranged to steer the first transportation means **2900,** wherein the control unit **2908** is preferably adapted and arranged to control the steering means;
k. a propulsion means **2910** adapted and arranged to provide propulsion to the first transportation means **2900,** wherein the control unit **2908** is preferably adapted and arranged to control the propulsion means **2910;**
wherein
preferably at least one or all of the following, if present, is an arrangement according to any of the 1^{st} to 29^{th}, 34^{th} to 42^{nd}, and 53^{rd} embodiments of the invention: the second arrangement, the further arrangement.

An 81^{st} embodiment of the invention is a further transportation means **1900** comprising:
a. a first arrangement **1901** according to the invention, wherein the first arrangement **1901** is preferably a modulator;
b. preferably a further arrangement **1902,** more preferably in optical connection with the first arrangement **1901,** wherein the further arrangement **1902** is preferably a photodetector;
c. a steering means **1903** adapted and arranged to steer the further transportation means **1900;**
d. a propulsion means **1904** adapted and arranged to provide propulsion to the further transportation means **1900;**
wherein
preferably at least one or all of the following is an arrangement according to any of the 1^{st} to 29^{th}, 34^{th} to 42^{nd}, and 53^{rd} embodiments of the invention: the first arrangement, the further arrangement.

An 82^{nd} embodiment of the invention is a further transportation means **3000** comprising:
a. a first arrangement **3001** according to the invention, preferably an arrangement according to any of the 1^{st} to 5^{th}, 30^{th} to 42^{nd}, and 53^{rd} embodiments of the invention, wherein the first arrangement **3001** preferably comprises a first waveguide and a further waveguide;
b. preferably a second arrangement, wherein the second arrangement is more preferably a modulator, and is further preferably in optical connection with the first arrangement **3001;**
c. preferably a further arrangement, wherein the further arrangement is more preferably a photodetector, and is further preferably in optical connection with the first arrangement **3001;**
d. a steering means **3003** adapted and arranged to steer the further transportation means **3000;**
e. a propulsion means **3004** adapted and arranged to provide propulsion to the further transportation means **3000;**
wherein
preferably at least one or all of the following, if present, is an arrangement according to any of the 1^{st} to 29^{th}, 34^{th} to 42^{nd}, and 53^{rd} embodiments of the invention: the second arrangement, the further arrangement.

An 83^{rd} embodiment of the invention is a fourth assembly **2000,** comprising:
a. one or more memory units **2001** adapted and arranged to store instructions and/or data;
b. one or more processors **2002** that are adapted and arranged
   i. to be in data communication with the one or more memory units **2001,**
   ii. to execute the instructions stored in the one or more memory units **2001** and/or to perform operations;
c. at least one arrangement **2003** according to the invention, preferably according to any of the 1^{st} to 42^{nd}, and 53^{rd} embodiments of the invention,
wherein the fourth assembly is preferably adapted and arranged for at least one or all of the following: artificial intelligence, machine learning, graphics rendering, large-scale visualisation, gaming, high-frequency trading, video streaming, audio recognition, image recognition, object recognition, virtual reality, molecular simulation, scientific simulations (e.g., the modelling of weather patterns and/or climate, the modelling of star formation), the solving of equations, data mining, cloud-based applications.

In a preferred aspect of the 83^{rd} embodiment, the "at least one arrangement" includes at least one arrangement according to any of the 1^{st} to 29^{th}, 34^{th} to 42^{nd}, and 53^{rd} embodiments of the invention. In another preferred aspect of the 83^{rd} embodiment, the "at least one arrangement" includes at least one arrangement according to any of the 1^{st} to 5^{th}, 30^{th} to 42^{nd}, and 53^{rd} embodiments of the invention. For example, in the 83^{rd} embodiment, the at least one arrangement may include at least one or all of the following: a modulator according to the invention, a photodetector according to the invention, an arrangement according to the invention that comprises a first waveguide and a further waveguide.

An 84^{th} embodiment of the invention is a use of the first assembly according to the invention, preferably according to any of the 57^{th} to 58^{th} embodiments of the invention, for at least one or all of the following: communication, telecommunication, high-performance computing, for use in a data centre, a switch (e.g., a network switch), an optical interconnect, a chip.

An 85^{th} embodiment of the invention is a use of the first assembly according to the invention, preferably according to any of the 57^{th} to 58^{th} embodiments of the invention, in at least one or all of the following: artificial intelligence applications and/or machine learning applications, an apparatus adapted and arranged for a medical application, a vehicle adapted and arranged for flight, a robotic system, an assembly adapted and arranged for optical computing, a homomorphic operation module, a photonic encryption module, photonic decryption module, an optical connection module, a transportation means.

An 86^{th} embodiment of the invention is a use of the fifth assembly according to the invention, preferably according to any of the 59^{th} to 60^{th} embodiments of the invention, for at least one or all of the following: communication, telecommunication, high-performance computing, for use in a data centre, a switch (e.g., a network switch), an optical interconnect, a chip.

An 87^{th} embodiment of the invention is a use of the fifth assembly according to the invention, preferably according to any of the 59^{th} to 60^{th} embodiments of the invention, in at least one or all of the following: artificial intelligence applications and/or machine learning applications, an apparatus adapted and arranged for a medical application, a vehicle adapted and arranged for flight, a robotic system, an assembly adapted and arranged for optical computing, a homomorphic operation module, a photonic encryption module, photonic decryption module, an optical connection module, a transportation means.

A 88^{th} embodiment of the invention is a use of a fourth assembly according to the invention, preferably according to the 83^{rd} embodiment of the invention, for at least one or all of the following: artificial intelligence, machine learning, graphics rendering, large-scale visualisation, gaming, high-frequency trading, video streaming, audio recognition, image recognition, object recognition, virtual reality, molecular simulation, scientific simulations (e.g., the modelling of weather patterns and/or climate, the modelling of star formation), the solving of equations, data mining, cloud-based applications.

An 89^{th} embodiment of the invention is a use of an arrangement according to the invention, preferably the arrangement according to any of the 1^{st} to 42^{nd}, and 53^{rd} embodiments of the invention, for at least one or all of the following:
a. communication, preferably in an assembly adapted and arranged for communication;
b. telecommunication, preferably in an assembly adapted and arranged for telecommunication;
c. high-performance computing, preferably in an assembly adapted and arranged for high performance computing;
d. a data centre;
e. a switch;
f. an optical interconnect;
g. a computer chip;
h. a vehicle adapted and arranged for flight;
i. an apparatus adapted and arranged for a medical application;
j. a module adapted and arranged for optical sensing;
k. a module adapted and arranged for optical data communication;
l. a robotic system;
m. optical computing, preferably an assembly adapted and arranged for optical computing;
n. at least one or all of a homomorphic operation module, a photonic encryption module, photonic decryption module;
o. an optical connection module;
p. a transportation means;
q. an assembly adapted and arranged for artificial intelligence and/or machine learning.

In the 89^{th} embodiment of the invention, all possible combinations of the features a. to q. are preferred aspects of the invention.

A 90^{th} embodiment of the invention is a use of an arrangement according to the invention, preferably the arrangement according to any of the 1^{st} to 42^{nd}, and 53^{rd} embodiments of the invention, for at least one or all of the following:
a. an apparatus adapted and arranged for consumer applications;
b. an apparatus adapted and arranged for laser and/or light detection and ranging;
c. an apparatus adapted and arranged for optical spectroscopy;
d. a system adapted and arranged for high performance computing, preferably for memory intensive applications, big data, or search engines;
e. an apparatus adapted and arranged for virtual reality, augmented reality, gaming;
f. an apparatus adapted and arranged for streaming and/or video broadcasting;
g. a system adapted and arranged for trading, brokerage, and/or financing;
h. a system adapted and arranged for wireless communication;
i. an apparatus adapted and arranged for biometric searches, personal data management, or patient data management;
j. an apparatus adapted and arranged for climate prediction, weather forecast, and/or scientific simulations (e.g., the modelling of star formation);
k. an apparatus adapted and arranged for molecular simulation, drug discovery, and/or gene sequencing; and
l. an apparatus adapted and arranged for an enterprise cloud.

In the 90^{th} embodiment of the invention, all possible combinations of the features a. to 1. are preferred aspects of the invention.

A 91^{st} embodiment of the invention is an item comprising an arrangement according to the invention, preferably the arrangement according to any of the 1^{st} to 42^{nd}, and 53^{rd} embodiments of the invention, wherein the item is selected from a group consisting of:
a. an assembly adapted and arranged for communication;
b. an assembly adapted and arranged for telecommunication;
c. an assembly adapted and arranged for high performance computing;
d. a data centre;
e. a switch;
f. an optical interconnect;
g. a computer chip;
h. a vehicle adapted and arranged for flight;
i. an apparatus adapted and arranged for a medical application;
j. a module adapted and arranged for optical sensing;
k. a module adapted and arranged for optical data communication;
l. a robotic system;
m. an assembly adapted and arranged for optical computing;
n. at least one or all of a homomorphic operation module, a photonic encryption module, photonic decryption module;
o. an optical connection module;
p. a transportation means;
q. an assembly adapted and arranged for artificial intelligence and/or machine learning.

In the 91^{st} embodiment of the invention, all possible combinations of the features a. to q. are preferred aspects of the invention.

A 92^{nd} embodiment of the invention is an item comprising an arrangement according to the invention, preferably the arrangement according to any of the 1^{st} to 42^{nd}, and 53^{rd} embodiments of the invention, wherein the item is selected from a group consisting of:
a. an apparatus adapted and arranged for consumer applications;
b. an apparatus adapted and arranged for laser and/or light detection and ranging;
c. an apparatus adapted and arranged for optical spectroscopy;
d. a system adapted and arranged for high performance computing, preferably for memory intensive applications, big data, or search engines;
e. an apparatus adapted and arranged for virtual reality, augmented reality, gaming;
f. an apparatus adapted and arranged for streaming and/or video broadcasting;
g. a system adapted and arranged for trading, brokerage, and/or financing;
h. a system adapted and arranged for wireless communication;
i. an apparatus adapted and arranged for biometric searches, personal data management, or patient data management;
j. an apparatus adapted and arranged for climate prediction, weather forecast, and/or scientific simulations (e.g., the modelling of star formation);
k. an apparatus adapted and arranged for molecular simulation, drug discovery, and/or gene sequencing; and
l. an apparatus adapted and arranged for an enterprise cloud.

In the 92^{nd} embodiment of the invention, all possible combinations of the features a. to 1. are preferred aspects of the invention.

### DETAILED DESCRIPTION OF THE INVENTION

Features described as preferred in one category of the invention, for example according to the assembly, are analogously preferred in embodiments of the other categories according to the invention, such as a method for producing an assembly and a use of the assembly.

Throughout this document, disclosures of ranges should preferably be understood to include both end points of the range. Furthermore, each disclosure of a range in the document should preferably be understood as also disclosing preferred sub-ranges in which one end point is excluded or both end points are excluded. For example, a disclosure of a range from *X₁* to *X₂* is to be understood as disclosing a range that includes both of the end points *X₁* and *X₂.* Furthermore, it is to be understood as also disclosing a range that includes the end point *X₁* but excludes the end point *X₂,* a range that excludes the end point *X₁* but includes the end point *X₂,* and a range that excludes both end points *X₁* and *X₂*.

Some preferred embodiments and preferred aspects have various combinations of features as alternatives. If the various combinations are disclosed, these combinations are separated by a semi-colon (";"). For example, the list of features "a; a+b; a+c+d" for a preferred embodiment discloses a preferred embodiment that comprises the feature "a", a preferred embodiment that comprises the features "a" and "b", and a preferred embodiment that comprises the features "a", "c", and "d".

### Directions

Length of, e.g., a first waveguide, a recess, and an element are measured parallel to a second direction (that is perpendicular to the first direction). The further direction is preferably perpendicular to a surface of a substrate on which the arrangement is superimposed. An example of a substrate is a silicon substrate, e.g., a silicon wafer. Preferably, the further direction is perpendicular to a surface of a wafer on which the arrangement is produced.

### Cross-section of arrangement

Unless specified otherwise, a "cross-section of an arrangement" should preferably be understood as a cross-section that is made perpendicular to a length of the first waveguide. An electromagnetic wave should preferably be understood as propagating along a length of the first waveguide.

### Superimposed

A first component (e.g., a first waveguide layer, an element, a layer of the first kind, a layer of a further kind) and a further component (e.g., a first waveguide layer, an element, a layer of the first kind, a layer of a further kind) may be superimposed on each other. This "superimposing" should be understood as either of the following: superimposing the first component on the further component; superimposing the further component on the first component.

If a first component and a further component are superimposed on each other, this should not be understood to mean that the first component and the further component necessarily have to touch each other. However, the first component and the further component may touch each other. *E.g.,* a first component is superimposed on a further component, wherein a second component is arranged between the first component and the further component, *i.e.,* the first component and the further component both touch the second component, but the first component and the further component do not touch each other. *E.g.,* a first component is superimposed on a further component, and the first component and the further component touch other.

### Waveguide

A cross-sectional shape of the first waveguide (made perpendicular to the length of the first waveguide) is not particularly limited. For example, the cross-sectional shape of the first waveguide may be, to a first approximation, square or rectangular. For example, the first waveguide may be a ribbed waveguide.

A further waveguide suitable for the invention includes, but is not limited to, strip waveguides, rib waveguides, slot waveguides, buried waveguides, and diffused waveguides.

A preferred waveguide (e.g., the first waveguide, the further waveguide) comprises at least one or all of the following: silicon, oxygen, aluminium, iridium, tantalum, titanium, nitrogen, lithium, niobium, indium, phosphorus, gallium, arsenic, barium, a chalcogenide, at least one polymer, a resin, a combination of at least two thereof. Examples of combinations of the aforementioned materials include titanium dioxide, aluminium nitride, tantalum pentoxide, silicon nitride, aluminium oxide, silicon oxynitride, lithium niobate, silica, indium phosphide, gallium arsenide, indium gallium arsenide, barium titanate, and aluminium gallium arsenide. A preferred chalcogenide is a dichalcogenide, more preferably a transition metal dichalcogenide.

A preferred waveguide (e.g., the first waveguide, the further waveguide) is adapted and arranged for the propagation of electromagnetic waves that have wavelengths in the range from 1000 to 2700 nm, preferably from 1100 to 2600 nm, and further preferably from 1200 to 2500 nm. A more preferred waveguide (e.g., the first waveguide, the further waveguide) is adapted and arranged for the propagation of electromagnetic waves that have wavelengths in at least one or all of the following ranges: 1260 to 1360 nm (also known as the Original Band or O-Band), 1360 to1460 nm (also known as the Extend Band or E-Band), 1460 to1530 nm (also known as the Short Band or S-Band), 1530 to 1565 nm (also known as the Conventional Band or C-Band), and 1565 to 1625 nm (also known as the Long Band or L-Band). In an aspect of the invention, it is particularly preferred that a waveguide (e.g., the first waveguide, the further waveguide) is adapted and arranged for the propagation of electromagnetic waves that have wavelengths in the O-band, the C-band, or both.

When it is disclosed that a waveguide (e.g., the first waveguide, the further waveguide) is adapted and arranged for the propagation of electromagnetic waves that have wavelengths in a specified wavelength range, this should not be understood to mean that the waveguide is necessarily only adapted for the propagation of electromagnetic waves in that specified wavelength range. Rather, it should preferably be understood to mean that the waveguide is at least adapted and arranged for the propagation of electromagnetic waves in the specified wavelength range.

A waveguide (e.g., the first waveguide, the further waveguide) is adapted and arranged for the propagation of electromagnetic waves along a length of the waveguide.

### Recess

Where it is disclosed that "the recess is adapted and arranged (e.g., dimensioned) such that" at least one property applies "when an electromagnetic wave propagates in the first waveguide", this should preferably be understood to mean that said at least one property applies for at least one wavelength, and not necessarily for all wavelengths of the electromagnetic waves propagating in the first waveguide. It is, however, preferred that said at least one property applies for at least 30 %, more preferably at least 50%, and further preferably at least 75 % of the wavelengths of the electromagnetic waves propagating in the first waveguide.

An interface between the first waveguide and the recess should preferably be understood as the interface between the first waveguide and the material with which the recess is filled. The interface should preferably also be understood as a surface where the first waveguide and the material, filling the recess, are in contact.

In a particularly preferred aspect of the invention, an interface between the first waveguide and the recess is a non-plasmonic interface. A plasmonic interface should preferably be understood as a metal-dielectric interface. For example, a plasmonic interface is the interface between a waveguide made from metal and a layer made from a dielectric material.

### Mode

Unless specified otherwise, a "mode" should preferably be understood as a mode of an electromagnetic wave propagating in the first waveguide.

The transverse magnetic (TM) mode of an electromagnetic wave should preferably be understood as having a magnetic vector (the H-vector, e.g., a magnetic field) that is perpendicular to the direction of propagation of the electromagnetic wave in a waveguide. A TM mode of an electromagnetic wave should preferably be understood as having no magnetic vector (e.g., a magnetic field) in the direction of propagation of the electromagnetic wave in a waveguide.

The transverse electric (TE) mode of an electromagnetic wave should preferably be understood as having an electric vector (e.g., an electric field) that is perpendicular to the direction of propagation of the electromagnetic wave in a waveguide. A TE mode of an electromagnetic wave should preferably be understood as having no electric vector (e.g., an electric field) in the direction of propagation of the electromagnetic wave in a waveguide.

Electromagnetic waves propagating in a waveguide may have hybrid modes. A hybrid mode may have a non-zero electric vector and/or a non-zero magnetic vector in the direction of propagation. Such hybrid modes may generally also be decomposed in component TE mode(s) and/or TM mode(s). Multiple modes (multiple TE modes and/or multiple TM modes) may also exist in a waveguide during propagation of the electromagnetic wave. Where reference is made to, e.g., a TE mode in this disclosure, this should be understood to include pure TE modes (i.e., the propagating electromagnetic wave has only one or more TE modes), as well as the one or more component TE modes of a hybrid mode. Similarly, where reference is made to, e.g., a TM mode in this disclosure, this should be understood to include pure TM modes (i.e., the propagating electromagnetic wave has only one or more TM modes), as well as the one or more component TM modes of a hybrid mode.

The group velocity of electromagnetic waves is well-known to the skilled person and is discussed in many textbooks and articles. TM and TE modes of electromagnetic waves are well-known to the skilled person and are discussed in many textbooks and online resources. One such online resource can be found at the following link: https://web.mit.edu/6.013_book/www/book.html (see Chapter 13, and in particular Chapter 13.4).

Examples of a maximum intensity of a mode include a local maximum intensity and a global maximum intensity. A preferred maximum intensity is a global maximum intensity.

### Refractive index

When it is disclosed that the first waveguide has a first refractive index, this should preferably be understood to mean that the first waveguide is made from a material that has a first refractive index. When it is disclosed that the layer of the first kind has a second refractive index, this should preferably be understood to mean that the layer of the first kind is made from a material that has a second refractive index. When it is disclosed that the at least one further waveguide has a third refractive index, this should preferably be understood to mean that the at least one further waveguide is made from a material that has a third refractive index. When it is disclosed that the recess has a further refractive index, this should preferably be understood to mean that the recess is at least partially filed, more preferably filled, with a material that has a further refractive index.

A material (e.g., from which the first waveguide is made, from which the at least one further waveguide is made, from which the layer of the first kind is made, that at least partially fills the recess) may be a mixture, a blend, or a composition of two or more constituent materials. Examples of constituent materials include silicon, oxygen, and nitrogen, with an example of a composition of these constituent materials being silicon oxynitride.

In a preferred aspect of the invention, the first waveguide has a refractive index in the range from 1.5 to 2.4, more preferably from 1.7 to 2.2, even more preferably from 1.8 to 2.1, and further preferably from 1.9 to 2.0. In a preferred aspect of the invention, the first recess has a refractive index in the range from 1.00 to 4.00, more preferably from 1.20 to 3.80, even more preferably from 1.34 to 3.60, and further preferably from 1.44 to 3.50. In a preferred aspect of the invention, a layer of the first kind has a refractive index in the range from 1.1 to 2.4, more preferably from 1.3 to 2.2, even more preferably from 1.4 to 2.1, and further preferably from 1.5 to 2.0.

### Coupling

Examples of coupling include the following: an electromagnetic wave propagating in the first waveguide is coupled to a further waveguide such that an electromagnetic wave propagates in the further waveguide; an electromagnetic wave propagating in the first waveguide is at least partially absorbed by an electrically conductive element. For example, the electromagnetic wave is at least partially absorbed by a graphene layer in an opto-electronic device.

### Electrically conductive element

A preferred electrically conductive element has a width in the range from 10 nm to 40 µm, more preferably from 100 nm to 20 µm, and further preferably from 500 nm to 1 µm. A preferred electrically conductive element has a length in the range from 100 nm to 400 µm, more preferably from 500 nm to 250 µm, and further preferably from 10 µm to 100 µm. A preferred electrically conductive element has a thickness in the range from 0.1 nm to 100 nm, more preferably from 0.7 nm to 50 nm, and further preferably from 1.5 nm to 10 nm.

A preferred electrically conductive element has an electrical conductivity, at 20 °C, of at least 10⁴ S/m, more preferably at least 10⁵ S/m, even more preferably at least 10⁶ S/m, and further preferably at least 10⁷ S/m. The values for the electrical conductivity are preferably for an electrically conductive element that has a thickness of 0.35 nm. A preferred electrically conductive element is in the form of a layer. A preferred electrically conductive element comprises graphene, at least one perovskite, or both. Graphene is particularly preferred.

A preferred electrically conductive element is adapted and arranged for at least partially absorbing electromagnetic waves. This should preferably be understood to mean that at least one electromagnetic wavelength, more preferably multiple electromagnetic wavelengths can be absorbed. For example, the electrically conductive element can absorb electromagnetic waves with wavelengths that fall within the O-band.

### Optical attenuation coefficient

The optical attenuation coefficient should preferably be understood to be a measure that describes the extent to which a radiant flux of a beam of electromagnetic waves is reduced per unit length when it passes through a specific material.

### Variable optical attenuation coefficient

An electrically conductive element that is adapted and arranged to have a variable optical attenuation coefficient should preferably be understood to mean that an optical attenuation coefficient of the electrically conductive element can be modified, preferably when the electrically conductive element is placed in an external electrical field and/or when an electric field is present between the electrically conductive element and at least one other component (e.g., another electrically conductive element). For example, the optical attenuation coefficient of an electrically conductive element can be increased or decreased when a first electrically conductive element and a second electrically conductive element are electrically charged such that an electric field is present between the first electrically conductive element and the second electrically conductive element. In an aspect of the invention, it is preferred that the optical attenuation coefficient of an electrically conductive element can be reduced, preferably by at least 20 %, more preferably by at least 50 %, and further preferably by at least 85 %.

In an aspect of the invention, if an electrically conductive element is adapted and arranged to have a variable optical attenuation coefficient, it is preferred that the optical attenuation coefficient is modifiable for multiple wavelengths of electromagnetic waves, preferably for electromagnetic waves that have wavelengths in the range from 1200 to 1700 nm.

### Opto-electronic device and modification

An opto-electronic device is adapted and arranged to modify an electromagnetic wave. Examples of preferred opto-electronic devices include modulators, photodetectors, and interferometers. More preferred examples are modulators and photodetectors. A preferred modulator at least partially converts an electrical signal to an optical signal. A preferred photodetector at least partially converts an optical signal to an electrical signal.

Modification of an electromagnetic wave should preferably be understood as the modification of one or more properties of an electromagnetic wave. Examples of these properties include amplitude, phase, frequency, and polarisation.

A modulator preferably modifies an electromagnetic wave by modulating the electromagnetic wave, more preferably by modulating an amplitude of the electromagnetic wave. It is preferred that the modulator modulates the electromagnetic wave for the sending of data, more preferably by imposing a signal on the electromagnetic wave.

A photodetector preferably modifies an electromagnetic wave by at least partially absorbing the electromagnetic wave. The at least partial absorption of the electromagnetic wave preferably leads to a decrease in the amplitude of the electromagnetic wave. It is preferred that the photodetector at least partially absorbs the electromagnetic wave for the receiving of data.

For example, if a modulator and a photodetector are in optical connection, the modulator sends data and the photodetector receives the data, e.g., data is transmitted between the modulator and photodetector.

An opto-electronic device preferably has a height that is at least 10 nm, more preferably at least 100 nm, and further preferably at least 200 nm. For example, an opto-electronic device may have a height in the range from 300 to 400 nm. A height of an opto-electronic device is measured parallel to the further direction. A preferred opto-electronic device comprises at least one electrically conductive element, wherein said electrically conductive element more preferably comprises graphene.

### Opto-electronic interaction

An element (e.g., an electrically conductive element) that is adapted and arranged to be in opto-electronic interaction with a waveguide should preferably be understood to mean that electromagnetic waves that propagate in the waveguide can interact with the element. A preferred opto-electronic interaction modifies at least one property of the electromagnetic waves that propagate in the waveguide.

### Optical connection

Two components that are in optical connection should preferably be understood to mean that said two components are adapted and arranged for a propagation (e.g., transmission) of electromagnetic waves between said two components. Here the two components can be, e.g., two arrangements, a light emitting means and an opto-electronic device, two opto-electronic devices (e.g., a modulator and a photodetector). Two components that are in optical connection are preferably adapted and arranged for the communication (e.g., transfer) of data between the two components, however this is not a requirement. Two components that are in optical connection are not required to be in, e.g., the same arrangement, the same assembly, the same sub-assembly, the same apparatus, the same system, but can be in e.g., in different arrangements.

A modulator that is adapted and arranged to be in optical connection with a photodetector is preferably adapted and arranged to communicate data via an optical signal between the modulator and the photodetector, more preferably transmit data via an optical signal from the modulator to the photodetector.

### Electrical connection

Two components that are in electrical connection should preferably be understood to mean that an electrical current can flow between the two components. Here the two components can be, e.g., an element and an electrode, an integrated circuit and an arrangement, an integrated circuit and a sensing means. An electrical connection is preferably adapted and arranged for at least one or all of the following: data communication, to provide power to a component.

### Electrically charged and discharged

An element (e.g., an electrically conductive element) that is adapted and arranged to be electrically charged should preferably be understood to mean that the element is adapted an arranged to store a net electrical charge, preferably on a surface of the element. The storing of a net electrical charge preferably produces an electric field around the element.

An element that is adapted and arranged to be electrically charged can, for example, be charged by at least one or all of the following: connecting the element to an electric circuit (*e.g*., connecting the element to an electrode), the element has an intrinsic net electrical charge (*e.g.*, without requiring connection to a circuit), the element is charged by irradiating the element with photons.

An element (*e.g*., an electrically conductive element) that is adapted and arranged to be electrically discharged should preferably be understood to mean that at least a fraction of any net charge stored in and/or on a surface of the element can be removed, thereby reducing the net electrical charge.

### Composition of element

Examples of transitional metals are molybdenum and tungsten. A chalcogen is defined as a chemical element in Group 16 of the periodic table (*e.g.,* S, Se, and Te). An example of a combination of at least one transitional metal and at least one chalcogen is a transition metal dichalcogenide (*e.g*., MoS₂, WS₂, MoSe₂, WSe₂, MoTe₂).

A conductive polymer should preferably be understood as an organic polymer that is adapted and arranged to conduct electricity. A preferred conductive polymer has an electrical conductivity of at least 10⁴ S/m, more preferably at least 10⁵ S/m, and further preferably at least 10⁶ S/m.

A conductive oxide should preferably be understood as an oxide that is adapted and arranged to conduct electricity. A preferred conductive oxide has an electrical conductivity of at least 10⁴ S/m, more preferably at least 10⁵ S/m, and further preferably at least 10⁶ S/m.

In an aspect of the invention, a preferred form of carbon is graphene. In an aspect of the invention, a preferred metal is a transitional metal. In an aspect of the invention, a preferred nitride is boron nitride, more preferably hexagonal boron nitride.

A 2D material should preferably be understood as a solid, more preferably a crystalline solid. In one aspect of the invention, it is preferred that a 2D material consists of a single layer of atoms. In another aspect of the invention, it is preferred that the 2D material comprises more than one layer of atoms (*e.g.*, more than one individual atomic plane), where these layers are bonded to each other by van der Waals forces.

### Graphene

Graphene suitable for the present invention is commercially available from, *e.g*., Graphenea S.A. (Spain), Graphene Laboratories Inc. (USA), and Grolltex Inc (USA).

### Biomolecules and biomarkers

Example of biomolecules include DNA, amino acids, fat, constituents of animal or human cells, and proteins. A biomarker should preferably be understood as a marker for biomolecules, wherein the biomarker is adapted and arranged to attach to biomolecules, preferably to make the biomolecules detectable (*e.g*., by fluorescence).

### Dielectric layer

A dielectric layer preferably has a dielectric constant of at least 3, and more preferably at least 5. A dielectric layer preferably has an electrical conductivity that is less than 10⁻⁵ S/m. A dielectric layer preferably comprises at least one or all of the following: at least one oxide, at least one nitride, a combination thereof. Examples of an oxide include silicon dioxide, aluminium oxide, zirconium dioxide, hafnium oxide, titanium dioxide, niobium pentoxide, tantalum pentoxide. An example of a nitride is silicon nitride, aluminium nitride, and silicon oxynitride.

### Integrated circuit

Examples of a preferred integrated circuit include the following: a processing unit, a memory unit, an application-specific integrated circuit, a microcontroller, a field-programmable gate array, and a system-on-chip.

A processing unit is preferably adapted and arranged to execute instructions of a computer program. Examples of these instructions include arithmetic, logic, controlling, and input/output operations. A memory unit is preferably adapted and arranged to store instructions of a computer program.

Examples of a processing unit include a central processing unit (CPU), a graphics processing unit (GPU), an X-processing unit (XPU), a tensor processing unit (TPU), a neuromorphic processing unit (NPU). Examples of a memory unit include random access memory (RAM), static RAM (SRAM), synchronous dynamic RAM (SDRAM), double data rate SDRAM (DDR SDRAM), graphics DDR SDRAM (GDDR SDRAM), flash memory, magnetoresistive RAM (MRAM), magnetic tunnel junction MRAM, and spin-orbit torque MRAM.

Examples of a data storage means is a hard drive and a flash drive.

### Data communication

Two components that are in data communication should preferably be understood to mean that data can be communicated between said two components. Here the two components can be, e.g., two arrangements, an integrated circuit and an arrangement, a sensing means and an arrangement, an integrated circuit and a sensing means. The data may be communicated using electrical signals, optical signals, or both. Data that is communicated between a first component and a further component includes at least one or all of the following: A.] a transmission (e.g., transfer) of data from the first component to the further component, B.] a transmission (e.g., transfer) of data from the further component to the first component, both A.] and B.]. For example, the first and further components are a modulator and a photodetector, respectively. For example, the first component is an opto-electronic device and the further component is an arrangement comprising a first waveguide and a further waveguide. When two components are in data communication, data may also be communicated between said two components via one or more additional components. For example, data is communicated between two opto-electronic devices via an arrangement comprising a first waveguide and a further waveguide.

### Light emitting means

A light emitting means is adapted and arranged to emit electromagnetic waves. For example, a light emitting means is adapted and arranged to emit radio waves, microwaves, or optical waves. A preferred light emitting means is adapted and arranged to facilitate at least one or all of the following: communication, sensing, imaging. An example of a light emitting means is a laser.

### Light and photonics

The terms "optical" and "light", as used herein, should preferably be understood as electromagnetic radiation, more preferably electromagnetic radiation in any of the visible, infrared, and ultraviolet spectral ranges. An example of an optical signal is a signal and/or data that is communicated using electromagnetic waves. Optical data should preferably be understood as data that is communicated using electromagnetic waves.

Photonics should preferably be understood to include at least one or all of the following: generation, detection, manipulation, emission, transmission, modulation, signal processing, switching, amplification, and sensing of electromagnetic waves.

### Artificial intelligence and machine learning

Artificial intelligence (AI) should preferably be understood to include at least one or all of the following: perceiving, synthesizing, inferring, predicting and/or generating information using computerised tools and/or techniques (e.g., machine learning models). Machine learning includes supervised learning (e.g., linear regression, decision trees, support vector machines), unsupervised learning (e.g., hierarchical clustering, k-means clustering), and reinforced learning. Machine learning also includes deep learning, such as convolutional neural networks and recurrent neural networks.

### Sensing means

A sensing means is preferably adapted and arranged to sense (e.g., measure) at least one or all of the following: sound waves, electromagnetic waves, electrical signals, a movement, a temperature, a speed, an acceleration, a rotation. For example, a movement, a speed, an acceleration and/or a rotation may be of a mammalian body, a vehicle, a robotic body, a transportation means. It is particularly preferred that a sensing means is adapted and arranged to at least partially absorb electromagnetic waves. A sensing means is preferably adapted and arranged to generate an electrical signal, an optical signal, or both, wherein a signal generated is preferably based on an input received by the sensing means. Examples of such input include a measurement and/or the at least partial absorption of an electromagnetic wave.

A sensing means may comprise at least one or all of the following: photodiodes, phototransistors, image sensors, optical fibre sensors, laser diodes, optical biosensor, optical position sensors, optical touch sensors, photomultiplier tubes, avalanche photodiodes, charge-coupled devices, complementary metal-oxide-semiconductor sensors, thermal infrared detectors, photon counting detectors, superconducting nanowire single-photon detectors.

### Sensing unit

A sensing unit comprises a sensing means. A sensing unit preferably comprises an integrated circuit.

A sensing unit is preferably adapted and arranged to analyse and/or process data of a target area obtained by the sensing unit, wherein said data may be images, sounds, temperature measurements, and/or other sensor readings. The output of a sensing unit is preferably structured data that represents the interpretation and/or analysis of the data obtained by the sensing unit, such as a health of a patient, item detection and recognition, scene information, localization and mapping data, preferably including road geometry and/or landmarks, feature extraction results (including edges, corners, textures, shapes, and/or keypoints), and/or pattern recognition output.

Spatial information should preferably be understood as information about a space wherein an entity, such as a vehicle, a robotic body, and/or a transportation means, is located. Spatial information may include information on a presence of an item in the vicinity of the entity (e.g., a distance between the element and the item), a speed of the entity, an acceleration of the entity, and/or a rotation of the entity.

### Data communication module

A data communication module is preferably adapted and arranged to communicate data between one or more components, such as electrical components. Here the electrical components may be, e.g., one or more chips; one or more dies; one or more integrated circuits located in, e.g., a robotic body, a robotic system, and an assembly; a sensing means and an integrated circuit; a sensing unit and a control system.

### First assembly and fifth assembly

The below preferred aspects of the first assembly and the fifth assembly are independently preferred aspects of the first assembly and the fifth assembly.

In a preferred aspect of the first assembly and the fifth assembly, the first sub-assembly and the further sub-assembly are part of the same chip. In another preferred aspect of the first assembly and the fifth assembly, the first sub-assembly and the further sub-assembly are part of different chips. In this aspect, the different chips may have different functions. For example, a first chip may be a processing unit and a further chip may be a memory unit (e.g., random access memory). In one preferred aspect of the first assembly and the fifth assembly, the first sub-assembly and the further sub-assembly are part of the same computational means (such as a computer). In another preferred aspect of the first assembly and the fifth assembly, the first sub-assembly and the further sub-assembly are part of different computational means (such as different computers). For example, the first and further sub-assemblies are part of different computers in a computer cluster.

In a preferred aspect of the first assembly and the fifth assembly, the first sub-assembly and the further sub-assembly are adapted and arranged to communicate data between said sub-assemblies, via an optical signal, over a distance of at least *X* mm and/or at least *Y* cm. This should preferably not be understood to mean that said sub-assemblies cannot communicate data at distances that are smaller than *X* mm and/or *Y* cm. Rather, this should preferably be understood mean that said sub-assemblies can communicate data over distances that range from 0 mm up to at least *X* mm and/or up to at least *Y* cm, and preferably distances that are larger than *X* mm and/or larger than *Y* cm.

An assembly that is adapted and arranged for communication should preferably be understood as an assembly that is adapted and arranged to communicate data over a distance of less than 10 km. An assembly that is adapted and arranged for communication may communicate the data using at least one or all of the following: at least one modulator, at least one photodetector, at least one arrangement comprising a first waveguide and a further waveguide. Alternatively, an assembly that is adapted and arranged for communication may communicate the data using at least one further communication means and at least one or all of the following: at least one modulator, at least one photodetector, at least one arrangement comprising a first waveguide and a further waveguide. Examples of a further communication means include an antenna, an optical cable (such as an optical fibre), a wired connection. An assembly that is adapted and arranged for telecommunication should preferably be understood as an assembly that is adapted and arranged to communicate data over a distance of at least 10 km. An assembly that is adapted and arranged for telecommunication may communicate the data using at least one or all of the following: at least one modulator, at least one photodetector, at least one arrangement comprising a first waveguide and a further waveguide. Alternatively, an assembly that is adapted and arranged for telecommunication may communicate the data using at least one further communication means and at least one or all of the following: at least one modulator, at least one photodetector, at least one arrangement comprising a first waveguide and a further waveguide. Examples of a further communication means include an antenna, an optical cable (such as an optical fibre), a wired connection.

An assembly that is adapted and arranged for high-performance computing preferably comprises at least one supercomputer and/or at least one computer cluster. A supercomputer should preferably be understood as a computer that can perform at least 10¹⁴ floating-point operations per second. An assembly for high-performance computing is preferably adapted and arranged for parallel computing.

An assembly that is adapted and arranged for a data centre is preferably adapted and arranged to store data, and more preferably, to communicate data.

An assembly that is adapted and arranged for artificial intelligence is preferably an assembly that can be used to obtain artificial intelligence models, more preferably to obtain machine learning models, using e.g., supervised learning, semi-supervised learning, and unsupervised learning.

A switch is preferably adapted and arranged for, e.g., optically connecting two networks and/or optically connecting a computational means (such as a computer) and a network.

An optical interconnect is preferably adapted and arranged for optically connecting at least one or all of the following: two integrated circuits, two computer chips. Here the two integrated circuits and/or two computer chips may be parts of a system-in-package or a chiplet. Here the two integrated circuits may be part of the same chip.

A first assembly and a fifth assembly according to the invention allow for an increased data transfer rate, an improved signal-to-noise ratio, a reduced crosstalk and a reduced energy consumption. A first assembly and a fifth assembly also allow for a communication of data over increased distances, while simultaneously allowing for at least one of all of the following: a reduced energy consumption, an increased data transfer rate, an improved signal-to-noise ratio.

### Optical data communication module

An optical data communication module should preferably be understood as a data communication module that communicates data via optical signals. An optical data communication module is preferably adapted and arranged to communicate data via an optical signal by using an arrangement according to the invention. An optical data communication module is preferably adapted and arranged to send data via an optical signal using a modulator. An optical data communication module is preferably adapted and arranged to receive data via an optical signal using a photodetector. An optical data communication module is preferably adapted and arranged to facilitate data transmission via an optical signal using an arrangement comprising a first waveguide and a further waveguide.

An optical data communication module is preferably adapted and arranged to communicate data between one or more components, such as electrical components. Here the electrical components may be, e.g., one or more chips; one or more dies; one or more integrated circuits located in, e.g., a robotic body, a robotic system, an assembly; a sensing means and an integrated circuit; a sensing unit and a control system.

An optical data communication module may comprise at least one or all of the following: an optical fibre, an optical interconnect.

An optical data communication module according to the invention allows for an increased bandwidth, reduced energy consumption, and a reduced error rate in the data communicated.

### Electromagnetic waves from target area

Further electromagnetic waves detected by a sensing means and/or sensing unit from a target area include, amongst other, electromagnetic waves reflected by an item in the target area, and/or electromagnetic waves emitted by an item in the target area.

### Optical sensing module

An optical sensing module may comprise at least one or all of the following: photodiodes, phototransistors, image sensors, optical fibre sensors, laser diodes, optical biosensor, optical position sensors, optical touch sensors, photomultiplier tubes, avalanche photodiodes, charge-coupled devices, complementary metal-oxide-semiconductor sensors, thermal infrared detectors: photon counting detectors, superconducting nanowire single-photon detectors.

Examples of optics include lenses, prisms, and diffraction gratings.

An example of an optical sensing module is disclosed in WO2023076132 A1.

An optical sensing module according to the present invention allows for improved sensing capabilities and performance. Specifically, the optical sensing module according to the present invention allows for enhanced sensitivity, improved signal-to-noise ratio, reduced crosstalk and reduced energy consumption, allowing for an improved performance and versatility in various sensing applications.

### Apparatus adapted and arranged for a medical application

A medical application should preferably be understood as including at least one or all of the following: monitoring a health of a patient, diagnosing a pathological condition in a patient; maintaining a state of health of a patient; sending and/or receiving data from a further apparatus, preferably a further apparatus adapted and arranged for a medical application; controlling a further apparatus, preferably a further apparatus adapted and arranged for a medical application. Here a patient is preferably a mammal, and more preferably a human. The apparatus may be implantable in a patient (internal use) and/or may be for use outside a body of a patient.

Examples of a physical property of a body include an oxygen concentration (e.g., of blood, tissue), a temperature of the body, a heart rate of the body, a blood glucose level. Examples of a sensing means adapted and arranged to measure at least one physical property of a body include a blood glucose monitor, a heart rate monitor, a thermometer, an oximeter.

The apparatus is preferably adapted and arranged to communicate data via an optical signal by using an arrangement according to the invention. The apparatus preferably comprises one or more integrated circuits adapted and arranged to control the arrangement according to the invention.

An apparatus, adapted and arranged for a medical application, and according to the present invention, allows for an improved patient safety, an improved monitoring of the health of a patient and an improved diagnosing of a pathological condition in a patient. An apparatus according to the invention also allows for an improved sensitivity, an increased data transfer rate, an improved signal-to-noise ratio, a reduced crosstalk and a reduced energy consumption.

### Vehicle adapted and arranged for flight

A vehicle, adapted and arranged for flight, is preferably adapted and arranged to communicate data via an optical signal by using an arrangement according to the invention. Here the communication of data may be a communication of data within the vehicle, between the vehicle and another entity (e.g., another vehicle, a ground station), or both. It is particularly preferred that the communication of data is within the vehicle, e.g., between a sensing unit and an integrated circuit in the vehicle.

Flight should preferably be understood to include both controlled flight and uncontrolled flight. Here controlled flight should preferably be understood to mean that a movement of the vehicle can be controlled by, e.g., a human operator and/or an integrated circuit (such as a processing unit). For example, an airplane is adapted and arranged for controlled flight by a human and/or an autopilot. Here the vehicle may be controlled remotely. Uncontrolled flight should preferably be understood to mean that a movement of the vehicle is generally not controlled by, e.g., a human operator and/or an integrated circuit (such as a processing unit). For example, a weather balloon is generally adapted and arranged for uncontrolled flight. Flight should preferably be understood to include flight in the atmosphere, as well as above the atmosphere. Flight should preferably be understood to include an orbit of the vehicle, e.g., around the Earth.

Examples of a propulsion means include an engine, jet propulsion, burners of a hot-air balloon, an envelope of a hot-air balloon, a balloon. Here engines include, but are not limited to, jet engines and turbine engines.

An example of a means for generating lift is wings.

A control system preferably comprises a control means and/or a control module. Examples of a control means include a rudder, an elevator, and an aileron. Example of a control module is an integrated circuit that is adapted and arranged to control a movement of a control means.

A vehicle adapted and arranged for flight may be used for commercial and/or defence purposes.

A vehicle, adapted and arranged for flight, and according to the present invention, allows for an improved safety of the vehicle, including passengers in the vehicle, an improved control of the vehicle, an improved control of the vehicle when operated remotely, and an improved communication with the vehicle (e.g., including a tracking of the vehicle, a faster data transfer rate, less disruption when communication with the vehicle).

### Robotic system

A term robotic system should preferably be understood to comprise a robotic body that is designed to perform tasks autonomously and/or under remote control. In a preferred aspect of the robotic system, the robotic system is adapted and arranged for an autonomous movement of the robotic body.

A robotic system may be used for commercial and/or defence purposes. For example, a robot system can comprise an industrial robot, a service robot, a personal and domestic robot, an educational robot, a research robot, an entertainment robot. A robotic body may be a robotic arm. Robotic arms typically comprise multiple segments connected by joints, resembling a human arm.

In a preferred aspect of the robotic system, the robotic system comprises a data communication module, more preferably an optical data communication module. In this aspect, it is particularly preferred that the data communication module is arranged in the robotic body. In this aspect, it is alternatively preferred that the data communication module is arranged at a location that is removed from the robotic body (e.g., does not touch the robotic body). In this aspect, it is alternatively preferred that the data communication module is partly arranged in both the robotic body (e.g., some sub-modules of the data communication module are arranged in the robotic body, while other sub-modules of the data communication module are arranged at a location that is removed from the robotic body). In this aspect, it is preferred that the data communication module is adapted and arranged for at least one or all of the following: data communication in the robotic body (more preferred), data communication between the robotic body and an external entity. An example of the communicating of data in the robotic body is the transfer of data between different parts of the robotic body (e.g., between different computer chips located in the robotic body). An example of the communicating of data between the robotic body and an external entity is the transfer of data between the robotic body and a computer that is located outside the robotic body.

In a particularly preferred aspect of the robotic system, the robotic body comprises a sensing unit. In another preferred aspect of the robotic system, the sensing unit is arranged at a location that is removed from the robotic body (e.g., does not touch the robotic body). In another preferred aspect of the robotic system, the sensing unit is partly arranged in both the robotic body (e.g., some sub-modules of the sensing unit are arranged in the robotic body, while other sub-modules of the sensing unit are arranged at a location that is removed from the robotic body).

In a particularly preferred aspect of the robotic system, the robotic body comprises a control module. In another preferred aspect of the robotic system, the control module is arranged at a location that is removed from the robotic body (e.g., does not touch the robotic body). In another preferred aspect of the robotic system, the control module is partly arranged in both the robotic body (e.g., some sub-modules of the control module are arranged in the robotic body, while other sub-modules of the control module are arranged at a location that is removed from the robotic body).

In a particularly preferred aspect of the robotic system, at least one or all of the following forms part of the robotic body: a data communication module, the sensing unit, the control module. In an alternatively preferred aspect of the robotic system, the robotic body does not comprise the data communication module, the sensing unit, or the control module.

The robotic system according to the present invention allows for improved reliability of the robotic system, improved communication (e.g., data transfer rate) in the robotic system, improved safety, increased versatility of the robotic system, and a reduced energy usage of the robotic system.

### Second assembly

A second assembly is preferably adapted and arranged for optical computing. A second assembly as used herein should preferably be understood as a computational architecture that uses the principles of optics and photonics for at least one or all of the following: data processing, data transmission, data storage.

In a preferred aspect of the second assembly, the at least one or more memory units is at least one or more optical memory units and the at least one of more processors is at least one or more optical processors.

In a preferred aspect of the second assembly, a memory unit comprises at least one or all of the following: a modulator, a photodetector, an arrangement comprising a first waveguide and further waveguide. In a preferred aspect of the second assembly, a processor comprises at least one or all of the following: a modulator, a photodetector, an arrangement comprising a first waveguide and further waveguide.

An optical processor preferably comprises at least one or all of the following: an optical switch, an optical transistor. Examples of optical processor include photonic integrated circuits (PICs), Fourier optical processors, optical neural networks (ONNs), all-optical switches, and quantum optical processors.

Examples of an optical memory unit include holographic memory, photorefractive crystals, optical RAM (ORAM), phase change materials and optical fibre delay lines.

In a preferred aspect of the second assembly, at least one arrangement according to the invention is arranged in at least one or all of the following: the at least one processor, the at least one memory unit, the data communications module. If "at least one arrangement is arranged in the at least one processer and the at least one memory unit", this should preferably be understood to mean that at least one arrangement is arranged in at least one processor and at least one arrangement is arranged in at least one memory unit (i.e., the second assembly comprises at least two arrangements according to the invention). If "at least one arrangement is arranged in the at least one processer and the data communication module", this should preferably be understood to mean that at least one arrangement is arranged in at least one processor and at least one arrangement is arranged in at data communication module (i.e., the second assembly comprises at least two arrangements according to the invention). If "at least one arrangement is arranged in the data communication module and the at least one memory unit", this should preferably be understood to mean that at least one arrangement is arranged in the data communication module and at least one arrangement is arranged in at least one memory unit (i.e., the second assembly comprises at least two arrangements according to the invention). If "at least one arrangement is arranged in the at least one processer, the at least one memory unit, and the data communication module", this should preferably be understood to mean that at least one arrangement is arranged in at least one processor, at least one arrangement is arranged in at least one memory unit, and at least one arrangement is arranged in the data communication module (i.e., the second assembly comprises at least three arrangements according to the invention).

The second assembly according to the invention allows for an increased computational speed, improved energy efficiency, improved scalability, and an improved resistance to electromagnetic interference.

Optical computing is described in, e.g., WO2023145206 A1 and WO2021245701 A1.

### Third assembly

Homomorphic encryption should preferably be understood as a form of encryption that allows mathematical operations to be performed on encrypted data without decrypting said data first. E.g., it enables computations to be carried out directly on ciphertext, yielding an encrypted result that, when decrypted, corresponds to the result of the operations performed on the unencrypted data. Photonic homomorphic encryption should preferably be understood as an encryption technique that combines principles of both photonics and homomorphic encryption to enable computations on encrypted data using optical signals. In photonic homomorphic encryption, encryption and/or decryption are performed using photonic components and techniques, while homomorphic properties are preserved to allow computations on the encrypted data without decryption. A third assembly adapted and arranged for photonic homomorphic encryption is preferably used for at least one or all of the following: secure data processing, cloud computing, secure multiparty computation, and privacy-preserving data analysis.

Examples of photonic encryption and/or decryption modules include optical phase encoders and/or decoders, optical polarization encoders and/or decoders, optical frequency encoders and/or decoders, optical chaos-based encryption and/or decryption modules, a quantum key distribution system, and an optical one-time pad system.

In a preferred aspect of the third assembly, the third assembly comprises at least one or all of the following: a modulator, a photodetector, an arrangement comprising a first waveguide and further waveguide.

In a preferred aspect of the third assembly, at least one arrangement according to the invention is arranged in at least one or all of the following: the homomorphic operation module, the photonic encryption module, the photonic decryption module. If "at least one arrangement is arranged in the homomorphic operation module and the photonic encryption module", this should preferably be understood to mean that at least one arrangement is arranged in the homomorphic operation module and at least one arrangement is arranged in the photonic encryption module (i.e., the third assembly comprises at least two arrangements according to the invention). If "at least one arrangement is arranged in the homomorphic operation module and the photonic decryption module", this should preferably be understood to mean that at least one arrangement is arranged in the homomorphic operation module and at least one arrangement is arranged in the photonic decryption module (i.e., the third assembly comprises at least two arrangements according to the invention). If "at least one arrangement is arranged in the photonic encryption module and the photonic decryption module", this should preferably be understood to mean that at least one arrangement is arranged in the photonic encryption module and at least one arrangement is arranged in the photonic decryption module (i.e., the third assembly comprises at least two arrangements according to the invention). If "at least one arrangement is arranged in the homomorphic operation module, the photonic encryption module, and the photonic decryption module", this should preferably be understood to mean that at least one arrangement is arranged in the homomorphic operation module, at least one arrangement is arranged in the photonic encryption module, and at least one arrangement is arranged in the photonic decryption module (i.e., the third assembly comprises at least three arrangements according to the invention).

A light emitting means that is in optical connection with the homomorphic operation module is preferably in optical connection with at least one arrangement, according to the invention, that is arranged in the homomorphic operation module. A light emitting means that is in optical connection with the photonic encryption module is preferably in optical connection with at least one arrangement, according to the invention, that is arranged in the photonic encryption module. A light emitting means that is in optical connection with the photonic decryption module is preferably in optical connection with at least one arrangement, according to the invention, that is arranged in the photonic decryption module.

The third assembly according to the present invention allows for an increased computational speed, improved energy efficiency, improved scalability, improved resistance to electromagnetic interference, improved encryption, improved encryption and decryption speed, enhanced security, and an improved compatibility with optical networks.

Homomorphic encryption is described in, e.g., WO2022213048 A1, US20220116198 A1, US20220366059 A1, and US20240022394 A1.

### Optical connection module

An optical connection module should preferably be understood as a link that utilises optical signals, typically transmitted through waveguides, optical fibres and/or free-space optical channels, to transmit data e.g., between electronic devices and/or components, such as between processors, memory modules, input/output devices, and networking equipment.

A transmitter is adapted and arranged to convert electrical signals received from, e.g., an electrical component and/or an integrated circuit, into optical signals. A receiver is adapted and arranged to convert optical signal into electrical signals that are transmitted to, e.g., an electrical component and/or an integrated circuit. A transceiver is adapted and arranged to both convert electrical signals into optical signals and optical signals into electrical signals. The optical connection module according to the invention allows for an increased bandwidth, a decreased latency, increased transmission distances, less susceptibility to electromagnetic interference, increased security, increased compactness, decreased insertion loss, and increased energy efficiency.

Optical connection modules are described in, e.g., WO2023124580 A1, WO2023122711 A1, and US20230314711 A1.

### First and further transportation means

A transportation means includes a vehicle (e.g., a car, a truck), a train, an airplane, a ship, a bicycle, a drone, a satellite. Examples of autonomous movement include autonomous driving, autonomous flying, autonomous sailing, autonomous walking.

A processing module is preferably adapted and arranged for executing instructions and performing computations. A processing module preferably comprises a processing unit. In a preferred aspect of the first transportation means, the processing module comprises at least one arrangement according to the invention. In a preferred aspect of the first transportation means, the processing module comprises at least one light emitting means.

Examples of a human-machine interface include a screen, preferably a touch screen, a device adapted and arranged to play a sound, a device adapted and arranged to emit a signal, preferably a light signal. Examples of a steering means include a steering wheel, a rudder, handlebars, ailerons. Examples of a propulsion means include a combustion engine, a jet engine, a sail, a drivetrain of a bicycle.

A sensing unit may comprise at least one or all of the following: photodiodes, phototransistors, image sensors, optical fibre sensors, laser diodes, optical biosensor, optical position sensors, optical touch sensors, photomultiplier tubes, avalanche photodiodes, charge-coupled devices, complementary metal-oxide-semiconductor sensors, thermal infrared detectors, photon counting detectors, superconducting nanowire single-photon detectors.

A perception sub-module is adapted and arranged to analyse and/or process data of a target area obtained by a sensing unit, wherein said data may be images, sounds, and/or other sensor readings. The output of a perception sub-module is preferably structured data that represents the interpretation and/or analysis of the data obtained by the sensing unit, such as item detection and recognition, scene information, localization and mapping data, preferably including road geometry and/or landmarks, feature extraction results (including edges, corners, textures, shapes, and/or keypoints), and/or pattern recognition output.

A generation sub-module may be used in e.g., autonomous systems. The generation sub-module is adapted and arranged to process and/or analyse the data provided by the perception module in order to, e.g., determine actions and/or responses based on predefined objectives, rules, and/or constraints. For example, the generation sub-module outputs driving commands, including trajectory planning, path selection, and control commands for steering, acceleration, and braking in autonomous vehicles. Subsequently, a control unit may execute a driving command generated by the generation sub-module and control the transportation means' motion accordingly.

A further transportation means preferably comprises an integrated circuit that is adapted and arranged to be in data communication with an arrangement. A further transportation means preferably comprises a light emitting means that is adapted and arranged to be in optical connection with the arrangement.

The first and further transportation means according to the present invention allow for improved safety, enhanced traffic efficiency, reduced environmental impact, increased accessibility, enhanced user experience, increased scalability, and increased adaptability.

A transportation means is described in, e.g., DE102021121918 A1.

### Fourth assembly

The fourth assembly preferably comprises a light emitting means that is adapted and arranged to be in optical connection with the arrangement.

Examples of artificial intelligence (AI) include perceiving, synthesizing, inferring, predicting and/or generating information using, e.g., machine learning. For example, a fourth assembly may use a combination of hardware and software to perform operation to perceive, synthesize, infer, predict, and/or generate information.

The fourth assembly according to the present invention allows for a handling of increased volumes of data, faster processing speeds, reduced susceptibility to electromagnetic interference, and lower energy consumption. The fourth assembly according to the present invention allows for massive parallelism (e.g., parallel computing) and high-speed data processing, such as big data analytics, neural network training, and real-time simulations.

An assembly for machine AI and machine learning is described in, e.g., US20230114847 A1, WO2018187487 A1, and US20220188155 A1.

### Removal of a section / reducing thickness of a section

In a preferred aspect of the invention, one or more sections of a first waveguide layer is removed using at least one or all of the following: patterning, lithography (e.g., deep UV lithography, extreme ultraviolet lithography, electron beam lithography), two photon polymerisation, laser ablation, reactive ion etching, ion milling.

In a preferred aspect of the invention, a section of the first waveguide is removed using at least one or all of the following: patterning, lithography (e.g., deep UV lithography, extreme ultraviolet lithography, electron beam lithography), laser ablation, reactive ion etching, ion milling.

In a preferred aspect of the invention, a thickness of one or more sections of a layer of the further kind are reduced using at least one or all of the following: patterning, lithography (e.g., deep UV lithography, extreme ultraviolet lithography, electron beam lithography), laser ablation, reactive ion etching, ion milling.

In a preferred aspect of the invention, one or more section of an element layer and/or element are removed using oxygen plasma etching. This aspect is particularly preferred if the element layer and/or element is an element (layer) of the first kind, and even further preferably if the element (layer) of the first kind comprises graphene.

### Superimposing of a layer

An example of superimposing a layer is a deposition of a layer. Various methods for superimposing a layer (e.g., a waveguide layer, a layer of the first kind, a layer of a further kind) are well known in the art. Any method, which the skilled person deems suitable for the present invention, may be used. Suitable methods include atomic layer deposition, chemical vapour deposition, physical vapour deposition, surface activation by plasma, sacrificial layers or molecular monolayers, a combination of at least two thereof.

Examples of lithography include nanoimprint lithography, laser lithography, electron beam lithography, and optical lithography.

Atomic layer deposition, chemical vapour deposition, physical vapour deposition, and lithography are well-known to the skilled person. Any device which the skilled person deems suitable can be used for the layer deposition.

In a preferred aspect of the invention, a first waveguide layer is superimposed using at least one or all of the following: chemical vapour deposition, physical vapour deposition, atomic layer deposition, spin coating.

In a preferred aspect of the invention, a layer of the first kind is superimposed using at least one or all of the following: chemical vapour deposition, physical vapour deposition, atomic layer deposition, spin coating. In this aspect, atomic layer deposition is particularly preferred.

In a preferred aspect of the invention, a layer of the second kind is superimposed using at least one or all of the following: chemical vapour deposition, physical vapour deposition, atomic layer deposition, spin coating.

In a preferred aspect of the invention, a layer of the further kind is superimposed using at least one or all of the following: chemical vapour deposition, physical vapour deposition, atomic layer deposition, spin coating.

### Patterning

Various patterning methods for, e.g., removing a section of a layer, are well known in the art. Any patterning method, which the skilled person deems suitable for the present invention, may be used.

A preferred patterning method uses lithography. Various lithography methods are also well known in the art. Any lithography method, which the skilled person deems suitable for the present invention, may be used. These lithography methods include, but are not limited to, photolithography (such as deep ultraviolet lithography, extreme ultraviolet lithography), electron beam lithography, nanoimprint lithography, interference lithography, magneto-lithography, scanning probe lithography, surface-charge lithography, and diffraction lithography.

A preferred patterning method comprises the steps of depositing a masking layer, such as a photoresist, on a layer; removing at least one section of the masking layer to expose at least one section of the layer; etching the at least one exposed section of the layer. After the at least one exposed section of the layer has been etched, it is preferred to remove the masking layer.

### Etching

Various etching methods (e.g., for reducing a thickness of a layer and/or a section of layer, for removing a layer and/or a section of a layer) are well known in the art. Any etching method, which the skilled person deems suitable for the present invention, may be used. These etching methods include wet etching methods and dry etching methods. Examples of suitable dry etching methods include plasma etching, reactive-ion etching, ion beam etching, and vapour phase etching. A preferred etching method uses at least one masking layer to mask at least one section of the layer being etched.

An etchant should preferably be understood as a processing chemical substance that is used during an etching method. A preferred etchant can be a liquid, a gas, or a combination thereof.

Preferred processing chemical substances that are suitable to be used for a wet etching method include, but are not limited to, hydrofluoric acid, buffered hydrofluoric acid, buffered oxide etch, ammonium fluoride, phosphoric acid, and combinations of at least two or more thereof. Preferred processing chemical substances that are suitable to be used for a dry etching method include, but are not limited to, boron trichloride (BCl₃), hydrofluoric acid, buffered hydrofluoric acid, buffered oxide etch, ammonium fluoride, phosphoric acid, chlorine (Cl₂), sulphur hexafluoride (SF₆), hydrobromic acid (HBr), tetrafluoromethane (CF₄), trifluoromethane (CHF₃), 1,2-difluoroethylene (C₂H₂F₂), methyl fluoride (CH₃F), and combinations of at least two or more thereof.

### Vapour deposition

Various chemical vapour deposition (CVD) methods for e.g., depositing a layer, are well known in the art. Any CVD method, which the skilled person deems suitable for the present invention, may be used. These CVD methods include, but are not limited to, atmospheric pressure CVD (APCVD), low-pressure CVD (LPCVD), ultrahigh vacuum CVD (UHCVD), plasma-enhanced CVD (PECVD), atomic-layer deposition (ALD), and metalorganic CVD (MOCVD).

Various physical vapour deposition (PVD) methods for, e.g., depositing a layer, are well known in the art. Any PVD method, which the skilled person deems suitable for the present invention, may be used. These PVD methods include, but are not limited to, sputtering and evaporation deposition methods. Evaporation deposition methods pertain to the evaporation and condensation of a chemical substance on a component. Suitable sputtering deposition methods include, but are not limited to, high-power impulse magnetron sputtering, high-target-utilisation sputtering, ion beam sputtering, reactive sputtering, ion-assisted deposition, and gas flow sputtering.

### Chemical-mechanical polishing

Chemical-mechanical polishing (CMP) should preferably be understood as a method that uses a combination of chemical and mechanical forces. A preferred CMP method is adapted and arranged for at least one or all of the following: to reduce a thickness of a layer and/or a thickness of a section of a layer; to remove a layer and/or a section of a layer; to increase a smoothness of a surface of a layer and/or a section of a layer; to increase a flatness of a layer and/or a section of a layer.

A preferred CMP method uses a slurry in combination with a rotating pad. A preferred pad comprises a polymer. A preferred slurry comprises at least one liquid and particles mixed with the at least one liquid. A preferred slurry is in the form of a colloid. The particles in a preferred slurry comprise at least one or all of the following: aluminium oxide, cerium oxide, zirconium oxide, titanium oxide, thorium oxide, silica, ceria, a combination of at least two thereof.

Any CMP process parameters, including the chemical composition of the slurry and the rotation rate of the rotating pad, which the skilled person deems suitable for the present invention, may be used. Suitable slurries are commercially available from, e.g., BASF SE (Germany) and Hitachi Chemical Co Ltd (Japan). Any CMP machine, which the skilled person deems suitable for the present invention, may be used. Examples of a CMP machine include the F-REX200M2 or F-REX300X, both commercially available from Ebara Engineering Singapore Pte Ltd.

### Preferred embodiments

A preferred embodiment A1 of the invention is an arrangement comprising
a. a first waveguide adapted and arranged for the propagation of electromagnetic waves;
b. at least one electrically conductive element, wherein, in a cross-sectional cut of the arrangement, the first waveguide and the at least one electrically conductive element are arranged to overlap;
wherein
the first waveguide comprises a recess that at least partially faces, preferably faces, the at least one electrically conductive element,
a depth of the recess is less than a height of the first waveguide,
the depth of the recess and the height of the first waveguide are measured parallel to the further direction, and
the further direction is perpendicular to the first direction.

The 2^{nd} to 5^{th}, 7^{th} to 29^{th}, and 34^{th} to 42^{nd} preferred embodiments of the invention are also further preferred embodiments of the preferred embodiment A1.

A preferred embodiment A2 of the invention is an arrangement comprising
a. a first waveguide adapted and arranged for the propagation of electromagnetic waves;
b. a layer of the first kind;
c. at least one electrically conductive element, wherein, in a cross-sectional cut of the arrangement,
   i. the first waveguide and the at least one electrically conductive element are arranged to overlap;
   ii. the at least one electrically conductive element is arranged between the first waveguide and the layer of the first kind,
wherein
the first waveguide has a first refractive index n₁,
the layer of the first kind has a second refractive index n₂, and
n₁ and n₂ vary by 30 % or less, preferably by 27 % or less, more preferably by 25 % or less, and further preferably by 23 % or less.

The 2^{nd} to 29^{th}, and 35^{th} to 42^{nd} preferred embodiments of the invention are also further preferred embodiments of the preferred embodiment A2.

A preferred embodiment A3 of the invention is an arrangement comprising
a. a first waveguide
   a. that is adapted and arranged for the propagation of electromagnetic waves, and
   b. that has a first refractive index n₁;
b. a layer of the first kind that has a second refractive index n₂,
c. at least one electrically conductive element, wherein, in a cross-sectional cut of the arrangement,
   i. the first waveguide and the at least one electrically conductive element are arranged to overlap;
   ii. the at least one electrically conductive element is arranged between the first waveguide and the layer of the first kind,
wherein
the first waveguide comprises a recess that at least partially faces, preferably faces, the at least one electrically conductive element,
a depth of the recess is less than a height of the first waveguide,
the depth of the recess and the height of the first waveguide are measured parallel to the further direction,
the further direction is perpendicular to the first direction, and
wherein n₁ and n₂ preferably vary by 30 % or less, more preferably by 27 % or less, even more preferably by 25 % or less, and further preferably by 23 % or less.

The 2^{nd} to 5^{th}, 7^{th} to 29^{th}, and 35^{th} to 42^{nd} preferred embodiments of the invention are also further preferred embodiments of the preferred embodiment A3.

A preferred embodiment A4 of the invention is an arrangement comprising
a. a first waveguide adapted and arranged for the propagation of electromagnetic waves;
b. at least one element of a further kind, wherein,
   i. in a cross-sectional cut of the arrangement, the first waveguide and the at least one element of the further kind are arranged to overlap, and
   ii. the at least one element of the further kind is a further waveguide;
wherein
the first waveguide comprises a recess that at least partially faces, preferably faces, the at least one element of the further kind,
a depth of the recess is less than a height of the first waveguide,
the depth of the recess and the height of the first waveguide are measured parallel to the further direction, and
the further direction is perpendicular to the first direction.

The 2^{nd} to 5^{th}, and 31^{st} to 42^{nd} preferred embodiments of the invention are also further preferred embodiments of the preferred embodiment A4.

### TEST METHODS

The test methods which follow were utilized within the context of the invention. Unless stated otherwise, the measurements were conducted at an ambient temperature of 23 °C, an ambient air pressure of 100 kPa (0.986 atm) and a relative air humidity of 50 %.

### Dimensions and distance

For producing a sample lamella, a focused ion beam is used to make a cut through the arrangement. The thickness of the sample lamella is 50 nm. The sample lamella preparation is conducted automatically using the Thermo Scientific AutoTEM 5 software from Thermo Fisher Scientific Inc.

Dimensions (such as length, width and height) of, *e.g.*, a first waveguide, a recess, and an element are measured using scanning electron microscopy (SEM).

Width of, e.g., a first waveguide, a recess, and an element are measured parallel to a first direction. Length of, e.g., a first waveguide, a recess, and an element are measured parallel to a second direction (that is perpendicular to the first direction). Height, depth, and thickness of, e.g., a first waveguide, a recess, and an element are measured parallel to the further direction (that is perpendicular to both the first direction and the second direction).

### Refractive index

The refractive indices used herein are for a wavelength of 1550 nm.

The refractive index of a material is measured using ellipsometry. A model VUV-VASE ellipsometer, commercially available from J.A. Woollam Co. (USA) is used. For the measurement, a 100 nm thick film of the material is irradiated using electromagnetic waves with a wavelength of 1550 nm. For the materials indicated below, the following models are used for the ellipsometry analysis:
i. oxides (e.g., SiOₓ, AlOₓ): the Cauchy model with three coefficients (commonly denoted by *A, B,* and C),
ii. nitrides (e.g., SiNₓ): the Tauc-Lorentz model,
iii. amorphous materials (e.g., α-Si): the Cody-Lorentz model.

Further details may be found in, e.g., An Introduction to Modeling in Spectroscopic Ellipsometry, Focusing on Models for Transparent Materials: the Cauchy and Sellmeier Models", Cushman, C., Smith, N., Kaykhaii, M., Podraza, N., and Linford. M. (2016), Vacuum Technology and Coating, 7.

### Modes

To determine the modes, as well as the intensity of the modes, in a waveguide the simulation software Lumerical MODE, commercially available from Ansys Inc. (USA), is used. The simulation software uses a finite difference eigenmode solver. Three-dimensional simulations are performed, wherein the spatial grid uses a perfectly matched layer (PML) boundary condition for all three spatial dimensions. The spatial mesh size should be 1 % of the smallest wavelength of the electromagnetic waves that are propagated in the waveguide.

With the maximum intensity of the TE0 mode normalised to 1, the dimensions of the spatial grid should be chosen sufficiently large such that intensities of the TE0 mode with values of 10⁻⁷ or higher are present in the spatial region simulated. If the TE0 mode is not present, then the lowest order TE mode present should be used as the reference to determine the dimensions of the spatial grid. For example, if the TE0 mode is not present, the TE1 mode should be used as the reference. For example, if neither the TE0 mode nor the TE1 mode are present, the TE2 mode should be used as the reference. If no TE mode is present, the lowest order TM mode present should be used as the reference.

The simulations are also used to determine the first distance, the second distance, the third distance, the fourth distance, the fifth distance, and the sixth distance.

The invention is now illustrated by non-limiting examples and exemplifying embodiments.

### FIGURES

### List of figures

The figures serve to exemplify the present invention and should not be viewed as limiting the invention (e.g., the figures show preferred embodiments and preferred aspects of the invention). The figures are not drawn to scale. Unless specific otherwise, the same reference numbers indicate the same features in the figures.
Fig. 1A: schematic illustration showing a cross-section of a first embodiment of an arrangement according to the invention.
Fig. 1B: schematic illustration showing a cross-section of a second embodiment of an arrangement according to the invention.
Fig. 2A: schematic illustration showing a cross-section of a third embodiment of an arrangement according to the invention.
Fig. 2B: schematic illustration showing a cross-section of the third embodiment of the arrangement according to the invention, viewed from the side.
Fig. 2C: schematic illustration showing a cross-section of an alternative of the third embodiment of the arrangement according to the invention.
Fig. 3A: schematic illustration showing a cross-section of a fourth embodiment of an arrangement according to the invention.
Fig. 3B: schematic illustration showing a cross-section of a fifth embodiment of an arrangement according to the invention.
Fig. 4A: schematic illustration showing a cross-section of a sixth embodiment of an arrangement according to the invention.
Fig. 4B: schematic illustration showing a cross-section of a seventh embodiment of an arrangement according to the invention.
Fig. 5: schematic illustration showing how dimensions of a first waveguide according to the invention are determined.
Fig. 6A: schematic illustration showing a first waveguide and an element that overlap each other. Fig. 6B: schematic illustration showing a first waveguide and an element that do not overlap each other.
Fig. 7A: schematic illustration showing a first waveguide with a recess that faces an element.
Fig. 7B: schematic illustration showing a first waveguide with a recess that does not face an element.
Figs 8A and 8B: schematic illustrations showing an intensity of a mode of an electromagnetic wave propagating in an arrangement according to the invention.
Figs 9A - 9D: schematic illustrations showing various alternative embodiments of the first waveguide.
Fig. 10: schematic illustration of a method for producing an arrangement according to the invention.
Figs 11 and 12: variations of the method shown in Fig. 10.
Fig. 13: flow diagram showing the steps of a method for producing an arrangement according to the invention.

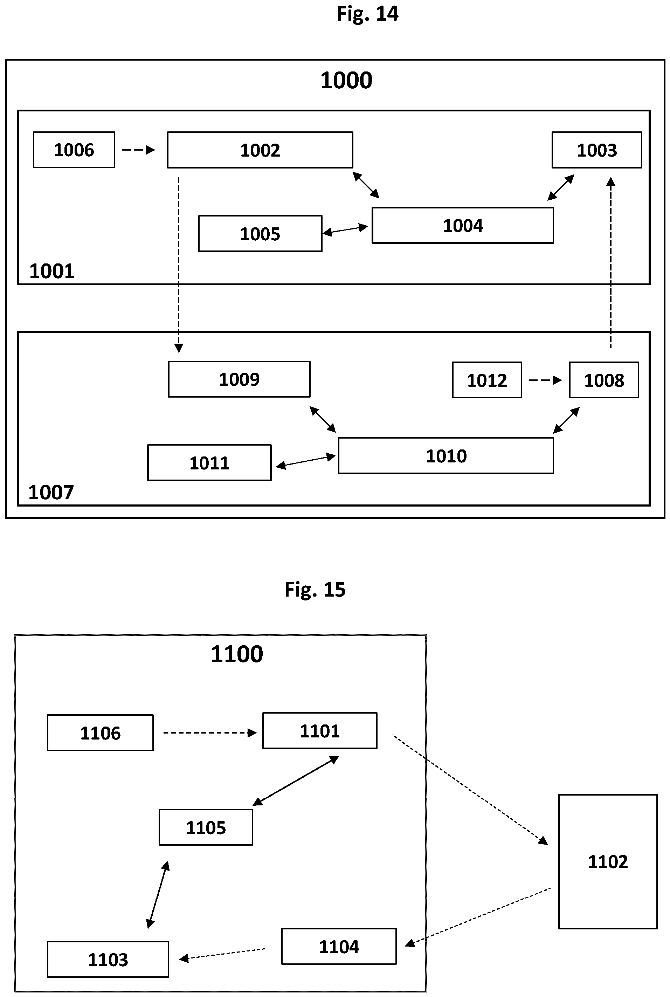

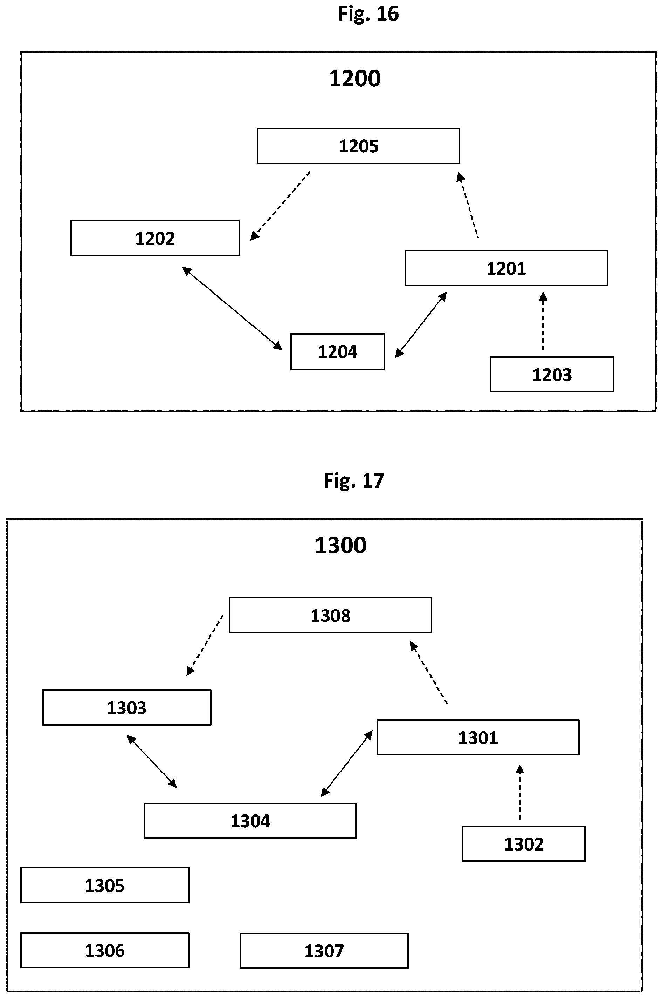

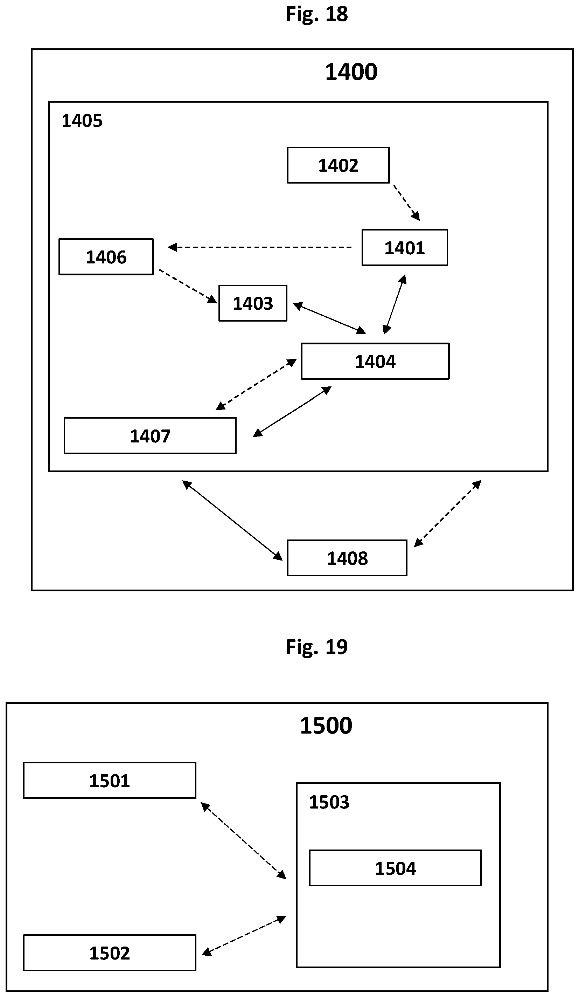

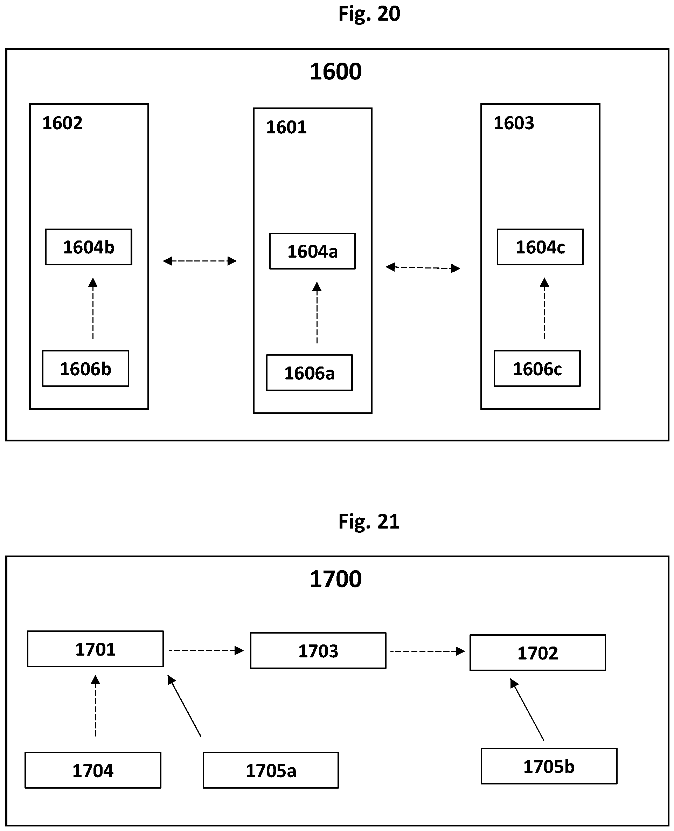

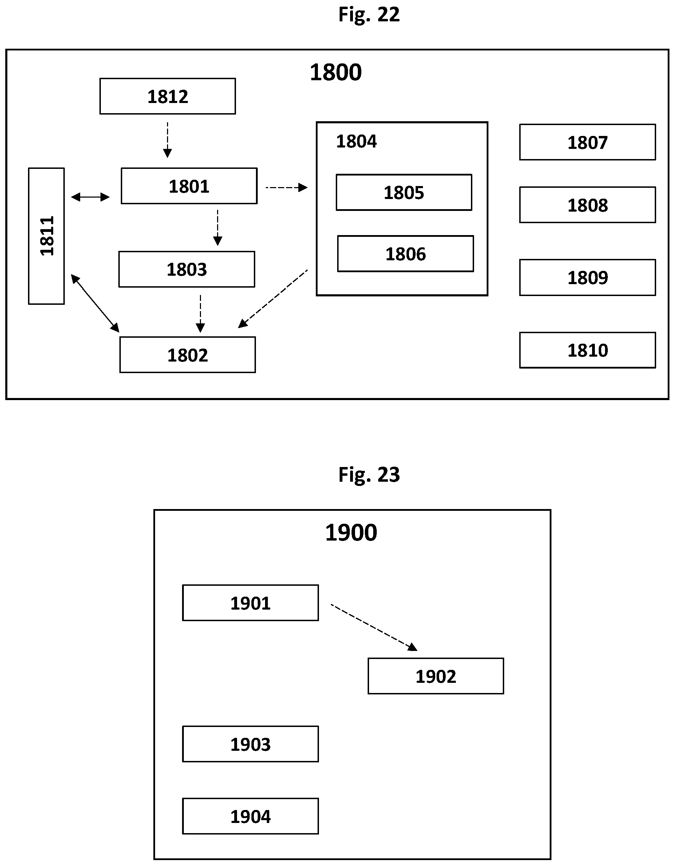

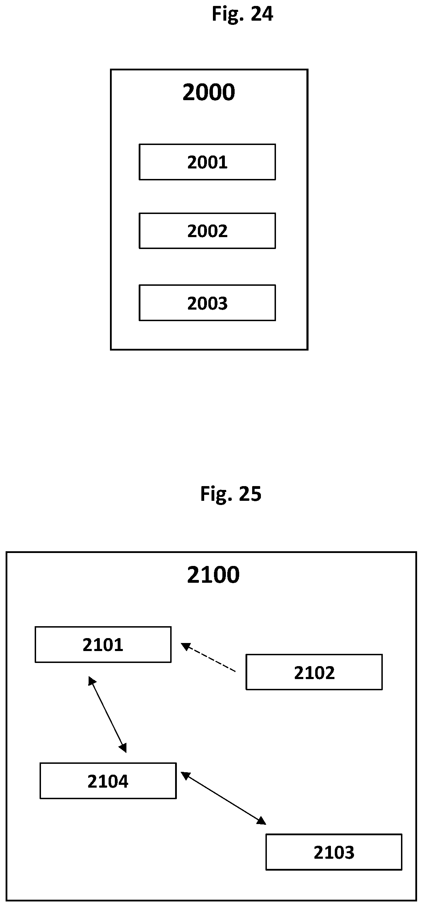

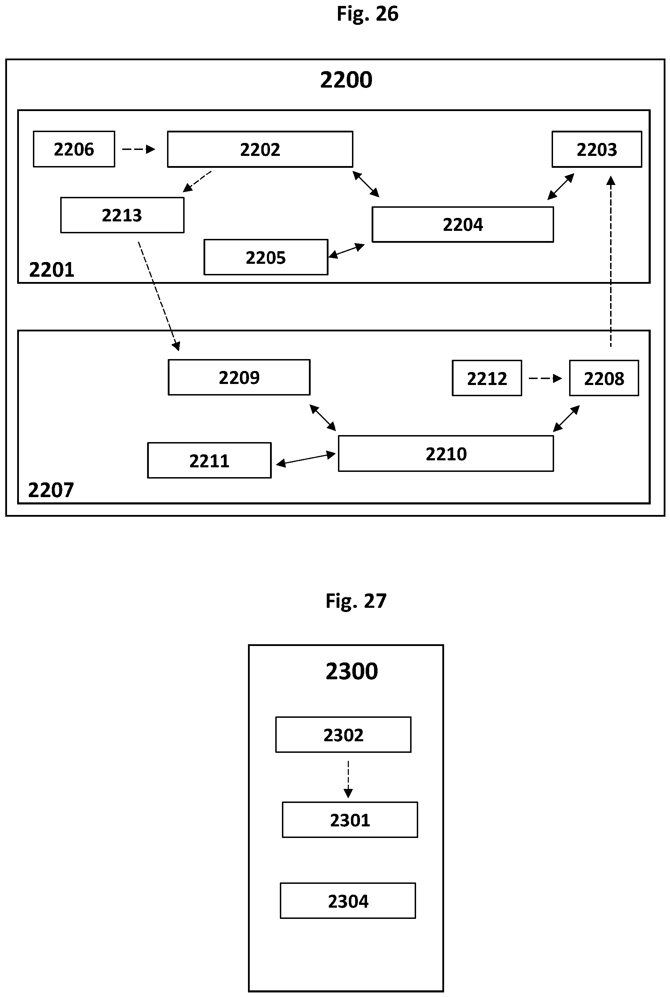

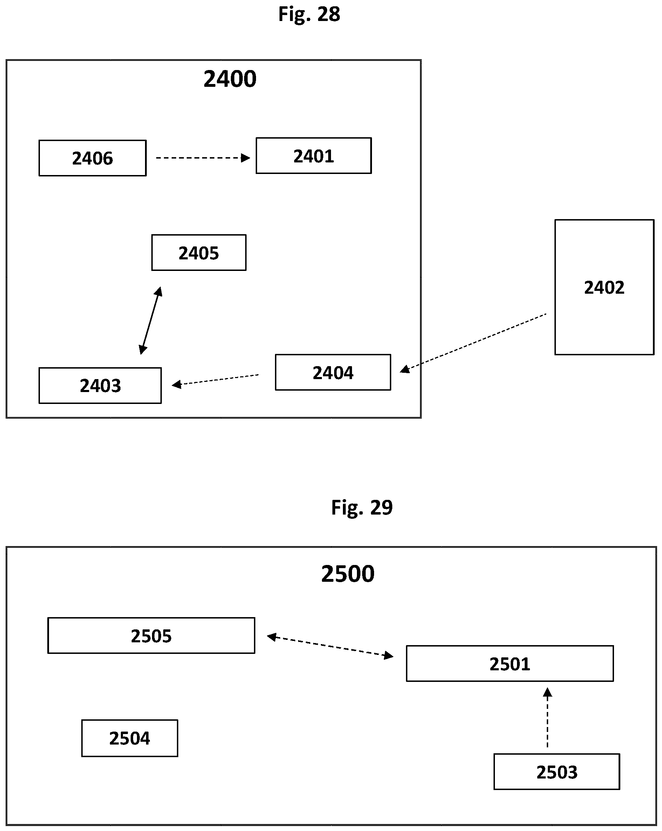

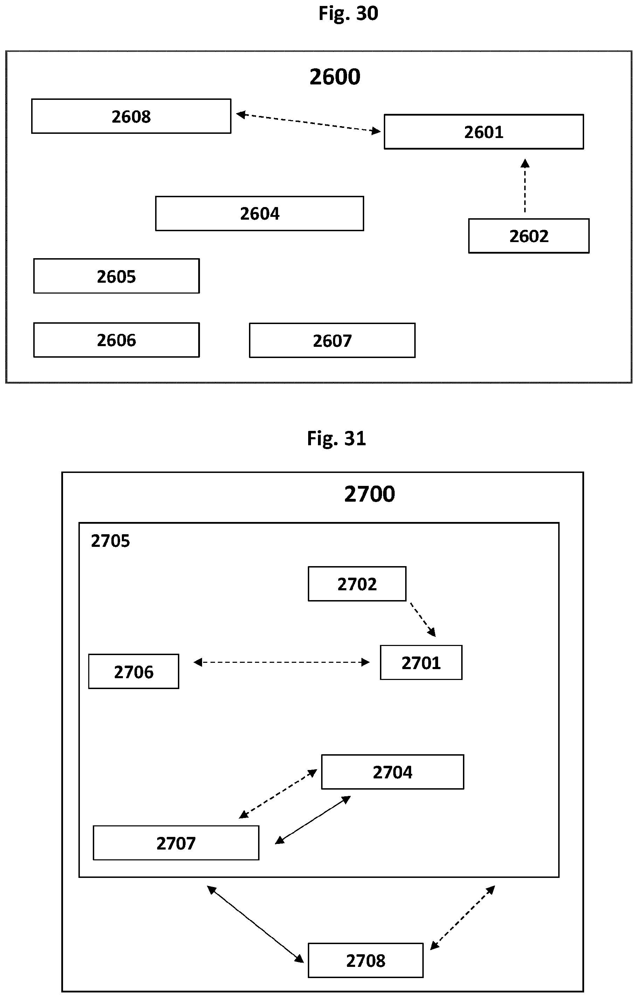

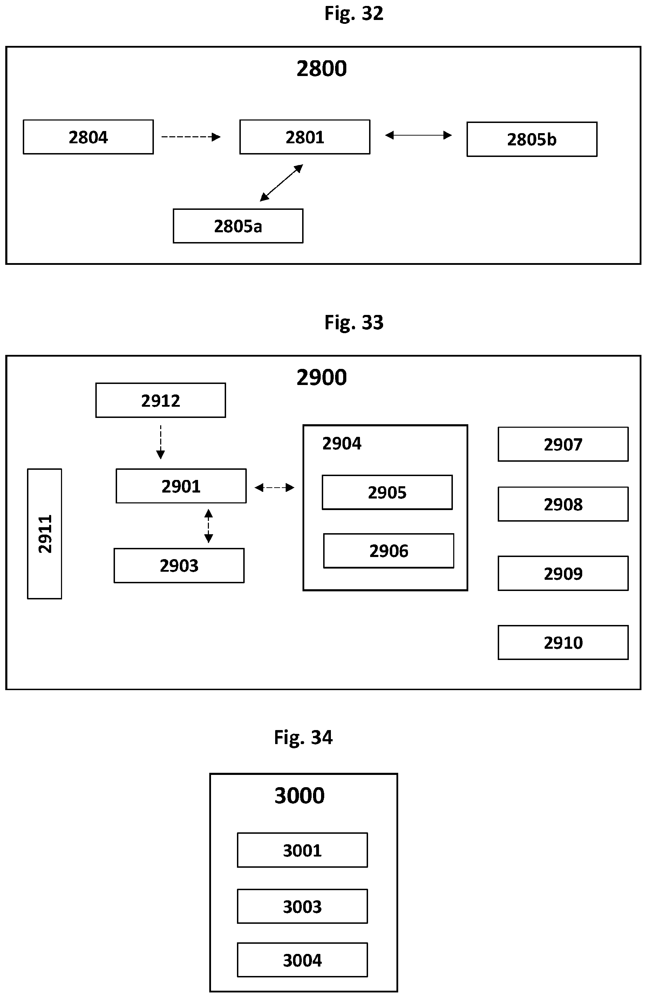

Figs 14 to 34: schematic diagrams illustrating various embodiments that comprise at least one arrangement according to the invention.

### Description of figures

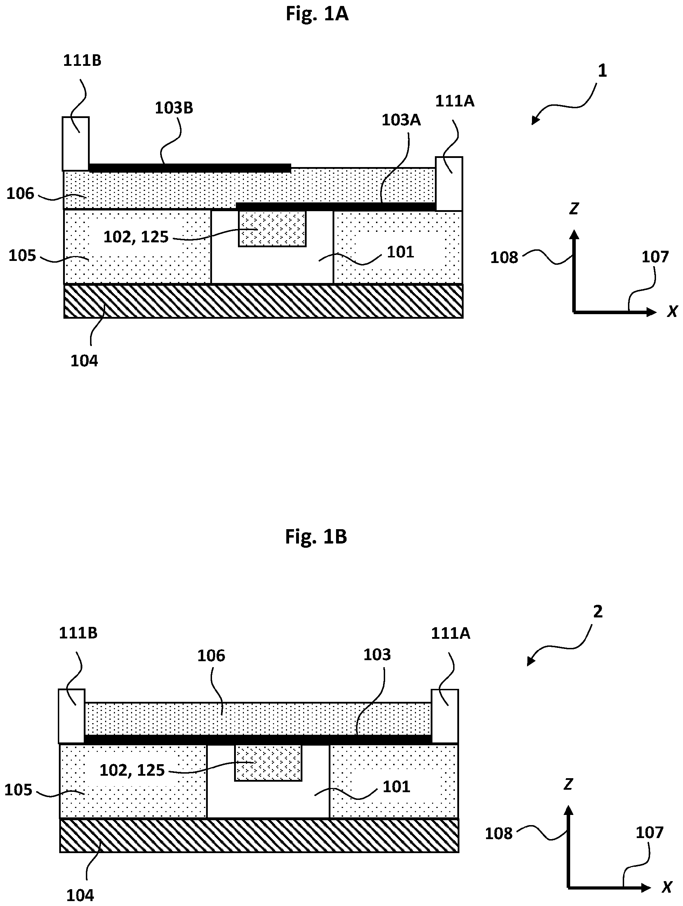

Fig. 1A is a schematic illustration showing a cross-section of a first embodiment of an arrangement 1 according to the invention. The arrangement 1 in Fig. 1A is a modulator that is adapted and arranged to modulate electromagnetic waves. The arrangement comprises a first waveguide 101 that is adapted and arranged for the propagation of electromagnetic waves (the cross-section of the arrangement is made perpendicular to a length of the first waveguide 101). The first waveguide 101 can be made from, e.g., silicon nitride. The arrangement also has two elements 103A and 103B that are arranged to overlap the first waveguide 101. The elements 103A and 103B are electrically conductive elements that are in the form of graphene layers. The elements 103A and 103B are also adapted and arranged to allow for a coupling between the first waveguide 101 and the elements 103A and 103B (i.e., an electromagnetic wave propagating in the first waveguide 101 can be at least partially absorbed by the elements 103A and 103B). The arrangement is also adapted and arranged such that an electric potential can be applied (and varied) between the sections of the elements 103A and 103B that overlap. By varying the electric potential, the level of absorption of electromagnetic waves by the elements 103A and 103 B can be increased and decreased. The elements 103A and 103B are also in electrical connection with electrodes 111A and 111B, respectively.

The first waveguide 101 has a recess 102 that faces the elements 103A and 103B. The recess 102 does not extend through the waveguide 101. In other words, a depth of the recess 102 is less than a height of the first waveguide 101, with the depth of the recess 102 and the height of the first waveguide 101 measured parallel to a further direction 108, wherein the further direction 108 is perpendicular to a first direction 107. In Fig. 1A the first waveguide 101 is arranged on a first dielectric layer 104. The first dielectric layer 104 may be, e.g., a substrate (such as a silicon substrate) or a silicon dioxide layer. A second dielectric layer 105 is arranged next to the first waveguide 101 (i.e., the first waveguide 101 is embedded in the second dielectric layer 105). The recess 102 is filled with a dielectric material 125. This dielectric material 125 may be the same or different to the material of the second dielectric layer 105. The second dielectric layer 105 can be made from, e.g., aluminium oxide or silicon dioxide. While the dielectric material 125 in the recess 102 may also be e.g., aluminium oxide or silicon dioxide, it is preferred that the dielectric material 125 is, e.g., amorphous silicon or silicon nitride. A third dielectric layer 106 separates the elements 103A and 103B. The third dielectric layer 106 may be made from, e.g., aluminium oxide.

Fig. 1B is a schematic illustration showing a cross-section of a second embodiment of an arrangement 2 according to the invention. The arrangement 2 in Fig. 1B is a photodetector that is adapted and arranged to detect electromagnetic waves (e.g., by the at least partial absorption of electromagnetic waves propagating in the first waveguide 101). The arrangement in Fig. 1B is similar to the arrangement in Fig. 1A, with the difference that the arrangement in Fig. 1B has only one element 103.

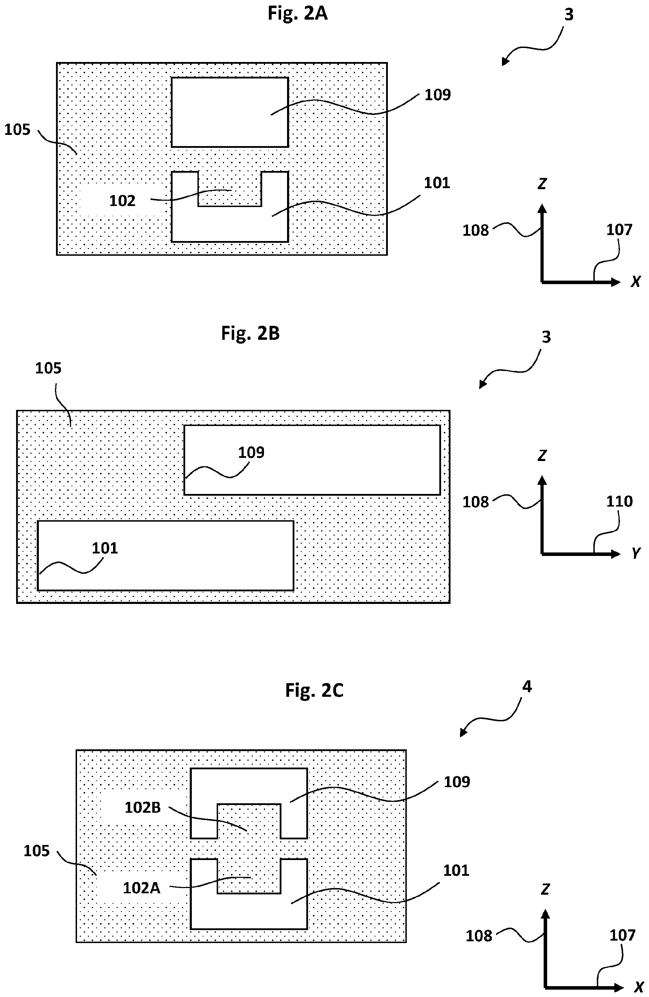

Fig. 2A is a schematic illustration showing a cross-section of a third embodiment of an arrangement 3 according to the invention. The arrangement 3 comprises a first waveguide 101 that is adapted and arranged for the propagation of electromagnetic waves (the cross-section of the arrangement is made perpendicular to a length of the first waveguide 101). The first waveguide 101 can be made from, e.g., silicon nitride. The arrangement also has an element 109 that is arranged to overlap the first waveguide 101. In Fig. 2A the element 109 is a further waveguide. The further waveguide 109 can also be made from, e.g., silicon nitride. The arrangement in Fig. 2A is adapted and arranged to couple electromagnetic waves propagating in the first waveguide 101 into the further waveguide 109. The first waveguide 101 has a recess 102 that faces the further waveguide 109. A depth of the recess 102 is less than a height of the first waveguide 101, with the depth of the recess 102 and the height of the first waveguide 101 measured parallel to a further direction 108, and wherein the further direction 108 is perpendicular to a first direction 107. The first waveguide 101 and the further waveguide 109 are surrounded by a second dielectric layer 105 (e.g., the first waveguide 101 and the further waveguide 109 are embedded in the second dielectric layer 105). The second dielectric layer 105 also fills the recess 102. The second dielectric layer 105 can be made from, e.g., aluminium oxide. Alternatively, the recess 102 may be filled with a dielectric material that is different to the material from which the second dielectric layer 105 is made (as shown in Figs 1A and 1B).

Fig. 2B is a schematic illustration showing a cross-section of the arrangement 3 of Fig. 2A, viewed from the side. The cross-section in Fig. 2A is made perpendicular to the length of the first waveguide 101, wherein the cross-section in Fig. 2B is made parallel to a length of the first waveguide 101. As can be seen in Fig. 2B, the first waveguide 101 and the further waveguide 109 also overlap along a second direction 110. The second direction 110 is perpendicular to both the first direction 107 and the further direction 108.

Fig. 2C is schematic illustration showing a cross-section of an alternative arrangement 4 of the third embodiment of the arrangement according to the invention, as shown in Figs 2A and 2B. As can be seen in Fig. 2C, the first waveguide 101 and the further waveguide 109 have a similar configuration. In particular, the first waveguide 101 has a recess 102A that faces the further waveguide 109, while the further waveguide 109 has a recess 102B that faces the first waveguide 101.

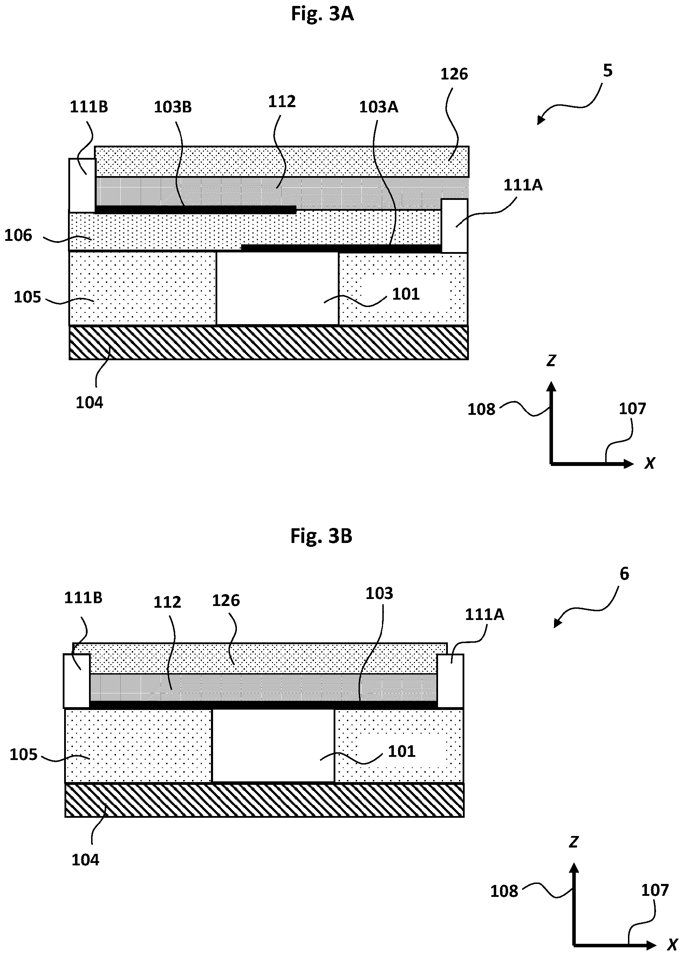

Fig. 3A is a schematic illustration showing a cross-section of a fourth embodiment of an arrangement 5 according to the invention. The arrangement 5 in Fig. 3A is a modulator that is adapted and arranged to modulate electromagnetic waves. The arrangement comprises a first waveguide 101 that is adapted and arranged for the propagation of electromagnetic waves (the cross-section of the arrangement is made perpendicular to a length of the first waveguide 101). The first waveguide 101 can be made from, e.g., silicon nitride. The arrangement also has two elements 103A and 103B that are arranged to overlap the first waveguide 101. The elements 103A and 103B are electrically conductive elements that are in the form of graphene layers. The elements 103A and 103B are also adapted and arranged to allow for a coupling between the first waveguide 101 and the elements 103A and 103B (i.e., an electromagnetic wave propagating in the first waveguide 101 can be at least partially absorbed by the elements 103A and 103B). The arrangement is also adapted and arranged such that an electric potential can be applied (and varied) between the sections of the elements 103A and 103B that overlap. By varying the electric potential, the level of absorption of electromagnetic waves by the elements 103A and 103 B can be increased and decreased. The elements 103A and 103B are also in electrical connection with electrodes 111A and 111B, respectively.

In Fig. 3A the first waveguide 101 is arranged on a first dielectric layer 104. The first dielectric layer 104 may be, e.g., a substrate (such as a silicon substrate) or a silicon dioxide layer. A second dielectric layer 105 is arranged next to the first waveguide 101 (i.e., the first waveguide 101 is embedded in the second dielectric layer 105). Arranged between the elements 103A and 103B is a third dielectric layer 106 made from, e.g., aluminium oxide. Arranged above the element 103B is a layer of a first kind 112, that is also made from, e.g., aluminium oxide. Superimposed on the layer of the first kind 112 is a layer of a second kind 126 that is made from, e.g., silicon nitride. The layer of the first kind 112 and the layer of the second kind 126 touch each other.

Fig. 3B is a schematic illustration showing a cross-section of a fifth embodiment of an arrangement 6 according to the invention. The arrangement 6 in Fig. 3B is a photodetector that is adapted and arranged to detect electromagnetic waves (e.g., by the at least partial absorption of electromagnetic waves propagating in the first waveguide 101). The arrangement in Fig. 3B is similar to the arrangement in Fig. 3A, with a difference being that the arrangement in Fig. 3B has only one element 103.

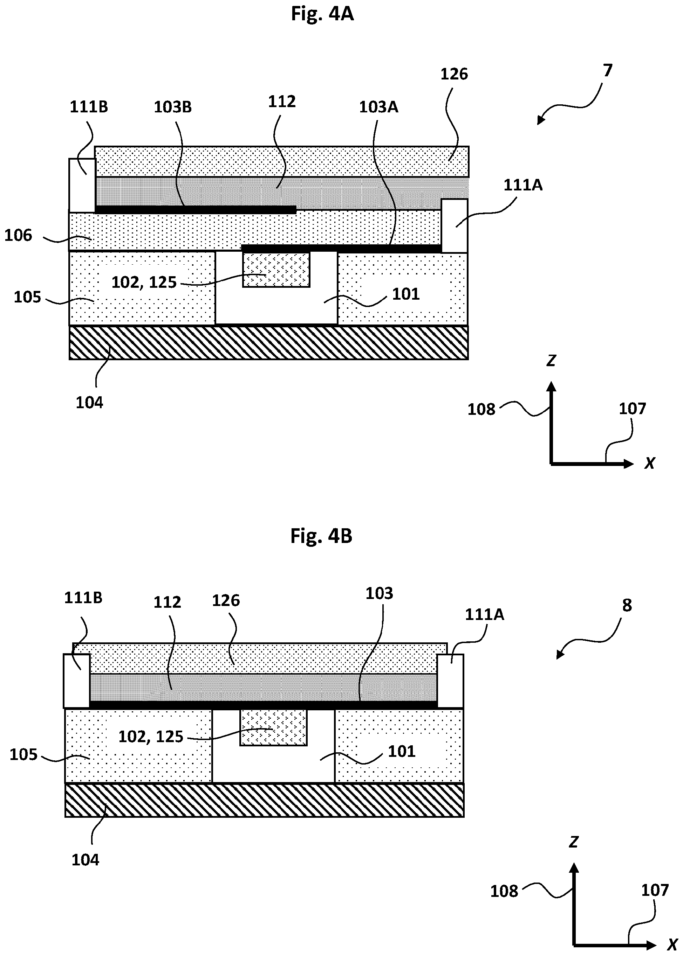

The arrangement 7 in Fig. 4A is the same as the arrangement 5 in Fig. 3A, except that the first waveguide 101 has a recess 102 that faces the elements 103A and 103B. A depth of the recess 102 is less than a height of the first waveguide 101, with the depth of the recess 102 and the height of the first waveguide 101 measured parallel to a further direction 108, wherein the further direction 108 is perpendicular to a first direction 107.

The arrangement 8 in Fig. 4B is the same as the arrangement 6 Fig. 3B, except that the first waveguide 101 has a recess 102 that faces the element 103. A depth of the recess 102 is less than a height of the first waveguide 101, with the depth of the recess 102 and the height of the first waveguide 101 measured parallel to a further direction 108, wherein the further direction 108 is perpendicular to a first direction 107.

Variations in the modulator and photodetector of Figs 1A to 4B are also possible. These variations include, e.g., the number and/or arrangement of graphene layer(s) and/or dielectric layers. For example, the photodetector of Fig. 4B may have more than one element and more than one layer of the first kind.

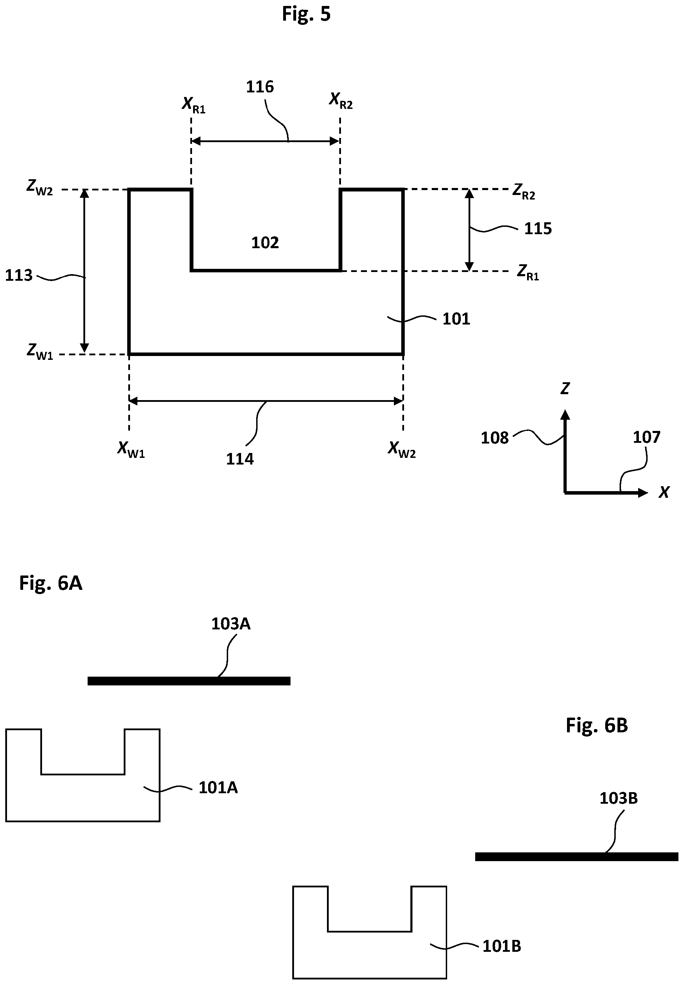

Fig. 5 is a schematic illustration showing how dimensions of a first waveguide according to the invention are determined. Shown in Fig. 5 is cross-section of a first waveguide 101 with a recess 102. The cross-section is made perpendicular to a length of the first waveguide 101. The first waveguide 101 has a height 113 (measured parallel to the further direction 108) and a width 114 (measured parallel to the first direction 107). The height 113 is measured between the points Z_{W1} and Z_{W2} and the width 114 is measured between the points X_{W1} and X_{W2}. If the first waveguide 101 has a non-uniform height, the "height 113 of the first waveguide 101" is measured at a position where the first waveguide 101 has a maximum value for the height (e.g., the height is not measured at the position of the recess 102). If the first waveguide 101 has a non-uniform width, the "width 114 of the first waveguide 101" is measured at a position where the first waveguide 101 has a maximum value for the width. The "height 113" and "width 114" of the first waveguide 101 should thus be understood as a maximum height and a maximum width of the first waveguide 101, respectively.

The recess 102 has a depth 115 (measured parallel to the further direction 108) and a width 116 (measured parallel to the first direction 107). The depth 115 is measured between the points Z_{R1} and Z_{R2} and the width 116 is measured between the points X_{R1} and X_{R2}. If the recess 102 has a non-uniform depth, the "depth 115 of the recess 102" is measured at a position where the recess 102 has a maximum value for the depth. If the recess 102 has a non-uniform width, the "width 116 of the recess 102" is measured at a position where the recess 102 has a maximum value for the width. The "depth 115" and "width 116" of the recess 102 should thus be understood as a maximum depth and a maximum width of the recess 102, respectively.

A centre of the first waveguide 101 has coordinates (X_{C2}, Z_{C2}), wherein said coordinates are determined as follows: ${X}_{C2} = \left({X}_{W2}+{X}_{W1}\right) / 2 ,$ and ${Z}_{C2} = \left({Z}_{W2}+{Z}_{W1}\right) / 2$

The first waveguide 101 extends between the coordinates X_{W1} and X_{W2} on the first direction 107. The first waveguide 101 extends between the coordinates Z_{W1} and Z_{W2} on the further direction 108.

A centre of the recess 102 has coordinates (X_{C1}, Z_{C1}), wherein said coordinates are determined as follows: ${X}_{C1} = \left({X}_{R2}+{X}_{R1}\right) / 2 ,$ and ${Z}_{C1} = \left({Z}_{R2}+{Z}_{R1}\right) / 2$

The recess 102 extends between the coordinates X_{R1} and X_{R2} on the first direction 107. The recess 102 extends between the coordinates Z_{R1} and Z_{R2} on the further direction 108.

Fig. 6A is a schematic illustration showing a first waveguide and an element that overlap each other. Fig. 6B is a schematic illustration showing a first waveguide and an element that do not overlap each other. Fig. 6A shows a cross-section of an arrangement comprising a first waveguide 101A and an element 103A. The cross-section is made perpendicular to a length of the first waveguide 101A. In the sense of Fig. 6A, a section 127 of the element 103A is arranged directly above the first waveguide 101A. The first waveguide 101A and the element 103A therefore overlap each other. Alternatively, if a section of the first waveguide 101A was arranged directly above the element 103A, then the first waveguide 101A and the element 103A would also overlap each other.

Fig. 6B shows a cross-section of an arrangement comprising a first waveguide 101B and an element 103B. The cross-section is made perpendicular to a length of the first waveguide 101B. In the sense of Fig. 6B, no section of the element 103B is arranged directly above the first waveguide 101B. The first waveguide 101B and the element 103B therefore do not overlap each other.

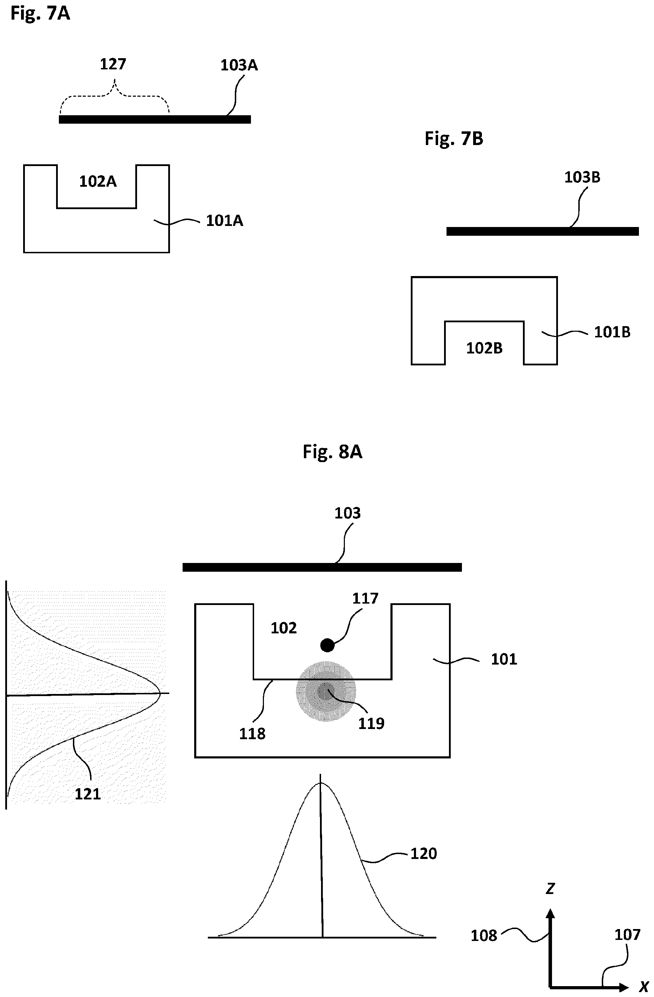

Fig. 7A is a schematic illustration showing a first waveguide with a recess that faces an element. Fig. 7A shows a cross-section of an arrangement comprising a first waveguide 101A and an element 103A. The cross-section is made perpendicular to a length of the first waveguide 101A. The first waveguide 101A has a recess 102A that faces the element 103A. Fig. 7B is a schematic illustration showing a first waveguide with a recess that does not face an element. Fig. 7B shows a cross-section of an arrangement comprising a first waveguide 101B and an element 103B. The cross-section is made perpendicular to a length of the first waveguide 101B. The first waveguide 101B has a recess 102B that does not face the element 103B.

Fig. 8A is a schematic illustration showing an intensity of a mode of an electromagnetic wave propagating in an arrangement according to the invention. Here the mode can be a transverse magnetic mode and/or a transverse electric mode. Fig. 8A shows an arrangement that comprises a first waveguide 101 that has a recess 102 with a centre 117 (see Fig. 5 and the corresponding figure description above). The arrangement has an interface 118 between the first waveguide 101 and the recess 102. Also shown in Fig. 8A is a maximum intensity 119 of a mode propagating in the first waveguide 101. A first graph 120 shows the intensity of the mode along the first direction 107, and a second graph 121 shows the intensity of the mode along the further direction 108. In Fig. 8A it can be seen that, when measured along the further direction 108, the maximum intensity 119 is arranged closer to the interface 118 than to the centre 117 of the recess 102. A distance between the maximum intensity 119 and the interface 118 is measured as the shortest distance between the interface 118 and the maximum intensity 119.

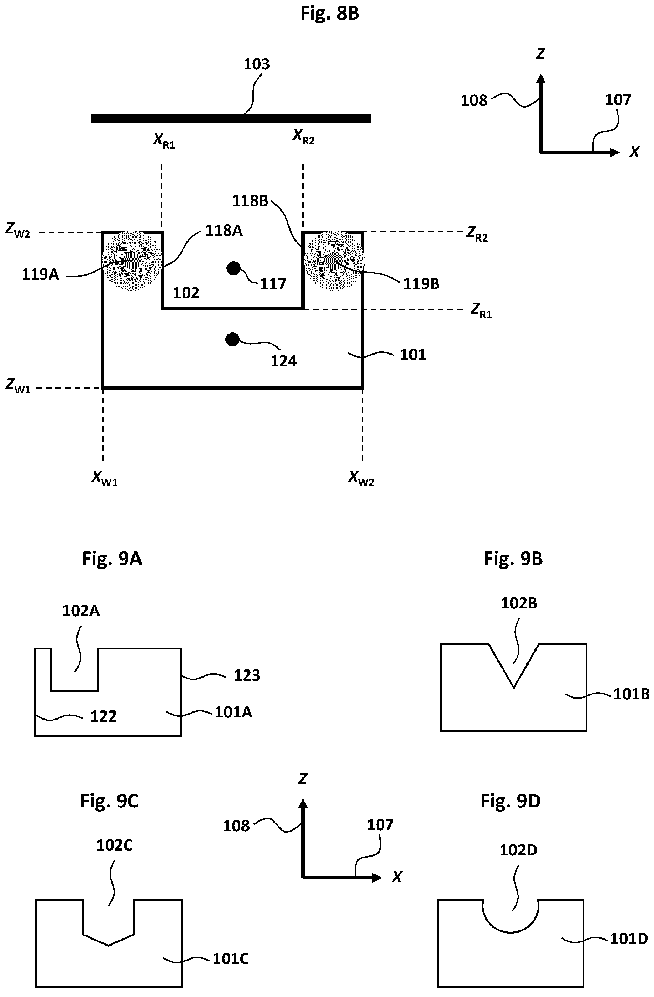

Fig. 8B is the same as Fig. 8A, with the difference that the mode has two maximum intensities 119A and 119B. These maximum intensities 119A and 119B are arranged next to the recess 102 (in the sense of Fig. 8B). Alternatively stated, the Z-coordinate Z_{I} of the maximum intensities is such that Z_{R1} < Z_{I} < Z_{R2} (the Z-coordinates are measured on the further direction 108). Furthermore, the maximum intensity 119A has an X-coordinate X_{IA}, with X_{IA} ≤ X_{R1}, while the maximum intensity 119B has an X-coordinate X_{1B}, with X_{R2} <_ X_{IB}, wherein said X-coordinates are measured on the first direction 107 (the recess extends between X_{R1} and X_{R2}). In Fig. 8B there are thus two maximum intensities so that both the relations X_{I-TE} ≤ X_{R1} (for maximum intensity 119A) and X_{R2} ≤ X_{I-TE} (for maximum intensity 119B) apply.

A distance between the maximum intensity 119A and the interface 118A is less than a distance between the maximum intensity 119A and the centre 117 of the recess 102, as well as being less than a distance between the maximum intensity 119A and a centre 124 of the first waveguide 101. Similarly, a distance between the maximum intensity 119B and the interface 118B is less than a distance between the maximum intensity 119B and the centre 117 of the recess 102, as well as being less than a distance between the maximum intensity 119B and the centre 124 of the first waveguide 101.

Figs 9A to 9D are schematic illustrations showing various alternative embodiments of the first waveguide. These figures show a cross-section of the first waveguide made perpendicular to a length of the waveguide. As shown in Fig. 9A, the recess 102A is not arranged in a middle of the first waveguide 101A but is arranged closer to a first side 122 of the first waveguide 101A than a further side 123 of the first waveguide 101A. As shown in Figs 9B to 9D, the recesses 102B to 102D may have shapes that are not rectangular. The shape of a recess (of a first waveguide according to the invention) is not limited to the shapes shown in Figs 9A to 9D but may also have a shape not shown in said figures.

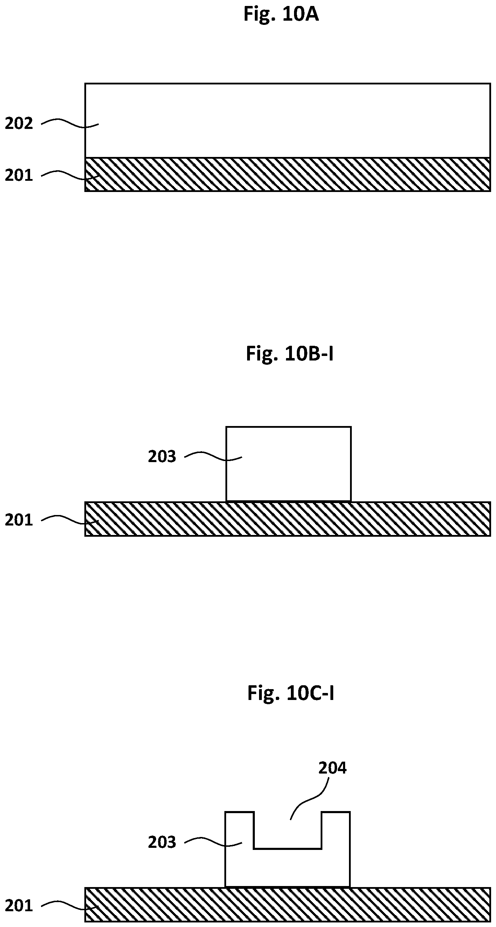

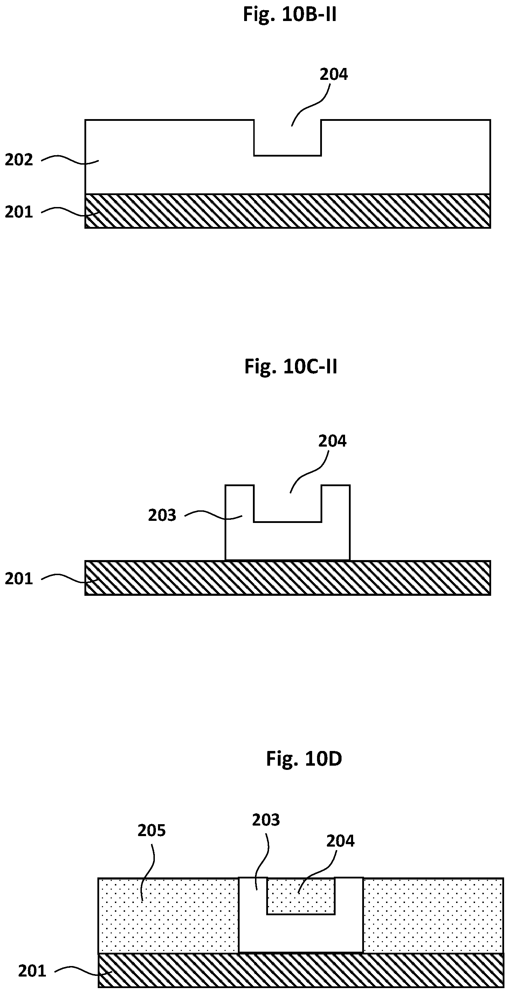

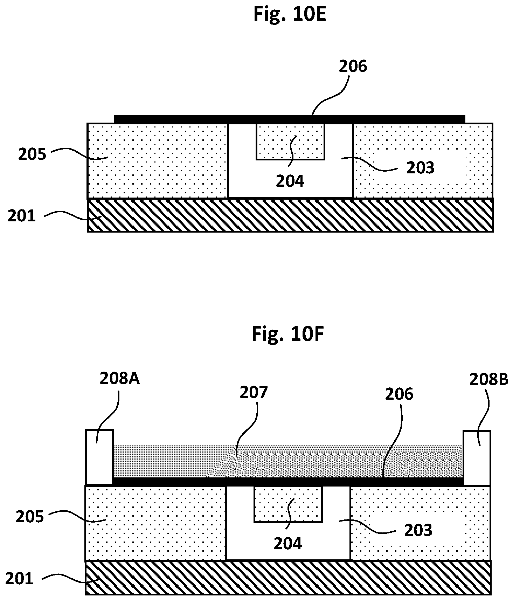

Fig. 10 shows a schematic illustration of a method for producing an arrangement according to the invention. In Fig. 10A a substrate 201 is provided with a first waveguide layer 202 superimposed on the substrate 201. The substrate 201 may be made from, e.g., silicon or silicon dioxide. The first waveguide layer 202 may be made from, e.g., silicon nitride. In Fig. 10B-I, sections of the first waveguide layer 202 have been removed to obtain a first waveguide 203. The sections of the first waveguide layer 202 can be removed using, e.g., patterning. In Fig. 10C-I, a further section of the first waveguide 203 has been removed to form a recess 204 in the first waveguide 203. The further section of the first waveguide 203 can also be removed using, e.g., patterning.

As alternatives to the steps of Fig. 10B-I and 10C-I, the steps shown in Figs 10B-II and 10C-II may be performed. In Fig. 10B-II a section of the first waveguide layer 202 is removed (using, e.g., patterning) to obtain a recess 204 in the first waveguide layer 202. In Fig. 10C-II, further sections of the first waveguide layer 202 are removed (using, e.g., patterning) to obtain a first waveguide 203 with a recess 204.

In Fig. 10D a dielectric layer A 205 is superimposed (e.g., using chemical vapour deposition) on the first waveguide 203. The dielectric layer A 205 also fills the recess 204. The dielectric layer A 205 can be, e.g., aluminium oxide. The dielectric layer A 205 may also be subjected to a chemical-mechanical polishing.

In Fig. 10E an element 206 is superimposed on the first waveguide 203 such that the element 206 overlaps the first waveguide 203 and such that the recess 204 faces the element 206. This superimposition may include the sub-steps of superimposing an element layer on the first waveguide 203 and removing sections of the element layer to obtain the element 206.

In Fig. 10F a layer of the first kind 207 is superimposed (e.g., using chemical vapour) on the element 206. Sections of the layer of the first kind 207 are removed (e.g., using patterning) and electrodes 208A and 208B are formed in the removed sections. The electrodes 208A and 208B are in electrical contact with the element 206.

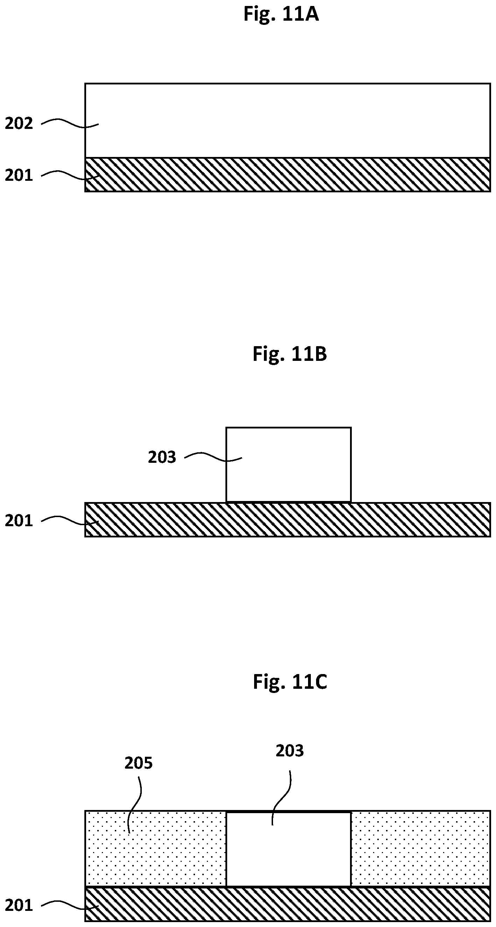

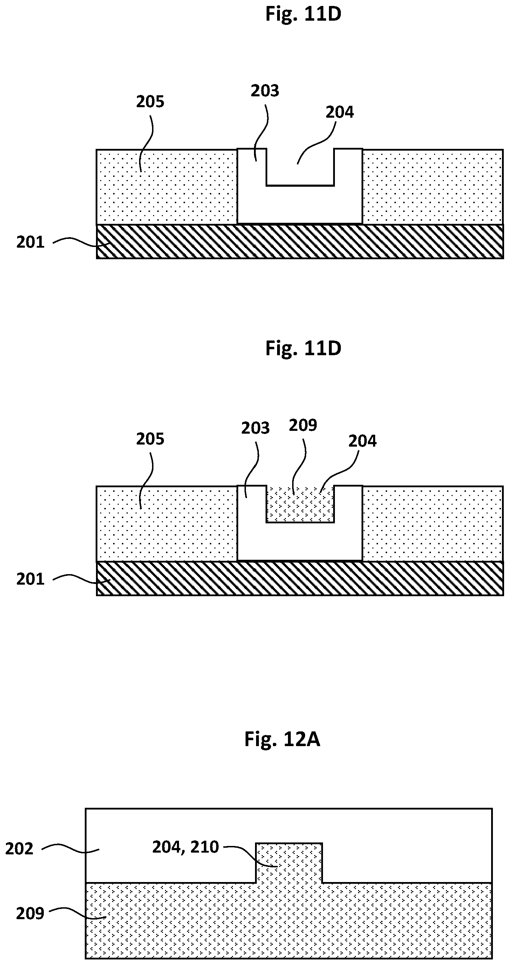

Various different variations of the method shown in Fig. 10 are also possible, as shown in Fig. 11. The steps in Figs 11A and 11B are as described in Figs 10A and 10B-I, respectively. In Fig. 11C, the dielectric layer A 205 is superimposed on the first waveguide 203. Said dielectric layer A 205 is subsequently subjected to chemical-mechanical polishing. In Fig. 11D, a section of the first waveguide 203 is removed to form a recess 204. The recess 204 is thus not filled with the dielectric layer A 205. In Fig. 11E a dielectric layer B 209 is superimposed on the first waveguide 203, with the dielectric layer B 209 thereby filling the recess 204. The dielectric layer B 209 may be subjected to chemical-mechanical polishing. The steps in Figs 10E and 10F may then be repeated following the step in Fig. 11D.

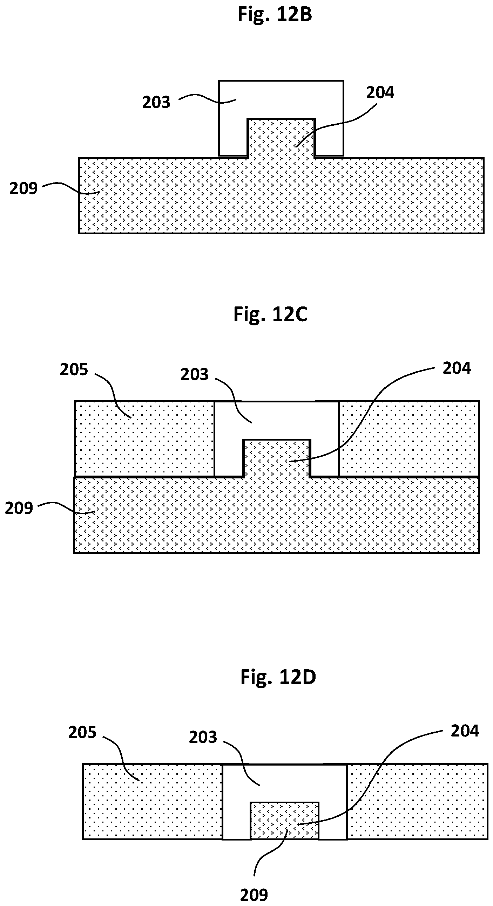

Another alternative of the method shown in Fig. 10 is also shown in Fig. 12. In Fig. 12A sections of a dielectric layer B 209 have been removed to form a projection 210. A first waveguide layer 202 is then superimposed on the dielectric layer B 209, with the projection 210 forming a recess 204 in the first waveguide layer 202. The superposition of any further dielectric layer and one or more elements may be performed according to any method deemed suitable by the skilled person. For example, in Fig. 12B sections of the first waveguide layer 202 have been removed to obtain a first waveguide 203. The sections of the first waveguide layer 202 can be removed using, e.g., patterning. In Fig. 12C, a dielectric layer A 205 is superimposed (e.g., using chemical vapour deposition) on the first waveguide 203. The dielectric layer A 205 can be, e.g., aluminium oxide. The dielectric layer A 205 has also been subjected to a chemical-mechanical polishing. In Fig. 12D, the dielectric layer B 209 has also been subjected to chemical-mechanical polishing. The steps in Figs 10E and 10F may then be repeated following the step in Fig. 12D.

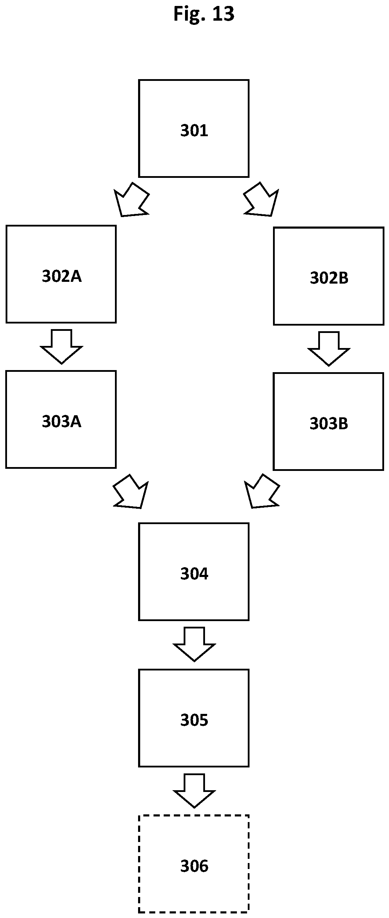

Fig. 13 is a flow diagram showing the steps of a method for producing an arrangement according to the invention. In step 301, a first waveguide layer is superimposed on a substrate. Subsequently, either steps 302A and 303A are performed, or steps 302B and 303B are performed. In step 302A, at least one section of the first waveguide layer is removed to obtain the first waveguide. In step 303A, a section of the first waveguide is removed to form a recess in the first waveguide. Alternatively, in step 302B a section of the first waveguide layer is removed to form a recess in the first waveguide layer. In step 303B, at least one section of the first waveguide layer is removed to obtain the first waveguide. In step 304 a dielectric layer is superimposed on the first waveguide, with the dielectric layer subsequently subjected to chemical-mechanical polishing. In step 305, an element is superimposed on the first waveguide such that the element and the first waveguide overlap. In optional step 306, a layer of the first kind is superimposed on the element.

### EXAMPLES

The invention is illustrated further by way of examples. The invention is not restricted to the examples. In the examples the following scale is used for the technical effects, arranged from smallest to largest: " , - , , , - , +, ++, +++, ++++, +++++".

### Example 1

In Example 1 arrangements in the form of photodetectors are provided. Electromagnetic waves propagating in the first waveguide are detected using the photodetectors. The electromagnetic waves have a wavelength of 1550 nm and a polarised TE mode.

The following applies to the photodetectors of Example 1: the first waveguide is made from silicon nitride and has a height and width of 350 nm and 1000 nm, respectively. The element is a graphene layer with a width of 2500 nm. A biasing voltage of 5 V is applied to the photodetectors, with a peak-to-peak voltage of 1 V.

In Example 1, the following photodetectors are used.
i. Example 1.1: an photodetector according to the invention is provided, as shown in Fig. 1B. The first waveguide thus has a recess that faces the graphene layer (the element). A depth and a width of the recess are 100 nm and 150 nm, respectively.
ii. Example 1.2: a photodetector similar to the photodetector of Example 1.1 is provided, with the difference that the first waveguide does not have a recess.

**Table 1**

| **Example** | **1.1** | **1.2** |
|---|---|---|
| | | |

| **Set-up** | | |
|---|---|---|
| Recess in first waveguide | Yes | No |
| | | |

| **Technical effects** | | |
|---|---|---|
| Bitrate | ++ | - |
| Responsivity | +++ | + |
| Energy consumption | - - | - |
| Footprint | - - | - |

The technical effects in Table 1 are as follows:
- Bitrate: the rate of data flow in digital networks are typically measured in bits per second. This technical effect is the bitrate that is achievable by using the photodetectors of the examples. A "-" indicates a smaller bitrate, while a "+" indicates a larger bitrate. It is desired to have a larger bitrate.
- Responsivity: the ratio of current output by the photodetector to optical power of the electromagnetic waves propagating in the first waveguide. A "-" indicates a lower responsivity, while a "+" indicates a larger responsivity. It is desired to have a larger responsivity.
- Energy consumption: the energy required by the photodetector to detect one bit of data. A "-" indicates a smaller energy consumption, while a "+" indicates a larger energy consumption. It is desired to have a smaller energy consumption.
- Footprint: the area occupied by the photodetector on, e.g., a substrate. A "-" indicates a smaller footprint, while a "+" indicates a larger footprint of the photodetectors. It is desired to have a smaller footprint.

### Example 2

In Example 2 arrangements comprising a first waveguide and a further waveguide (an element) are provided. Electromagnetic waves propagating in the first waveguide are coupled to the further waveguide. The electromagnetic waves propagating in the first waveguide have a wavelength of 1550 nm and a polarised TE mode.

The following applies to the arrangements of Example 2: both the first waveguide and the further waveguide are made from silicon nitride. Both the first waveguide and the further waveguide have a height and width of 350 nm and 1000 nm, respectively.

In Example 2.1, the following arrangements are used.
i. Example 2.1: an arrangement according to the invention is provided, as shown in Figs 2A and 2B. The first waveguide thus has a recess that faces the further waveguide. A depth and a width of the recess are 100 nm and 150 nm, respectively.
ii. Example 2.2: an arrangement, not according to the invention, is provided. The first waveguide does not have a recess.

**Table 2**

| **Example** | **2.1** | **2.2** |
|---|---|---|
| | | |

| **Set-up** | | |
|---|---|---|
| Recess in first waveguide | Yes | No |
| | | |

| **Technical effects** | | |
|---|---|---|
| Overlap between first and further waveguides | - | + |
| Bitrate | ++ | - |
| Maximum intensity of electromagnetic wave in further waveguide | +++ | + |
| Cross-talk between first and further waveguides | - - - | - |
| Misalignment tolerance | +++ | - |

The technical effects in Table 2 are as follows:
- Overlap between first and further waveguides: the length of the first waveguide that overlaps with the second waveguide, as measured parallel to the second direction (the length of the waveguides are also measured parallel to the second direction). A "-" indicates a smaller overlap, while a "+" indicates a larger overlap. It is desired to have a smaller overlap.
- Bitrate: the rate of data flow in digital networks are typically measured in bits per second. This technical effect is the bitrate that is achievable by using the arrangements of the examples. A "-" indicates a smaller bitrate, while a "+" indicates a larger bitrate. It is desired to have a larger bitrate.
- Maximum intensity of electromagnetic waves in further waveguide: the maximum intensity of the electromagnetic waves that have been coupled from the first waveguide to the further waveguide. A "+" indicates a larger maximum intensity, and a "-" indicates a smaller intensity. It is desired to increase the maximum intensity.
- Cross-talk between first and further waveguides: electromagnetic waves coupled into the further waveguide may partially be coupled back into the first waveguide. A "+" indicates a larger cross-talk, and a "-" indicates a smaller cross-talk. It is desired to reduce the cross-talk.
- Misalignment tolerance: the effect of a misalignment between the first and further waveguides on the coupling of electromagnetic waves from the first waveguide into the further waveguide. For example, two waveguides in two separate chips often require a precise alignment between said two waveguides in order to couple electromagnetic waves between the two chips. A "+" a larger misalignment tolerance, and a "-" indicates a smaller misalignment tolerance. It is desired to increase the misalignment tolerance.

### Example 3

In Example 3 arrangements in the form of modulators are provided. Electromagnetic waves propagating in the first waveguide are modulated using the modulators. The electromagnetic waves that are modulated initially have a wavelength of 1550 nm and a polarised TE mode.

The following applies to the modulators of Example 3: the first waveguide is made from silicon nitride and has a height and width of 350 nm and 1000 nm, respectively. The elements are two graphene layers arranged to overlap. A width of the overlapping region in each graphene layer is 600 nm (the overlap as measured parallel to the first direction). The graphene layers have a total width of 2500 nm. A biasing voltage of 5 V is applied to the modulators, with a peak-to-peak voltage of 1 V.

In Example 3, the following modulator are used.
i. Example 3.1: an modulator according to the invention is provided, as shown in Fig. 1A. The first waveguide thus has a recess that faces the graphene layers (the elements). A depth and a width of the recess are 100 nm and 150 nm, respectively.
ii. Example 3.2: a modulator similar to the modulator of Example 3.1 is provided, with the difference that the first waveguide does not have a recess.

**Table 3**

| **Example** | **3.1** | **3.2** |
|---|---|---|
| | | |

| **Set-up** | | |
|---|---|---|
| Recess in first waveguide | Yes | No |
| | | |

| **Technical effects** | | |
|---|---|---|
| Bitrate | +++ | ++ |
| Extinction ratio | ++++ | +++ |
| Footprint | ++ | + |
| Energy consumption | --- | -- |
| Insertion loss | --- | -- |

The technical effects in Table 3 are as described in Table 1, with the following additional technical effects.
- Extinction ratio: the extinction is the optical power ratio between transmitting a "1" and a "0" with the modulator. A "+" indicates a larger ratio, and a "-" indicates a smaller ratio. It is desired to increase the extinction rate.
- Insertion loss: an undesired loss in the intensity of the electromagnetic wave as a result of the presence of a modulator. A "-" indicates a smaller insertion loss, while a "+" indicates a larger insertion loss. It is desired to decrease the insertion loss.

### Example 4

In Example 4 arrangements in the form of photodetectors are provided. Electromagnetic waves propagating in the first waveguide are detected using the photodetectors. The electromagnetic waves that are modulated initially have a wavelength of 1550 nm and a polarised TE mode.

The following applies to the photodetectors of Example 4: the first waveguide is made from silicon nitride and has a height and width of 350 nm and 1000 nm, respectively. The element is a graphene layer with a width of 2500 nm. A biasing voltage of 5 V is applied to the photodetectors, with a peak-to-peak voltage of 1 V.

In Example 4, the following photodetectors are used.
i. Example 4.1: a photodetector according to the invention is provided, as shown in Fig 4B. The photodetector thus has a layer of the first kind that is made from aluminium oxide and that has a thickness of 30 nm. Superimposed on the layer of the first kind (and in contact with the layer of the first kind) is a layer of a second kind. The layer of the second king is made from silicon nitride. A total thickness of the layers of the first and second kinds is 200 nm. The first waveguide also has a recess that faces the graphene layer (the element). A depth and a width of the recess are 100 nm and 150 nm, respectively.
ii. Example 4.2: a photodetector similar to the photodetector of Example 4.1 is provided, with the difference that the first waveguide does not have a recess.
iii. Example 4.3: a photodetector, not according to the invention, is provided. The first waveguide does not have a recess, and the photodetector does not have a layer of the first kind.

**Table 4**

| **Example** | **4.1** | **4.2** | **4.3** |
|---|---|---|---|
| | | | |

| **Set-up** | | | |
|---|---|---|---|
| Recess in first waveguide | Yes | No | No |
| Layer of the first kind | Yes | Yes | No |
| | | | |

| **Technical effects** | | | |
|---|---|---|---|
| Bitrate | +++ | ++ | - |
| Responsivity | ++++ | ++ | - |
| Energy consumption | --- | -- | - |
| Footprint | --- | -- | - |

The technical effects in Table 4 are as described in Table 1.

### REFERENCE LIST

- 101: First waveguide
- 102: Recess
- 103: Element
- 104: First dielectric layer
- 105: Second dielectric layer
- 106: Third dielectric layer
- 107: First direction
- 108: Further direction
- 109: Further waveguide
- 110: Second direction
- 111: Electrodes
- 112: Layer of the first kind
- 113: Height of first waveguide
- 114: Width of first waveguide
- 115: Depth of recess
- 116: Width of recess
- 117: Centre of recess
- 118: Interface between first waveguide and recess
- 119: Maximum intensity of mode propagating in first waveguide
- 120: Intensity measured along first direction
- 121: Intensity measured along further direction
- 122: First side of first waveguide
- 123: Further side of first waveguide
- 124: Centre of first waveguide
- 125: Dielectric material in recess
- 126: Layer of the second kind
- 127: Section of element overlapping first waveguide

- 201: Substrate
- 202: First waveguide layer
- 203: First waveguide
- 204: Recess
- 205: Dielectric layer A
- 206: Element
- 207: Layer of the first kind
- 208: Electrode
- 209: Dielectric layer B
- 210: Projection

- 1000: First assembly
- 1001: First sub-assembly
- 1002: First arrangement
- 1003: Second arrangement
- 1004: First integrated circuit
- 1005: First data storage means
- 1006: First light emitting means
- 1007: Further sub-assembly
- 1008: Even-further arrangement
- 1009: Further arrangement
- 1010: Further integrated circuit
- 1011: Further data storage means
- 1012: Further light emitting means

- 1100: Optical sensing module
- 1101: First arrangement
- 1102: Target area
- 1103: Sensing means
- 1104: Optics
- 1105: Integrated circuit
- 1106: Light emitting means

- 1200: Apparatus adapted and arranged for a medical application
- 1201: First arrangement
- 1202: Further arrangement
- 1203: First light emitting means
- 1204: First integrated circuit
- 1205: Sensing unit

- 1300: Vehicle adapted and arranged for flight
- 1301: First arrangement
- 1302: First light emitting means
- 1303: Further arrangement
- 1304: First integrated circuit
- 1305: Propulsion means
- 1306: Means to generate lift
- 1307: Control system
- 1308: Sensing unit

- 1400: Robotic system
- 1401: First arrangement
- 1402: First light emitting means
- 1403: Further arrangement
- 1404: First integrated circuit
- 1405: Robotic body
- 1406: Sensing unit
- 1407: Control module
- 1408: External entity

- 1500: Second assembly adapted and arranged for optical computing
- 1501: Optical memory unit
- 1502: Optical processor
- 1503: Data communication module
- 1504: Arrangement

- 1600: Third assembly
- 1601: Homomorphic operation module
- 1602: Photonic encryption module
- 1603: Photonic decryption module
- 1604: Arrangement
- 1606: Light emitting means

- 1700: Optical connection module
- 1701: First arrangement
- 1702: Further arrangement
- 1703: Waveguide
- 1704: Light emitting means
- 1705: Integrated circuit

- 1800: First transportation means
- 1801: First arrangement
- 1802: Further arrangement
- 1803: Sensing unit
- 1804: Processing module
- 1805: Perception sub-module
- 1806: Generation sub-module
- 1807: Human-machine interface
- 1808: Control unit
- 1809: Steering means
- 1810: Propulsion means
- 1811: First integrated circuit
- 1812: First light emitting means

- 1900: Further transportation means
- 1901: First arrangement
- 1902: Further arrangement
- 1903: Steering means
- 1904: Propulsion means
- 2000: Fourth assembly
- 2001: Memory unit
- 2002: Processor
- 2003: Arrangement

- 2100: Optical data communication module
- 2101: First arrangement
- 2102: Light emitting means
- 2103: Further arrangement
- 2104: Integrated circuit

- 2200: Fifth assembly
- 2201: First sub-assembly
- 2202: First arrangement
- 2203: Second arrangement
- 2204: First integrated circuit
- 2205: First data storage means
- 2206: First light emitting means
- 2207: Further sub-assembly
- 2208: Even-further arrangement
- 2209: Further arrangement
- 2210: Further integrated circuit
- 2211: Further data storage means
- 2212: Further light emitting means
- 2213: Third arrangement

- 2300: Optical data communication module
- 2301: First arrangement
- 2302: Light emitting means
- 2304: Integrated circuit

- 2400: Optical sensing module
- 2401: First arrangement
- 2402: Target area
- 2403: Sensing means
- 2404: Optics
- 2405: Integrated circuit
- 2406: Light emitting means

- 2500: Apparatus adapted and arranged for a medical application
- 2501: First arrangement
- 2503: First light emitting means
- 2504: First integrated circuit
- 2505: Sensing unit

- 2600: Vehicle adapted and arranged for flight
- 2601: First arrangement
- 2602: First light emitting means
- 2604: First integrated circuit
- 2605: Propulsion means
- 2606: Means to generate lift
- 2607: Control system
- 2608: Sensing unit

- 2700: Robotic system
- 2701: First arrangement
- 2702: First light emitting means
- 2704: First integrated circuit
- 2705: Robotic body
- 2706: Sensing unit
- 2707: Control module
- 2708: External entity

- 2800: Optical connection module
- 2801: First arrangement
- 2804: Light emitting means
- 2805: Integrated circuit

- 2900: First transportation means
- 2901: First arrangement
- 2903: Sensing unit
- 2904: Processing module
- 2905: Perception sub-module
- 2906: Generation sub-module
- 2907: Human-machine interface
- 2908: Control unit
- 2909: Steering means
- 2910: Propulsion means
- 2911: First integrated circuit
- 2912: First light emitting means

- 3000: Further transportation means
- 3001: First arrangement
- 3003: Steering means
- 3004: Propulsion means

## Claims

1. An arrangement comprising
a. a first waveguide adapted and arranged for the propagation of electromagnetic waves;
b. at least one element, wherein, in a cross-sectional cut of the arrangement, the first waveguide and the at least one element are arranged to overlap;
wherein
the first waveguide comprises a recess that at least partially faces the at least one element,
a depth of the recess is less than a height of the first waveguide,
the depth of the recess and the height of the first waveguide are measured parallel to a further direction, and
the further direction is perpendicular to a first direction.

2. The arrangement according to claim 1, wherein at least one or all of the following applies:
a. a ratio of a width of the recess to a width of the first waveguide is in the range from 0.020 to 0.700, wherein said widths are measured parallel to the first direction.;
b. a ratio of the depth of the recess to the height of the first waveguide is in the range from 0.05 to 0.58.

3. The arrangement according to any of the preceding claims, wherein at least one or all of the following applies:
a. a width of the recess is in the range from 20 to 700 nm, with the width measured parallel to the first direction;
b. a depth of the recess is in the range from 20 to 200 nm.

4. The arrangement according to any of the preceding claims, wherein the recess is adapted and arranged such that at least one or all of the following applies when an electromagnetic wave propagates in the first waveguide:
a. a first distance is less than a second distance, wherein
the first distance is measured between a maximum intensity of a transverse electric (TE) mode of the electromagnetic wave propagating in the first waveguide and an interface between the recess and the first waveguide,
the second distance is measured between the maximum intensity of the TE mode and a centre of the first waveguide;
b. the first distance is less than a third distance, wherein
the first distance is measured between a maximum intensity of the TE mode of the electromagnetic wave propagating in the first waveguide and the interface between the recess and the first waveguide,
the third distance is measured between the maximum intensity of the TE mode and a centre of the recess.

5. The arrangement according to any of the preceding claims, wherein the first waveguide has a first refractive index n₁, the recess has a further refractive index n_{f}, and wherein the recess is adapted and arranged such that one of the following applies when an electromagnetic wave propagates in the first waveguide:
a. n₁ < n_{f} and G₁ ≤ n₁, where G₁ is a group index of a mode propagating in the first waveguide;
b. n₁ > n_{f} and n_{f} < G₁ ≤ n₁, where G₁ is the group index of the mode propagating in the first waveguide.

6. The arrangement according to any of the preceding claims, wherein the at least one element is at least one electrically conductive element arranged as a layer.

7. The arrangement according to any of the preceding claims, wherein the arrangement is an opto-electronic device.

8. The arrangement according to any of the preceding claims 1 to 5, wherein the at least one element is at least one further waveguide.

9. The arrangement according to any of the preceding claims, wherein the arrangement further comprises a layer of a first kind, wherein, in a cross-sectional cut of the arrangement, the at least one element is arranged between the first waveguide and the layer of the first kind, wherein
i. the first waveguide has a first refractive index n₁,
ii. the layer of the first kind has a second refractive index n₂, and
wherein n₁ and n₂ vary by 30 % or less.

10. The arrangement according to claim 9, wherein the layer of the first kind has a thickness that is in the range from 1 to 60 nm.

11. An electronic device comprising an arrangement according to any of the preceding claims.

12. A method for producing an arrangement, comprising the step of superimposing at least one element and a first waveguide onto each other, wherein the first waveguide has a recess, and wherein the at least one element and the first waveguide are superimposed onto each other such that the recess faces the at least one element.

13. An arrangement obtainable by the method according to claim 12.

14. Use of an arrangement according to any of the preceding claims 1 to 10, and 13, for at least one or all of the following:
a. receiving of an optical signal;
b. sending of an optical signal;
c. transporting of an optical signal;
d. coupling an electromagnetic wave propagating in the first waveguide to an element such that an electromagnetic wave propagates in the element.

15. Use of an arrangement according to any of the preceding claims 1 to 10, and 13, for at least one or all of the following:
a. transferring data between a first part of an integrated circuit of an electronic device and a further part of said integrated circuit;
b. transferring data between a first integrated circuit of an electronic device and a further integrated circuit;
c. to inject an optical vector in an optical network and/or to read out an optical vector from an optical network.
